# EUROPEAN PATENT APPLICATION

(11) **EP 4 598 135 A1**
(43) Date of publication of application: **06.08.2025**
(21) Application number: 22960099.4
(22) Date of filing: 29.09.2022
(51) Int. Cl.: H04W 48/08

(54) **COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); HU, Yi, Dongguan, Guangdong 523860 (CN)
(74) Representative: RGTH
(86) International application number: PCT/CN2022/122815
(87) International publication number: WO 2024/065462

(57) **Abstract**

A communication method, a terminal device, and a network device are provided. The method includes: acquiring, by a terminal device, first information of a first cell/first base station, where part or all of the first information is carried in the first cell/first base station, or part or all of the first information is carried in a second cell/second base station. According to the method provided in embodiments of this application, in a case of network energy saving, interaction between a terminal device and a network device can be ensured, which is further beneficial to ensuring implementation of complexity and performance of the terminal device.

## Description

### TECHNICAL FIELD

This application relates to the field of communications technologies, and more specifically, to a communication method, a terminal device, and a network device.

### BACKGROUND

With development of communications technologies, a wireless communications system (for example, a new radio (new radio, NR) system) has a relatively large improvement in key indicators such as a transmission rate, a transmission delay, and a connection scale, which may support more abundant service scenarios and applications. However, continuous development of the wireless communications system also poses a new problem for an operator, such as an energy consumption problem.

For the energy consumption problem, a network energy saving project is proposed in a related technology (for example, in Release 18 (release 18, R18) for an NR system). However, in a case of network energy saving, how to ensure complexity and performance of a terminal device is an urgent problem to be resolved.

### SUMMARY

This application provides a communication method, a terminal device, and a network device. The following describes the aspects related to this application.

According to a first aspect, a communication method is provided, including: acquiring, by a terminal device, first information of a first cell/first base station, where part or all of the first information is carried in the first cell/first base station, or part or all of the first information is carried in a second cell/second base station.

According to a second aspect, a communication method is provided, including: in a case that a terminal device performs a random access procedure for a first cell, or in a case that a terminal device randomly accesses a first cell, performing one of the following operations: receiving, by the terminal device in a second cell, information transmitted by a base station, and transmitting information to the base station in the first cell; or receiving, by the terminal device in a second cell, information transmitted by a base station and transmitting information to the base station; or receiving, by the terminal device in the first cell, information transmitted by a base station and transmitting information to the base station; or receiving, by the terminal device in the first cell, information transmitted by a base station, and transmitting information to the base station in a second cell.

According to a third aspect, a communication method is provided, including: performing, by a terminal device, synchronization with a first cell/first base station based on one or more of the following information: information about a synchronization signal block SSB for the first cell carried by a second cell/second base station; information about an SSB for a second cell/second base station; information about an SSB for the first cell acquired by the terminal device based on information about an SSB and/or a system information block SIB for a second cell; information about an SSB for the second cell acquired by the terminal device; a synchronization signal or a synchronization sequence for the first cell/first base station; or a simplified SSB for the first cell/first base station.

According to a fourth aspect, a communication method is provided, including: determining, by a terminal device, whether to perform cell selection or cell reselection based on information about a first cell, or determining, by a terminal device, whether to consider information about a first cell in a cell selection or cell reselection process.

According to a fifth aspect, a communication method is provided, including: receiving, by a terminal device, a first paging message, where the first paging message is a paging message for a first cell/first base station.

According to a sixth aspect, a communication method is provided, including: transmitting, by a terminal device, a request message, where the request message is used for requesting a first cell/first base station to perform one or more of the following operations: changing a state of the first cell/first base station; transmitting information about the first cell/first base station, where the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or performing transmission or resuming transmission.

According to a seventh aspect, a communication method is provided, including: performing, by a terminal device, transmission based on a discontinuous transmission DTX/discontinuous reception DRX state of a first cell/first base station.

According to an eighth aspect, a communication method is provided, including: performing, by a terminal device, a first operation, where the first operation is related to at least one of the following: measurement, measurement related processing, beam related processing, or radio link related processing.

According to a ninth aspect, a communication method is provided, including: switching, by a terminal device, to a first bandwidth part BWP or from a second BWP to a first BWP. The first BWP is used for a cell/base station that supports or enters or is about to enter or is in a first status, and the first status includes one or more of the following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or the second BWP is a currently activated BWP, or a used BWP, or a BWP used before switching to the first BWP, or a BWP not corresponding to the first status.

According to a tenth aspect, a communication method is provided, including: receiving, by a terminal device, a first handover configuration transmitted by a first cell/first base station, where the first handover configuration includes handover configuration information for a plurality of cells; and performing, by the terminal device, handover processing, or handing over, by the terminal device, from the first cell to a target cell.

According to an eleventh aspect, a communication method is provided, including: transmitting/broadcasting, by a second cell/second base station, first information of a first cell/first base station to a terminal device; and part or all of the first information is carried in the first cell/first base station, or part or all of the first information is carried in the second cell/second base station.

According to a twelfth aspect, a communication method is provided, including: in a case that a terminal device performs a random access procedure for a first cell, or in a case that a terminal device randomly accesses a first cell, performing, by a base station, one of the following operations: transmitting, by the base station, information to the terminal device in a second cell, and receiving, in the first cell, information transmitted by the terminal device; or in a second cell, transmitting, by the base station, information to the terminal device and receiving information transmitted by the terminal device; or in the first cell, transmitting, by the base station, information to the terminal device and receiving information transmitted by the terminal device; or transmitting, by the base station, information to the terminal device in the first cell, and receiving, in a second cell, information transmitted by the terminal device.

According to a thirteenth aspect, a communications method is provided, including: performing, by a first cell/first base station, synchronization with a terminal device based on one or more of the following information: information about a synchronization signal block SSB for the first cell carried by a second cell/second base station; information about an SSB for a second cell/second base station; information about an SSB for the first cell acquired by the terminal device based on information about an SSB and/or a system information block SIB for a second cell; information about an SSB for the second cell acquired by the terminal device; a synchronization signal or a synchronization sequence for the first cell/first base station; or a simplified SSB for the first cell/first base station.

According to a fourteenth aspect, a communication method is provided, including: transmitting, by a first cell/first base station, a first paging message, where the first paging message is a paging message for the first cell/first base station.

According to a fifteenth aspect, a communication method is provided, including: transmitting, by a second cell/first base station, a first paging message, where the first paging message is a paging message for a first cell/first base station.

According to a sixteenth aspect, a communication method is provided, including: receiving, by a first cell/first base station, a request message transmitted by a terminal device, where the request message is used for requesting the first cell/first base station to perform one or more of following operations: changing a state of the first cell/first base station; transmitting information about the first cell/first base station, where the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or performing transmission or resuming transmission.

According to a seventeenth aspect, a communications method is provided, including: indicating, by a network, a discontinuous transmission DTX/discontinuous reception DRX state of a first cell/first base station to a terminal device, and the DTX/DRX state of the first cell/first base station is used by the terminal device to perform transmission based on the DTX/DRX state of the first cell/first base station.

According to an eighteenth aspect, a communication method is provided, including: configuring, by a network, bandwidth part BWP information, where the BWP information is used by a terminal device to switch to a first BWP, or is used by a terminal device to switch from a second BWP to a first BWP. The first BWP is used for a cell/base station that supports or enters or is about to enter or is in a first status, and the first status includes one or more of the following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or the second BWP is a currently activated BWP, or a used BWP, or a BWP used before switching to the first BWP, or a BWP not corresponding to the first status.

According to a nineteenth aspect, a communication method is provided, including: transmitting, by a first cell/first base station, a first handover configuration to a terminal device, where the first handover configuration includes handover configuration information for a plurality of cells, and the first handover configuration is used by the terminal device to perform handover processing or hand over from the first cell to a target cell.

According to a twentieth aspect, a terminal device is provided, including: an acquisition module, configured to acquire first information of a first cell/first base station, where part or all of the first information is carried in the first cell/first base station, or part or all of the first information is carried in a second cell/second base station.

According to a twenty-first aspect, a terminal device is provided, including: an execution module, configured to: in a case that the terminal device performs a random access procedure for a first cell, or in a case that the terminal device randomly accesses a first cell, perform one of the following operations: receiving, in a second cell, information transmitted by a base station, and transmitting information to the base station in the first cell; or receiving, in a second cell, information transmitted by a base station and transmitting information to the base station; or receiving, in the first cell, information transmitted by a base station and transmitting information to the base station; or receiving, in the first cell, information transmitted by the base station, and transmitting information to the base station in a second cell.

According to a twenty-second aspect, a terminal device is provided, including: a synchronization module, configured to synchronize with a first cell/first base station based on one or more of the following information: information about a synchronization signal block SSB for the first cell carried by a second cell/second base station; information about an SSB for a second cell/second base station; information about an SSB for the first cell acquired by the terminal device based on information about an SSB and/or a system information block SIB for a second cell; information about an SSB for the second cell acquired by the terminal device; a synchronization signal or a synchronization sequence for the first cell/first base station; or a simplified SSB for the first cell/first base station.

According to a twenty-third aspect, a terminal device is provided, including: a determining module, configured to determine whether to perform cell selection or cell reselection based on information about a first cell, or determine, in a cell selection or cell reselection process, whether to consider information about a first cell.

According to a twenty-fourth aspect, a terminal device is provided, including: a receiving module, configured to receive a first paging message, where the first paging message is a paging message for a first cell/first base station.

According to a twenty-fifth aspect, a terminal device is provided, including: a transmitting module, configured to transmit a request message, where the request message is used for requesting a first cell/first base station to perform one or more of the following operations: changing a state of the first cell/first base station; transmitting information about the first cell/first base station, where the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or performing transmission or resuming transmission.

According to a twenty-sixth aspect, a terminal device is provided, including an execution module, configured to perform transmission based on a discontinuous transmission DTX/discontinuous reception DRX state of a first cell/first base station.

According to a twenty-seventh aspect, a terminal device is provided, including an execution module, configured to execute a first operation, where the first operation is related to at least one of the following: measurement, measurement related processing, beam related processing, or radio link related processing.

According to a twenty-eighth aspect, a terminal device is provided, including: a switching module, configured to switch to a first bandwidth part BWP, or switch from a second BWP to a first BWP. The first BWP is used for a cell/base station that supports or enters or is about to enter or is in a first status, and the first status includes one or more of the following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or the second BWP is a currently activated BWP, or a used BWP, or a BWP used before switching to the first BWP, or a BWP not corresponding to the first status.

According to a twenty-ninth aspect, a terminal device is provided, including: a receiving module, configured to receive a first handover configuration transmitted by a first cell/first base station, where the first handover configuration includes handover configuration information for a plurality of cells; and
an execution module, configured to execute handover processing, or perform a handover from the first cell to a target cell.

According to a thirtieth aspect, a network device is provided, including: a transmitting/broadcasting module, configured to transmit/broadcast first information of a first cell/first base station to a terminal device, where part or all of the first information is carried in the first cell/first base station, or part or all of the first information is carried in a second cell/second base station.

According to a thirty-first aspect, a network device is provided, including: an execution module, configured to: in a case that a terminal device performs a random access procedure for a first cell, or in a case that a terminal device randomly accesses a first cell, perform one of the following operations: transmitting information to the terminal device in a second cell, and receiving, in the first cell, information transmitted by the terminal device; or in a second cell, transmitting information to the terminal device and receiving information transmitted by the terminal device; or in the first cell, transmitting information to the terminal device and receiving information transmitted by the terminal device; or transmitting information to the terminal device in the first cell, and receiving, in a second cell, information transmitted by the terminal device.

According to a thirty-second aspect, a network device is provided, where the network device is a first cell/first base station, and the network device includes: a synchronization module, configured to synchronize with a terminal device based on one or more of the following information: information about a synchronization signal block SSB for the first cell carried by a second cell/second base station; information about an SSB for a second cell/second base station; information about an SSB for the first cell acquired by the terminal device based on information about an SSB and/or a system information block SIB for a second cell; information about an SSB for the second cell acquired by the terminal device; a synchronization signal or a synchronization sequence for the first cell/first base station; or a simplified SSB for the first cell/first base station.

According to a thirty-third aspect, a network device is provided, where the network device is a first cell/first base station, the network device includes a transmitting module, configured to transmit a first paging message, where the first paging message is a paging message for a first cell/first base station.

According to a thirty-fourth aspect, a network device is provided, where the network device is a second cell/second base station, the network device includes a transmitting module, configured to transmit a first paging message, where the first paging message is a paging message for a first cell/first base station.

According to a thirty-fifth aspect, a network device is provided, including: a receiving module, configured to receive a request message transmitted by a terminal device, where the request message is used for requesting the first cell/first base station to perform one or more of the following operations: changing a state of the first cell/first base station; transmitting information about the first cell/first base station, where the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or performing transmission or resuming transmission.

According to a thirty-sixth aspect, a network device is provided, including: an indication module, configured to indicate a discontinuous transmission DTX/discontinuous reception DRX state of a first cell/first base station to a terminal device, and the DTX/DRX state of the first cell/first base station is used by the terminal device to perform transmission based on the DTX/DRX state of the first cell/first base station.

According to a thirty-seventh aspect, a network device is provided, including: a configuration module, adapted to configure bandwidth part BWP information, where the BWP information is used by a terminal device to switch to a first BWP, or is used by a terminal device to switch from a second BWP to a first BWP. The first BWP is used for a cell/base station that supports or enters or is about to enter or is in a first status, and the first status includes one or more of the following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or the second BWP is a currently activated BWP, or a used BWP, or a BWP used before switching to the first BWP, or a BWP not corresponding to the first status.

According to a thirty-eighth aspect, a network device is provided, including: a transmitting module, configured to transmit a first handover configuration to a terminal device, where the first handover configuration includes handover configuration information for a plurality of cells, and the first handover configuration is used by the terminal device to perform handover processing or hand over from the first cell to a target cell.

According to a thirty-ninth aspect, a terminal device is provided, including a processor, a memory, and a communications interface, where the memory is configured to store one or more computer programs, and the processor is configured to invoke the computer program in the memory, to cause the terminal device to execute part or all of the steps in the method according to any one of the first aspect to the tenth aspect.

According to a fortieth aspect, a network device is provided, including a processor, a memory, and a communications interface, where the memory is configured to store one or more computer programs, and the processor is configured to invoke the computer program in the memory, to cause the network device to execute part or all of the steps in the method according to any one of the eleventh aspect to the nineteenth aspect.

According to a forty-first aspect, an embodiment of this application provides a communications system, where the system includes the terminal device and/or the network device described above. In another possible design, the system may further include another device that interacts with the terminal device or the network device in the solutions provided in embodiments of this application.

According to a forty-second aspect, an embodiment of this application provides a computer-readable storage medium. The computer-readable storage medium stores a computer program, and the computer program causes a terminal device or a network device to perform part or all of the steps in the methods according to the foregoing aspects.

According to a forty-third aspect, an embodiment of this application provides a computer program product. The computer program product includes a non-transitory computer-readable storage medium that stores a computer program, and the computer program is operable to cause a terminal device or a network device to perform part or all of the steps in the methods according to the foregoing aspects. In some implementations, the computer program product may be a software installation package.

According to a forty-fourth aspect, an embodiment of this application provides a chip. The chip includes a memory and a processor. The processor may invoke a computer program from the memory and run the computer program, to implement part or all of the steps described in the methods according to the foregoing aspects.

According to the methods provided in embodiments of this application, in a case of network energy saving, interaction between a terminal device and a network device can be ensured, which is further beneficial to ensuring implementation of complexity and performance of the terminal device.

### BRIEF DESCRIPTION OF DRAWINGS

FIG. 1 is an example diagram of a system architecture of a wireless communications system to which embodiments of this application are applicable.
FIG. 2 is an example diagram of system information update based on a system information modification period.
FIG. 3 is a schematic flowchart of a conditional handover process.
FIG. 4 is a schematic flowchart of a communication method according to an embodiment of this application.
FIG. 5 is a schematic flowchart of a communication method according to an embodiment of this application.
FIG. 6 is a schematic flowchart of a communication method according to an embodiment of this application.
FIG. 7 is a schematic flowchart of a communication method according to an embodiment of this application.
FIG. 8 is a schematic flowchart of a communication method according to an embodiment of this application.
FIG. 9 is an example diagram of a bearer location of first information of a first cell.
FIG. 10 is a schematic flowchart of a communication method according to an embodiment of this application.
FIG. 11 is a schematic flowchart of a communication method according to an embodiment of this application.
FIG. 12 is an example diagram in which a conflict occurs between a DTX/DRX state of a terminal device and a DTX/DRX state of a cell.
FIG. 13 is a schematic flowchart of a communication method according to an embodiment of this application.
FIG. 14 is an example diagram in which a terminal device performs a first operation based on a network indication.
FIG. 15 is a schematic flowchart of a communication method according to an embodiment of this application.
FIG. 16 is an example diagram in which a terminal device performs switch based on indication information of a network.
FIG. 17 is a schematic flowchart of a communication method according to an embodiment of this application.
FIG. 18 is a schematic structural diagram of a terminal device according to an embodiment of this application.
FIG. 19 is a schematic structural diagram of a terminal device according to an embodiment of this application.
FIG. 20 is a schematic structural diagram of a terminal device according to an embodiment of this application.
FIG. 21 is a schematic structural diagram of a terminal device according to an embodiment of this application.
FIG. 22 is a schematic structural diagram of a terminal device according to an embodiment of this application.
FIG. 23 is a schematic structural diagram of a terminal device according to an embodiment of this application.
FIG. 24 is a schematic structural diagram of a terminal device according to an embodiment of this application.
FIG. 25 is a schematic structural diagram of a terminal device according to an embodiment of this application.
FIG. 26 is a schematic structural diagram of a terminal device according to an embodiment of this application.
FIG. 27 is a schematic structural diagram of a terminal device according to an embodiment of this application.
FIG. 28 is a schematic structural diagram of a network device according to an embodiment of this application.
FIG. 29 is a schematic structural diagram of a network device according to an embodiment of this application.
FIG. 30 is a schematic structural diagram of a network device according to an embodiment of this application.
FIG. 31 is a schematic structural diagram of a network device according to an embodiment of this application.
FIG. 32 is a schematic structural diagram of a network device according to an embodiment of this application.
FIG. 33 is a schematic structural diagram of a network device according to an embodiment of this application.
FIG. 34 is a schematic structural diagram of a network device according to an embodiment of this application.
FIG. 35 is a schematic structural diagram of a network device according to an embodiment of this application.
FIG. 36 is a schematic structural diagram of a network device according to an embodiment of this application.
FIG. 37 is a schematic structural diagram of an apparatus according to an embodiment of this application.

### DESCRIPTION OF EMBODIMENTS

### Communications system architecture

The technical solutions in embodiments of this application may be applied to various communications systems, for example, a global system for mobile communications (global system of mobile communication, GSM), a code-division multiple access (code division multiple access, CDMA) system, a wideband code-division multiple access (wideband code division multiple access, WCDMA) system, general packet radio service (general packet radio service, GPRS), a long-term evolution (long term evolution, LTE) system, an advanced long-term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (non-terrestrial networks, NTN) system, a universal mobile telecommunications system (universal mobile telecommunication system, UMTS), a wireless local area network (wireless local area networks, WLAN), wireless fidelity (wireless fidelity, WiFi), a fifth-generation (5th-generation, 5G) system, or another communications system, for example, a future communications system such as a sixth-generation mobile communications system or a satellite communications system.

Generally, a quantity of connections supported by a conventional communications system is limited, and is also easy to implement. However, with development of communication technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, vehicle to everything (vehicle to everything, V2X) communication or the like. Embodiments of this application may also be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a dedicated spectrum.

Embodiments of this application may be applied to an NTN system, or may be applied to a terrestrial communication network (terrestrial networks, TN) system. By way of example and without limitation, the NTN system includes an NR-based NTN system and an IoT-based NTN system.

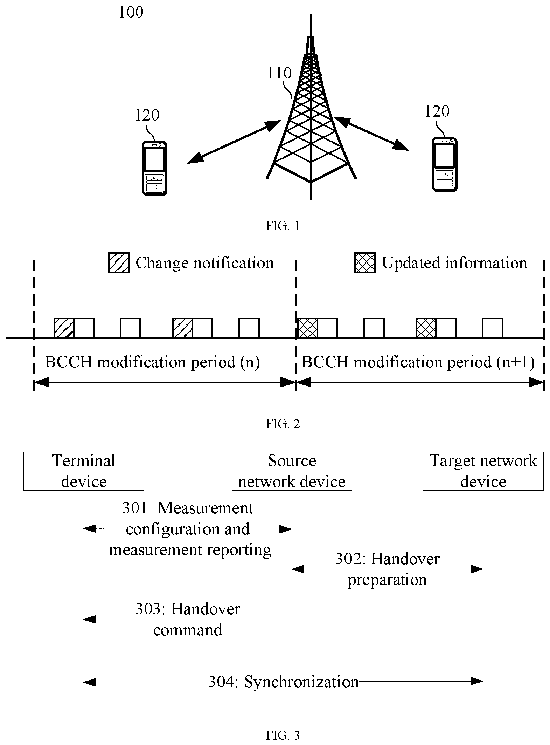

FIG. 1 is an example diagram of a system architecture of a wireless communications system 100 to which an embodiment of this application is applicable. The wireless communications system 100 may include a network device 110 and terminal devices 120. The network device 110 may be a device that communicates with the terminal device 120. The network device 110 may provide communication coverage for a specific geographic area, and may communicate with the terminal device 120 located within the coverage. For example, the network device 110 may communicate with the terminal device 120 by using one or more carriers.

FIG. 1 exemplarily shows one network device and two terminals. In at least one embodiment, the wireless communications system 100 may include a plurality of network devices, and another quantity of terminal devices may be included in coverage of each network device, which is not limited in embodiments of this application.

In at least one embodiment, the wireless communications system 100 may further include another network entity such as a network controller or a mobility management entity, which is not limited in embodiments of this application.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. In at least one embodiment, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or replace with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master MeNB, a secondary SeNB, a multi-standard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks with a same access technology or different access technologies. A specific technology and a specific device form used by the network device are not limited in embodiments of this application.

The base station may be fixed or mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device that communicates with another base station.

In some embodiments, the network device may also refer to a cell of a base station. This is not limited in embodiments of this application.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

In embodiments of this application, the network device may provide a service for a cell, and the terminal device communicates with the network device by using a transmission resource (for example, a frequency domain resource or a spectrum resource) used by the cell. The cell may be a cell corresponding to the network device (for example, a base station). The cell may belong to a macro base station or belong to a base station corresponding to a small cell (small cell). The small cell herein may include a metro cell (metro cell), a micro cell (micro cell), a pico cell (pico cell), a femto cell (femto cell), or the like. These small cells feature small coverage and low transmit power, and are suitable for providing a high-speed data transmission service.

The wireless communications system 100 may include different types of network devices (such as a macro base station, a micro base station, and/or a pico base station). In some embodiments, coverage of a network may be divided into sectors. In this case, the term "cell" used in embodiments of this application may refer to a sector. In some embodiments, the network device mentioned in this application may refer to a cell in addition to a base station. For example, the base station and the cell may be collectively referred to as a network device.

It should be understood that all or some of functions of a communications device in this application may also be implemented by software functions running on hardware, or by virtualization functions instantiated on a platform (for example, a cloud platform).

For ease of understanding, some related technical knowledge related to embodiments of this application is first introduced. The following related technologies, as optional solutions, may be randomly combined with the technical solutions of embodiments of this application, all of which fall within the protection scope of embodiments of this application. Embodiments of this application include at least part of the following content.

### 5G application scenario

Currently, with people's pursuit of speed, latency, high-speed mobility, and energy efficiency, as well as diversity and complexity of services in future life, the 3rd generation partnership project (3rd generation partnership project, 3GPP) international standard organization starts to develop 5G. Main application scenarios of 5G include enhanced mobile broadband (enhanced mobile broadband, eMBB), ultra-reliable low latency communications (ultra-reliable low latency communications, URLLC), and massive machine type communications (massive machine type communications, mMTC).

eMBB aims to provide a user with access to multimedia content, services, and data. The demand for eMBB is growing rapidly. In addition, since eMBB may be deployed in different scenarios, such as indoor, urban, or rural areas, its capabilities and requirements vary greatly. Therefore, applying a same standard to all is impractical, and a detailed analysis must be conducted with reference to a specific deployment scenario.

A key feature of URLLC is low latency. In an application scenario of URLLC, a connection latency may reach one millisecond or less, and a high-reliability connection in a case of high-speed movement may be supported. For example, during high-speed movement at a speed of 500 kilometers per hour, reliability may reach 99.999%. Typical applications of URLLC include industrial automation, electric power automation, remote medical operations (surgery), traffic safety guarantee, and the like.

Typical features of mMTC include high connection density, small data volume, delay-insensitive services, low costs, long service life of modules, and the like. Based on this, mMTC may include one or more of the following communications: communications of an industrial wireless sensor network, communications in a video surveillance scenario, and communications with a wearable device.

### Radio resource control (radio resource control, RRC) state

In some scenarios, NR may be deployed separately. To reduce air interface signaling, quickly restore a wireless connection and a data service, a new RRC state, namely, an RRC inactive (RRC_INACTIVE) state, is specified in 5G. This state is different from an RRC idle (RRC_IDLE) state and an RRC connected (RRC_CONNECTED) state.
(1) RRC_IDLE state (referred to as idle (idle) state for short): Mobility is based on cell selection and reselection by a terminal device, paging is initiated by a core network (core network, CN), and a paging area is configured by the CN. There is no access stratum (access stratum, AS) context of the terminal device on a network device side. There is no RRC connection.
(2) RRC_CONNECTED state (referred to as connected (connected) state for short): There is an RRC connection, and there is terminal device AS context for a network device and a terminal device. A network device side knows that a location of the terminal device is at a specific cell level. Mobility is controlled by the network device side. Unicast data may be transmitted between the terminal device and the network device.
(3) RRC_INACTIVE state (referred to as inactive (inactive) state for short): Mobility is based on cell selection and reselection by a terminal device, and there is a connection between a core network and a radio access network (radio access network, RAN). The terminal device AS context is stored in an anchor network device, paging is triggered by the RAN, and a RAN-based paging area is managed by the RAN. A network device side knows that a location of a terminal device is at a level of the RAN-based paging area.

### Bandwidth part (bandwidth part, BWP) technology

To provide a higher data transmission rate and improve user experience, 5G NR further increases a system bandwidth on the basis of 4G. In the 5G NR, for a frequency band below 6 GHz, a maximum bandwidth supported by a single carrier is 100 MHz; and for a frequency band above 6 GHz, a maximum bandwidth supported by a single carrier is 400 MHz. For a large carrier bandwidth such as 100 HMz, a bandwidth required by a terminal device is often very limited. If the terminal device is required to always perform detection and measurement over the entire bandwidth, power of the terminal device is greatly challenged, which is not conducive to power saving of the terminal device. Therefore, a concept of a BWP is introduced in the 5G NR, that is, a part of continuous bandwidth is selected from the entire large carrier bandwidth for the terminal device to receive and transmit data. The terminal device is only required to perform a related operation within this part of bandwidth configured by a network, thereby saving energy of the terminal device.

Based on the 5G NR Rel-15 standard, for each serving cell of the terminal device, the network may configure one or more BWPs for the terminal device in the serving cell. A maximum quantity of BWPs that the network may configure for the terminal device is 4. In some embodiments, the network may configure a BWP for the terminal device through an RRC reconfiguration message. At each time, the terminal device can only have one activated downlink BWP and one activated uplink BWP in this serving cell. The terminal device can only transmit and receive data on an activated BWP.

Considering factors such as service diversity of the terminal device and a difference between different service features, the terminal device may need to adjust a BWP. For example, when a service volume of the terminal device is relatively large and it is expected to obtain a high-rate service, a large bandwidth BWP needs to be used to perform data transmission for the terminal device. When a service volume of the terminal device is relatively small, data transmission may be performed for the terminal device by using a small bandwidth BWP.

In some embodiments, the activated BWP in this serving cell for the terminal device may be changed by means of a BWP switch. There are currently four BWP switch methods supported in the standard as follows.

### (1) BWP switch based on a physical downlink control channel (physical downlink control channel, PDCCH)

The BWP switch based on a PDCCH is a BWP switch controlled by a network. The network may notify, by transmitting a PDCCH scrambled by C-RNTI to a single terminal device, the single terminal of a target BWP to be switched.

### (2) BWP switch based on an RRC configuration/RRC reconfiguration

The BWP switch based on an RRC configuration/RRC reconfiguration is a BWP switch controlled by a network. The network may add a parameter associated with the BWP switch to an RRC configuration message/RRC reconfiguration message, to instruct the terminal device to perform BWP switch based on the parameter associated with the RRC configuration message/RRC reconfiguration message. For example, the network may add the following parameters to the RRC configuration message/RRC reconfiguration message: *firstActiveDownlinkBWP-Id* and/or *firstActiveUplinkBWP-Id,* to instruct the terminal device to switch from an activated BWP to a value indicated by the parameters *firstActiveDownlinkBWP-Id* and/or *firstActiveUplinkBWP-Id.*

### (3) BWP switch based on timer (timer) expiration

The BWP switch based on timer expiration may be understood as an implicit BWP switch. The network may configure a timer *bwp-InactivityTimer* for each serving cell of the terminal device. If a currently activated downlink BWP for the terminal device is a BWP other than a default BWP (default BWP) and an initial downlink BWP (initial DL BWP), each time when the terminal device receives, on the currently activated BWP, a PDCCH that instructs the terminal device to perform uplink or downlink scheduling, or the terminal device receives a PDCCH that instructs the terminal device to perform uplink or downlink scheduling on the currently activated BWP, the timer *bwp-InactivityTimer* is started or restarted. When the timer *bwp-InactivityTimer* expires, the terminal device automatically switches to the default BWP or the initial downlink BWP, where both the default BWP and the initial downlink BWP may be determined by the network by using an RRC configuration.

### (4) BWP switch caused by random access initialization

In a random access initialization process, if no physical random access channel (physical random access channel, PRACH) occasion (occasion) is configured by the terminal device on a currently activated uplink BWP, the terminal device may automatically switch from the uplink BWP to an initial uplink BWP, and also switch from a downlink BWP to an initial downlink BWP.

### System information update

In an LTE system and an NR system, a concept of a system information modification period is introduced. FIG. 2 is an example diagram of system information update based on a system information modification period. As shown in FIG. 2, when a network is to update system information, the network may first perform repetition of transmission of a system information change indication within the n^{th} system information modification period, and then perform repetition of transmission of an updated system information within the (n+1)^{th} system information modification period.

A boundary of the system information modification period is defined based on a system frame number (system frame number, SFN), that is, a boundary of the system information modification period may be defined as an SFN that meets SFN mod m=0, where m is a quantity of SFNs included in one system information modification period. In an implementation, m = *modificationPeriodCoeff * defaultPagingCycle,* where *modificationPeriodCoeff and defaultPagingCycle* are respectively a system information modification period coefficient and a default paging cycle, and the two parameters are determined by the network through broadcasting.

It should be noted that in an NR system, the system information modification period is applicable to modification of system information other than system information block (system information block, SIB)6, SIB7, SIB8, and positioning assistance data. It should be understood that data carried in SIB6, SIB7, and SIB8 and positioning assistance data all require high real-time performance. Therefore, the foregoing system information modification period is not applicable.

In the NR, a short message (short message) in paging (paging) downlink control information (downlink control information, DCI) is used for notifying a system information change indication, and a PDCCH in which the paging DCI is located is scrambled by a P-RNTI.

That the short message in the paging DCI is used for notifying the system information change indication may refer to determining, by using a parameter in the short message in the paging DCI, whether system information is to be updated. For example, if a value of the parameter *systemInfoModification* in the short message in the paging DCI is 1, it indicates that other system information except SIB6/SIB7/SIB8 is to be updated. In this case, the terminal device is required to acquire updated system information in a next system information modification period. If a value of a parameter *etwsAndCmasIndication* in the short message in the paging DCI is 1, it indicates that the network is to transmit an earthquake and tsunami warning system (earthquake and tsunami warning system, ETWS) notification and/or a commercial mobile alert system (commercial mobile alert system, CMAS) notification. In this case, the terminal device is required to read SIB1 and SIB6/SIB7/SIB8 again immediately after receiving the short message.

### Conditional handover (conditional handover, CHO)

For problems of frequent handovers and failure-prone handovers in a high-speed moving scenario and a high-frequency deployment scenario, 3GPP introduces a handover triggered based on a condition, namely, a conditional handover (CHO), for an LTE system and an NR system in Rel-16. A basic principle of the CHO is that a network allocates a target cell to the terminal device in advance, where a handover command (HO command) includes a condition for triggering a handover of a terminal device. The terminal device measures or evaluates the target cell according to the condition configured on the network side. When the target cell meets the handover condition, the terminal device hands over to the target cell according to the pre-configured handover command (that is, triggering a random access procedure and transmitting a handover completion message). In this way, a problem that it is too late or impossible to transmit a measurement report and receive a handover command due to high-speed movement into poor coverage may be avoided.

For the CHO, the network may configure a plurality of candidate target cells in the HO command, and configure a CHO execution condition for each candidate target cell, where the CHO execution condition for each candidate target cell may include one or two trigger events. In Rel-16, event A3 and event A5 may be used as CHO events, and in Rel-17 NTN, event A4 may also be used as a CHO event. The terminal device may determine, based on the configured CHO execution condition, which target cell to access.

The following briefly describes measurement events supported in NR. Currently, the measurement events supported in NR may include the following:
eventA1: signal quality of a serving cell is higher than a threshold;
eventA2: signal quality of a serving cell is lower than a threshold;
   eventA3: signal quality of a neighboring cell is higher than signal quality of a special cell (special cell, SPCell) by a threshold;
eventA4: signal quality of a neighboring cell is higher than a threshold;
   eventA5: signal quality of a SPCell is lower than a threshold 1, and signal quality of a neighboring cell is higher than a threshold 2;
   eventA6: signal quality of a neighboring cell is higher than signal quality of a secondary cell (secondary cell, SCell) by a threshold;
   event B1: signal quality of an inter-RAT neighboring cell is higher than a threshold; and
   event B2: signal quality of a primary cell (primary cell, PCell) is lower than a threshold 1, and signal quality of an inter-RAT neighboring cell is higher than a threshold 2.

For ease of understanding, the following describes a process of a conditional handover with reference to FIG. 3. It should be understood that a source network device mentioned below may refer to a network device that provides a service for a terminal device before a handover, and a target network device may refer to a network device that provides a service for the terminal device after a handover.

As shown in FIG. 3, in step 301, a source network device transmits information about a measurement configuration to a terminal device, and the terminal device performs measurement reporting based on the measurement configuration. In step 302, handover preparation information is exchanged between the source network device and a target network device. In step 303, the source network device transmits a conditional handover command to the terminal device, where the conditional handover command may carry a handover condition for a cell. In step 304, when the conditional handover command is satisfied, the terminal device implements synchronization with the target network device.

### Conditional primary secondary cell (PSCell) change

For a problem of frequent PSCell change in a high-speed moving scenario and a high-frequency deployment scenario, 3GPP introduces a conditional PSCell change (conditional PSCell change, CPC) for LTE and NR systems in Rel-16. A basic principle of the conditional PSCell change is as follows: A secondary node (secondary node, SN) allocates a target cell to a terminal device in advance, where a condition for triggering the terminal device to perform a PSCell change is included. The terminal device performs evaluation according to the condition configured on a network side. When the configured condition is met, the terminal device initiates the PSCell change. In this way, problems that it is too late or impossible to transmit a measurement report and receive a PSCell change command due to high-speed movement into poor coverage may be avoided.

Similar to the CHO, for the CPC, a network may configure a plurality of candidate target cells for the terminal device, and configure a CPC execution condition for each candidate target cell, where the CPC execution condition for each candidate target cell may include one or two trigger events. In Rel-16, event A3 and event A5 may be used as CPC events. The terminal device may determine, based on the configured CPC execution condition, which target cell to access.

With development of communications technologies, a wireless communications system (for example, an NR system) has a relatively large improvement in key indicators such as a transmission rate, a transmission delay, and a connection scale, which may support more abundant service scenarios and applications. However, continuous development of the wireless communications system also poses a new problem for an operator, such as an energy consumption problem.

Currently energy consumption has become an important part of operation costs of an operator. According to the report from the global system for mobile communications association (global system for mobile communications association, GSMA), energy costs of a mobile network accounts for approximately 23% of total costs of an operator. Most of energy consumption comes from radio access networks, in particular, active antenna units (AAU), while energy consumption of data center and optical fiber transmission account for only a small share.

Energy consumption of the mobile network may be classified into two types: dynamic energy consumption and static energy consumption. The dynamic energy consumption may be, for example, consumption during data transmission/reception. The static energy consumption may be, for example, consumption caused for maintaining a necessary operation of a radio access device, even if there is no continuous data transmission/reception in this case.

The GSMA report evaluates only potential network energy consumption benefits and does not assess an impact of network energy saving (NES) on balance between network performance and user performance.

For the energy consumption problem, a network energy saving project is proposed in a related technology (for example, in Release 18 (release 18, R18) for an NR system). In the network energy saving project, some possible research directions are proposed.

For example, according to the RAN2#119 conference, a solution group (solution group) in terms of network energy saving may include, for example:
1. adaptation of master information block (master information block, MIB)/synchronization signaling block (synchronization signaling block, SSB)/SIB (Adaption of MIB/SSB/SIB),
   - partial/simplified SSB (partial/simplified SSB),
2. increase of SSB/SIB periodicity (Increase of SSB/SIB periodicity).
3. on-demand SSB/SIB1 (for further research if there are enhancements for other SIBs) (On demand SSB/SIB1 (FFS if there are enhancements for other SIBs));
   - for further research on on-demand MIB (FFS for on-demand MIB);
4. receiving SSB/SIB on one carrier/cell and performing access to another carrier/cell (Receiving SSB/SIB on one carrier/cell and performing access to another carrier/cell);
5. handover/fast PCell change for network energy saving (Handover/Fast PCell change for NES);
   - conditional handover or new configuration (CHO or new configuration), and/or group handover (group HO);
6. resource adaptation (frequency domain and time domain) (Resource adaptation (frequency and time domain));
   - including the following resources and periods: a PRACH, a sounding reference signal (sounding reference signal, SRS), a physical uplink shared channel (physical uplink shared channel, PUSCH), a physical uplink control channel (physical uplink control channel, PUCCH) (Including PRACH, SRS, PUSCH, PUCCH resources and periodicities);
   - cell discontinuous transmission (discontinuous transmitting DTX)/discontinuous reception (discontinuous reception, DRX) (cell DTX/DRX);
   - measurement (measurement);
   - reference signal type and configuration of reference signal pattern for connected state (reference signal type and configuration of reference signal pattern for connected mode);
   BWP adaptation (BWP adaptation);
7. any cell activation/re-activation or terminal device wake up request signal (connected/idle) (Any Cell activation/re-activation or UE wake up request signal (connected/idle));
8. paging enhancements (including paging-less solutions) (Paging enhancements (includes paging-less solutions));
9. cell selection/reselection (that is, cell prioritization also includes legacy terminal devices) (Cell selection/reselection (i.e. cell prioritization also including legacy UEs)).

For example, according to the RAN2#119 conference, a possible research direction in terms of network energy saving may include:
1. study group configuration and signaling for transmission for different solutions (Study group configuration and signaling for transitions for different solutions);
   - pre-configuration and L1/L2 signaling to trigger change of configuration (pre-configuration and L1/L2 signaling to trigger change of configuration),
2. identify/capture RAN2 impact on legacy for the different solutions (Identify/capture RAN2 impact to legacy for the different solutions);
3. awareness of the NES states at the terminal device side for the different solutions (Awareness of the NES states at the UE side for the different solutions);
4. aim to minimize DL signalling for NES (Aim to minimize DL signalling for NES);
5. consider terminal device complexity and energy consumption (Consider UE complexity and energy consumption);
6. terminal device assistance information for the specific network energy technique, which has benefits and impacts on terminal device/network (UE assistance information for the specific network energy technique, it's benefits and impact to UE/NW).

The applicant believes that for a network energy saving project, network energy saving should not greatly affect some key indexes of a terminal device, such as spectrum efficiency, capacity, UE perceived throughput (UE perceived throughput, UPT), delay, power consumption, complexity, handover performance, call reduction rate, and initial access performance of the terminal device. Thus, in a case of network energy saving, how to ensure complexity and performance of a terminal device is an urgent problem to be resolved.

In view of this, embodiments of this application provide a communications method, a terminal device, and a network device. In solutions of embodiments of this application, for network energy saving, interaction between a terminal device and a network device is specified, so as to ensure complexity and performance of the terminal device in a case of network energy saving. Embodiments of this application will be described in detail below.

For ease of understanding, some related concepts involved in embodiments of this application are first introduced below.

Energy saving cell/energy saving base station: The energy saving cell/energy saving base station may be a cell/base station whose energy consumption is lower than an existing energy consumption state, or a cell/base station that supports or can enter or is in a first status, a cell/base station that does not provide coverage and/or a capacity, or a secondary cell or base station (such as a SCell/PScell or a corresponding base station). To reduce energy consumption of a network, energy consumption of some devices (for example, a base station, a cell, or a terminal device) in a first status in a network is lower than that in a normal transmission state.

The first status is not specifically limited in embodiments of this application, provided that energy consumption of a device in the first status is less than energy consumption of the device in a normal transmission state. For example, the first status may include one or more of the following states: a state of abnormal transmission, a state of non-transmission of partial information, an off state, an energy saving state, an NES state, a low-load state, a DRX state, a DTX state, an on-off switching state, or the like.

In some embodiments, when the first status is the DRX state, the first status may refer to a DRX on/off state. In some embodiments, when the first status is the DTX state, the first status may refer to a DTX on/off state.

In some embodiments, when the first status is the DRX state, the first status may refer to a DRX off state. In some embodiments, when the first status is the DTX state, the first status may refer to a DTX off state.

In some embodiments, the first status may also be extended to a state in which information (for example, first information mentioned later) about a non-anchor cell/non-anchor base station is acquired from an anchor cell/anchor base station, or a state in which information is not acquired from a non-anchor cell/non-anchor base station.

That a cell/base station supports or can enter the first status is used as an example. In some embodiments, the first status may refer to a state of abnormal transmission for a cell/base station or a state of non-transmission of partial information. Abnormal transmission for a cell/base station or non-transmission of partial information may refer to that not all data/signals/channels in the cell/base station are transmitted normally, and the data/signals/channels may be required to be transmitted intermittently or transmitted with assistance of another cell/base station. In some embodiments, the first status may refer to an energy saving state of a cell/base station. In some embodiments, the first status may refer to that a cell/base station can be turned off or partially turned off. In some embodiments, the cell/base station being turned off or partially turned off may refer to that all or part of radio frequencies of the cell/base station are shut down.

Anchor cell (anchor cell)/anchor base station (anchor base station): The anchor cell/anchor base station may be a cell/base station that can assist an energy saving cell/energy saving base station in transmitting a message or can assist a terminal device in accessing an energy saving cell/energy saving base station. For example, the anchor cell/anchor base station may be a cell/base station that may assist a terminal device in acquiring information about an energy saving cell/energy saving base station, or the anchor cell/anchor base station may be a cell/base station that can carry information about an energy saving cell/energy saving base station, or the like. In some embodiments, the anchor cell may be, for example, a cell that is not in the first status. In some embodiments, the anchor cell/anchor base station may be, for example, a cell that does not support energy saving or does not require energy saving or a cell/base station that provides coverage.

However, embodiments of this application are not limited thereto. In some embodiments, the anchor cell may further have another capability. For example, the anchor cell may refer to a master cell, and is responsible for controlling and managing a plurality of established data connections, so as to ensure a speed and correctness of data transmission. The anchor cell may be a cell responsible for RRC connection establishment and maintenance.

Non-anchor cell (non-anchor cell)/non-anchor base station (non-anchor base station): The non-anchor cell/non-anchor base station cannot assist an energy saving cell/energy saving base station in transmitting a message, or cannot assist a terminal device in accessing an energy saving cell/energy saving base station. In some embodiments, the non-anchor cell may be, for example, a cell in the first status, and the cell cannot assist another cell in transmitting a message or assist a terminal device in accessing another cell. In some embodiments, the non-anchor cell may alternatively be a non-master cell, which is only responsible for data transmission.

It should be noted that the following embodiments (for example, an involved interaction procedure) are described from a perspective of interaction between a terminal device and a cell/base station. The terminal device and the base station may be, for example, the terminal device 120 and the base station 110 shown in FIG. 1, respectively. For brevity, details are not described below.

It should be noted that embodiments described below may be used either alone or in combination with another embodiment, which is not limited in embodiments of this application.

It should be noted that, Embodiment 1 to Embodiment 5 described below are all intended to resolve a problem related to accessing an energy saving cell/energy saving base station by a terminal device.

It should be noted that Embodiment 1 to Embodiment 5 described below may be used either alone or in any combination.

The following first describes these embodiments.

### Embodiment 1

Embodiment 1 is intended to resolve a problem of how a terminal device to acquire first information of a first cell/first base station in a case that part or all of first information of the first cell/first base station (for example, a non-anchor cell/non-anchor base station, an energy saving cell/energy saving base station, a cell/base station that supports a first status) is carried by another cell/base station.

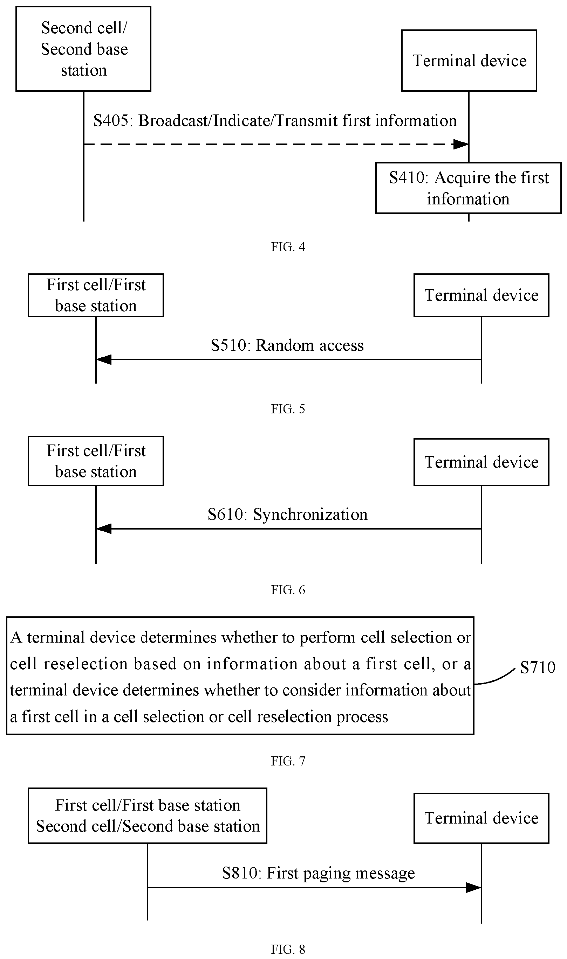

FIG. 4 is a schematic flowchart of a communication method according to an embodiment of this application. The method shown in FIG. 4 may include step S410. The following describes the step.

In step S410, a terminal device acquires first information of a first cell/first base station.

The first cell may be understood as an energy saving cell or a cell for an energy saving base station, or the first cell belongs to a cell that supports network energy saving or a cell that supports an energy saving base station. The first base station may be understood as an energy saving base station or a base station that has an energy saving capability. Alternatively, the first cell/first base station may support a first status, or the first cell/first base station may enter or may be about to enter a first status, or the first cell/first base station may be in a first status. For related descriptions of the first status, reference may be made to the foregoing description, and details are not described herein again.

In some embodiments, when a status corresponding to the first cell is the first status, part or all of the first information of the first cell may be carried or broadcast by using another cell (for example, a second cell).

In some embodiments, the first information of the first cell/first base station may be used by the terminal device to access the first cell/first base station. In some embodiments, the first information may be used by the terminal device to camp on the first cell/first base station. In some embodiments, the first information may be used by the terminal device to discover or detect or measure the first cell/first base station. In some embodiments, the first information may be used by the terminal device to receive paging information of the first cell/first base station.

Specific content of the first information is not limited in embodiments of this application. In some embodiments, the first information may include one or more of the following information: an SSB for the first cell; at least part of system information of the first cell; information used for searching for the first cell/first base station; information used for measuring the first cell/first base station; or information related to paging of the first cell/first base station.

In some embodiments, the first information may specifically include one or more of the following information: an SSB, a MIB, a SIB1, or at least part of other SIBs.

However, embodiments of this application are not limited thereto. In some embodiments, the first information may further include one or more of the following information: a PDCCH, a physical downlink shared channel (physical downlink shared channel, PDSCH), a semi-persistent scheduling (semi-persistent scheduling, SPS), a reference signal (reference signal, RS), a paging message (paging), a wake-up signal (wake-up signal, WUS), a physical uplink shared channel (physical uplink shared channel, PUSCH), a scheduling request (scheduling request, SR), a physical uplink control channel (physical uplink control channel, PUCCH), a configured grant (configured grant, CG), a sounding reference signal (sounding reference signal, SRS), a measurement report, a random access channel (random access channel, RACH), a medium access control control element (MAC control element, MAC CE), uplink control information (uplink control information, UCI), an on-demand MIB/SSB/SIB, or the like.

In some embodiments, part or all of the first information is carried in the first cell/first base station. In a possible implementation, when the first cell/first base station is in the first status, the first information carried in the first cell/first base station may be transmitted to the terminal device after a state of the first cell/first base station changes. In a possible implementation, when the first cell/first base station is in the first status, data/a signal/a channel that cannot be normally transmitted is other information different from the first information, and the first information can be normally transmitted in the first status. In this case, part or all of the first information can also be carried in the first cell/first base station.

In some embodiments, part or all of the first information is carried in a second cell/second base station. In a possible manner, when the first cell/first base station is in the first status, the second cell/second base station may carry the first information of the first cell/first base station, so as to ensure complexity and performance of the terminal device, and avoid an impact of network energy saving on key performance of the terminal device. In this case, the second cell may be used as an anchor cell of the first cell, or the second base station may be used as an anchor base station of the first base station, and the first information of the first cell/first base station is notified to the terminal device in a timely manner. Certainly, embodiments of this application also include a case in which the second base station serves as an anchor base station of the first cell. For brevity, details are not repeated, and reference may be made to a case in which the second base station serves as an anchor base station of the first base station.

When part or all of the first information of the first cell/first base station is carried by using another cell/base station, the terminal device can quickly acquire the first information of the first cell/first base station from the another cell/base station, so that good performance of the terminal device can be ensured.

In some embodiments, the first cell may be referred to as a non-anchor cell, and the second cell may be referred to as an anchor cell. One anchor cell may correspond to one or more non-anchor cells.

The following describes in detail a manner in which the terminal device acquires the first information in a case that part or all of the first information is carried in the second cell/second base station.

In an example in which the first information includes at least one of an SSB/MIB/SIB for the first cell, that part or all of the first information is carried in the second cell/second base station may refer to one or more of the following cases: (1) The SSB (MIB) for the first cell is carried/transmitted/broadcast/indicated in the first cell, and the SIB for the first cell is carried/transmitted/broadcast/indicated in the second cell; (2) The SSB for the first cell is carried/transmitted/broadcast/indicated in the first cell, and the MIB and SIB for the first cell is carried/transmitted/broadcast/indicated in the second cell; (3) The MIB and the SIB for the first cell is carried/transmitted/broadcast/indicated in the second cell; (4) The SSB, the MIB, and the SIB for the first cell is carried/transmitted/broadcast/indicated in the second cell; or (5) at least one of the SSB/MIB/SIB for the first cell is carried/transmitted/broadcast/indicated in the second cell.

In some embodiments, acquiring the first information may refer to acquiring the first information of the first cell by using the second cell and/or a third cell.

In some embodiments, a manner of acquiring the first information by the terminal device may be understood as: determining, by the terminal device, how to acquire the first information; or determining, by the terminal device, a cell/base station from which the first information is to be acquired; or determining, by the terminal device, how to receive or acquire the first information; or determining, by the terminal device, that the first information is to be acquired from the second cell; or determining, by the terminal device, whether to acquire the first information from the second cell or the like.

In some embodiments, a manner of acquiring the first information by the terminal device is determined by the terminal device by using second information. Content of the second information is not specifically limited in embodiments of this application. For example, the second information may include one or more of the following information. The following briefly describes the information.

Information 1: An association relationship between the first cell/first base station and the second cell/second base station, for example, an association relationship between the first cell and the second cell, an association relationship between the first base station and the second base station, an association relationship between the first cell and the second base station, or an association relationship between the first base station and the second cell. For example, the second information may indicate that the first cell is associated with the second cell, or indicate that the first base station is associated with the second base station, or the like.

Information 2: Type information of the first cell/first base station or type information of the second cell/second base station. For example, the second information may indicate that a type of the first cell/first base station is a non-anchor cell/non-anchor base station. Alternatively, the second information may indicate that the type of the second cell/second base station is an anchor cell/anchor base station. In some embodiments, the second information may further indicate other information about the first cell or the second cell. For example, the second information may be used for indicating at least one of a frequency, timing advance (timing advance, TA), a cell ID, or the like of the first cell. Alternatively, the second information may be used for indicating at least one of a frequency, TA, a cell ID, or the like of the second cell.

Information 3: Indication information of acquisition of the first information. In some embodiments, the indication information of acquisition of the first information may include: indication information used for indicating that the terminal device does not acquire the first information from a non-anchor cell/non-anchor base station; and/or indication information used for indicating that the terminal device acquires the first information from an anchor cell/anchor base station.

Information 4: Information related to the first information, for example, information such as a type of the first information and content of the first information. In some embodiments, the second information may indicate a type of information included in the first information, for example, the first information includes a MIB, a SIB, which SIB or which part of SSBs. In some embodiments, the second information may further directly indicate specific content of the first information, such as content of a MIB included, content of a SIB included, or the like. In an example, when the second information is indicated by the second cell, the second information may include the specific content of the first information.

Information 5: Information about a current state of the first cell/first base station. For example, the second information may indicate that the first cell/first base station is currently in the first status, or is not in the first status, or the like.

In some embodiments, part or all of information in the second information is indicated by the first cell/first base station. In some embodiments, part or all of information in the second information is indicated by the second cell/second base station. In some embodiments, part or all of the information in the second information is indicated by the first cell and the second cell. In some embodiments, part or all of information in the second information is indicated by the first base station and the second base station. In some embodiments, part or all of information in the second information is indicated by the first cell and the second base station. In some embodiments, part or all of information in the second information is indicated by the first base station and the second cell.

In an example, the first cell may indicate one or more of the following information: the first cell being associated with the second cell, at least one of a frequency, TA, a cell ID, or the like of the first cell, a type of the first cell, indication information of acquisition of the first information, type of information included in first information, or the like.

In another example, the second cell may indicate one or more of the following information: the first cell being associated with the second cell, at least one of a frequency, TA, a cell ID, or the like of the first cell, a type of the first cell, a type of the second cell, indication information of acquisition of the first information, type of information included in first information, or the like.

In still another example, the second cell may broadcast or indicate content of the first information of the first cell, and indicate that the first cell is in the first status. The content of the first information of the first cell and information indicating that the first cell is in the first status may be carried in one message, or may be carried in different messages (carried by different messages).

In this example, further, the second cell may also indicate one or more of the following information: indication information of acquisition of the first information, the first cell being associated with the second cell, at least one of a frequency, TA, a cell ID, or the like of the first cell, a type of the first cell, a type of the second cell, type of information included in first information, or the like.

An anchor cell and a non-anchor cell are used as examples. A corresponding anchor cell broadcasts or indicates a SIB and/or a MIB of the non-anchor cell. The terminal device acquires the first information of the non-anchor cell by reading broadcast of the anchor cell or acquires an indication of the anchor cell. For another example, correspondingly, the terminal device does not acquire the first information from the non-anchor cell.

In some embodiments, part or all of information in the second information is indicated by a third cell/third base station, and/or the third cell/third base station is used for indicating that part or all of the first information is carried in the second cell/second base station. In other words, the third cell/third base station may indicate third information, and the third information is used for indicating that the first information of the first cell/first base station is broadcast or indicated in the second cell/second base station.

In some embodiments, the third cell/third base station may further instruct the terminal device not to acquire part or all of the first information from the first cell, but to acquire part or all of the first information from the second cell.

In some embodiments, the third cell/third base station may further indicate one or more of the foregoing information 1 to information 5, a manner of carrying the first information by the second cell, and the like.

In an example, the third cell/third base station may indicate one or more of the following information: part or all of the first information being carried in the second cell/second base station, indication information of acquisition of the first information, the first cell being associated with the second cell, at least one of a frequency, TA, a cell ID, or the like of the first cell, at least one of a frequency, TA, a cell ID or the like of the second cell, a type of the first cell, a type of the second cell, type of information included in first information, a manner of carrying the first information by the second cell, a current state of the first cell, or the like.

The first cell and the second cell are used as examples. A corresponding second cell broadcasts or indicates a SIB and/or a MIB of the first cell. The terminal device acquires the first information of the first cell by reading broadcast of the second cell or acquires an indication of the second cell. For another example, correspondingly, the terminal device does not acquire the first information from the first cell.

In some embodiments, part or all of the information in the second information is carried by using one or more of the following: cell system information, an SSB, a dedicated RRC message, a synchronization signal, a reference sequence, or a reference signal. For example, when the first cell/first base station indicates the second information, indication may be performed through one or more of the following information: a MIB or partial system information (such as a simplified SIB1, or SIB1) of the first cell, or a specific SSB (such as a specially configured SSB), or a dedicated RRC message indication (for example, for UE in connected state), or a specific synchronization signal or a specific reference signal. For another example, when the second cell/second base station indicates the second information, indication may be performed through one or more of the following information: a MIB or a system information (such as a SIB1, another existing SIB, a new SIB) of the first cell, or a dedicated RRC message.

In some embodiments, the acquiring, by a terminal device, first information of a first cell/first base station includes: in a case that a current state of the first cell/first base station is the first status or the indication information of acquisition of the first information is not updated, acquiring, by the terminal device, the first information from the second cell/second base station. In other words, the terminal device does not acquire the first information from the non-anchor cell/non-anchor base station or acquires the first information from the anchor cell/anchor base station until a state of the first cell changes (for example, the first cell is on, not off, is not in an energy saving state, is not in an NES state, and may broadcast the first information, or is not in the first status), or the terminal device receives new indication information of acquisition of the first information (for example, acquiring from the non-anchor cell/non-anchor base station, or acquiring from the first cell itself).

In some embodiments, the first information is carried/indicated/broadcast by the second cell/second base station by using a SIB, for example, the second cell may broadcast or carry the first information by using an existing SIB or a new SIB (dedicated). In some embodiments, the first information is indicated by the second cell/second base station by using a dedicated RRC message.

Still referring to FIG. 4, in some embodiments, before step S410, the method may further include step S405. In step S405, the second cell/second base station broadcasts/indicates/transmits the first information of the first cell to the terminal device. For example, the second cell/second base station broadcasts or indicates the first information by using a SIB, or the second cell/second base station indicates the first information by using a dedicated RRC message.

In some embodiments, the second cell/second base station broadcasts/indicates/transmits the first information of the first cell when one or more of the following conditions are met: the first cell belongs to a cell that supports network energy saving or that supports an energy saving base station; the first base station belongs to an energy saving base station or a base station having an energy saving capability; the first cell/first base station supports a first status; the first cell/first base station enters or is about to enter a first status; the first cell/first base station is in a first status; the second cell/second base station learns that the first cell/first base station is in a first status; the second cell/second base station learns that the first cell/first base station supports a first status; the second cell/second base station learns that the first cell/first base station enters or is about to enter a first status; the first cell is a non-anchor cell of the second cell (or the first cell is a non-anchor cell of a third cell); the first base station is a non-anchor base station of the second base station (or the first base station is a non-anchor base station of a third base station); the first cell requests the second cell to carry/indicate/broadcast the first information; the first base station requests the second base station to carry/indicate/broadcast the first information; the second cell is an anchor cell; the second base station is an anchor base station; the second cell/second base station has a capability of transmitting the first information; the second cell/second base station receives a request message transmitted by the terminal device, where the request message is used for requesting the second cell/second base station to transmit/broadcast the first information, or the like.

In some embodiments, the terminal device may transmit the request message to the second cell/second base station in one or more of the following cases: the second cell broadcasts that the cell may broadcast the first information of the first cell, or indicate that the cell is an anchor cell of the first cell, or indicates that the non-anchor cell does not broadcast the information. Based on this, a terminal device that camps on or accesses the second cell may transmit a request message to the second cell/second base station, so as to request the second cell/second base station to transmit/broadcast the first information.

In some embodiments, if there is a first cell (for example, a cell for base station in R18, a cell that supports a network energy saving base station, or a cell of a base station that performs network energy saving) or a first base station (for example, a base station in R18, a base station that supports network energy saving, or a base station that performs network energy saving), or an SSB for the first cell/first base station is carried in the second cell/second base station, the second cell may broadcast one or more of the following information: a configuration of an SSB for the first cell/first base station, a position of an SSB for the first cell/first base station, a synchronization time difference between the first cell and the second cell, a synchronization time difference between the first base station and the second base station, or the like.

In some embodiments, if a SIB for the first cell/first base station is carried in the second cell/second base station (for example, an anchor cell/anchor base station), the second cell may broadcast SIB information of the first cell.

In some embodiments, if the SIB for the first cell is carried in the first cell, the second cell is not required to broadcast the SIB information of the first cell, or the second cell indicates a bearer period/resource location or the like of the SIB information of the first cell.

In some embodiments, if there is a first cell (for example, a cell for a base station in R18, a cell that supports a network energy saving base station, or a cell of a base station that performs network energy saving) or a first base station (for example, a base station in R18, a base station that supports network energy saving, or a base station that performs network energy saving), or an SSB for the first cell/first base station is carried in the first cell/first base station, an operation performed by the second cell may include one or more of the following: (1) the second cell/second base station does not broadcast an SSB for the first cell/first base station; (2) if the SIB for the first cell/first base station is carried in the first cell/first base station (for example, a non-anchor cell/non-anchor base station), the second cell/second base station does not broadcast the SIB information of the first cell/first base station; or (3) if the SIB for the first cell/first base station is carried in the second cell/second base station, the second cell/second base station is required to broadcast the SIB information of the first cell/first base station.

### Embodiment 2

Embodiment 2 is intended to resolve a problem of how to transmit and receive a random access message when a terminal device randomly accesses a first cell.

FIG. 5 is a schematic flowchart of a communication method according to an embodiment of this application. As shown in FIG. 5, the method includes step S510. The following describes this step.

In step S510, in a case that a terminal device performs a random access procedure for a first cell, or in a case that a terminal device randomly accesses a first cell, one of the following operations is performed: receiving, by the terminal device in a second cell, information transmitted by a base station, and transmitting information to the base station in the first cell; or receiving, by the terminal device in a second cell, information transmitted by a base station and transmitting information to the base station; or receiving, by the terminal device in the first cell, information transmitted by a base station and transmitting information to the base station; or receiving, by the terminal device in the first cell, information transmitted by a base station, and transmitting information to the base station in a second cell.

In some embodiments, the information received by terminal device and transmitted by the base station or the information transmitted from the terminal device to the base station may be a random access message or may be information carried in a random access message. In this case, when the terminal device performs the random access procedure for the first cell, or the terminal device randomly accesses the first cell, an operation performed may include: transmitting, by the terminal device, a random access message in the first cell, and receiving, by the terminal device in the second cell, a random access message in the first cell; or transmitting and receiving, by the terminal device in the second cell, a random access message for the first cell; or transmitting and receiving, by the terminal device in the first cell, a random access message for the first cell; or receiving, by the terminal device in the first cell, a random access message, and transmitting, by the terminal device in the second cell, a random access message for the first cell.

A specific type of the random access message is not limited in embodiments of this application. In some embodiments, the random access message may be a random access message corresponding to four-step random access, for example, msg1, msg2, msg3, msg4, and msg0. In some embodiments, the random access message may be a random access message corresponding to two-step random access, for example, msgA and msgB. In some embodiments, the random access message may be a contention-based random access message, for example, msg1, msg2, msg3, and msg4. In some embodiments, the random access message may be a contention-free random access message, for example, msg1, msg2, and msg0.

In some embodiments, the first cell belongs to a cell that supports network energy saving or that supports an energy saving base station, or the first cell supports a first status, or the first cell is about to enter a first status, or the first cell is in a first status.

In some embodiments, part or all of first information of the first cell is carried in the second cell. In some embodiments, the second cell may be an anchor cell of the first cell. For details of the second cell, reference may be made to the second cell in Embodiment 1. Details are not described herein again.

In some embodiments, the first information of the first cell may be used by the terminal device to access the first cell, or may be used by the terminal device to camp on the first cell, or may be used by the terminal device to discover/detect/measure the first cell, or may be used by the terminal device to receive paging information of the first cell. In at least one embodiment, for detailed description of the content of the first information of the first cell, reference may be made to the description in Embodiment 1.

In some embodiments, part or all of the first information of the first cell includes a random access parameter and/or a random access resource configuration. For example, part or all of the first information may include parameters such as an SSB, a SIB, a MIB and the like of the first cell, or may include a RACH configuration and the like.

In some embodiments, a RACH resource of the first cell may be configured through a second cell (for example, an anchor cell). In some embodiments, the RACH resource of the first cell may be broadcast by the first cell.

In some embodiments, the terminal device may trigger different RACH procedures depending on different bearer objects (carried by the first cell or carried by the second cell) of SSBs for the first cell. This is described below.

If there is a first cell (for example, a cell for a base station in R18, a cell that supports a network energy saving base station, or a cell of a base station that performs network energy saving), or an SSB for the first cell is carried in the second cell (for example, an anchor cell), solutions in which the terminal device receives and transmits a random access message in a case that the terminal device triggers RACH may be as follows.

Solution 1: The terminal device receives a random access message in the second cell, and transmits a random access message in the first cell (for example, an SSB that is corresponding to a RACH resource and selected in the first cell is an SSB that is corresponding to the first cell and selected from the second cell). For example, the terminal device may receive msg2/msg4/msgB/msg0 in the second cell, and transmit msg1/msg3/msgA in the first cell.

Solution 2: The terminal device receives a random access message in the second cell, and transmits a random access message in the second cell (for example, an SSB that is corresponding to a RACH resource and selected in the second cell is an SSB that is corresponding to the first cell and selected from the second cell). For example, the terminal device may receive msg2/msg4/msgB/msg0 in the second cell, and transmit msg1/msg3/msgA in the second cell.

Solution 3: The terminal device receives a random access message in the first cell (for example, an SSB that is corresponding to a RACH resource and selected in the first cell is an SSB that is corresponding to the first cell and selected from the second cell), and transmits a random access message in the first cell (for example, an SSB that is corresponding to a RACH resource and selected in the first cell is an SSB that is corresponding to the first cell and selected from the second cell). For example, the terminal device may receive msg2/msg4/msgB/msg0 in the first cell, and transmit msg1/msg3/msgA in the first cell.

If there is a first cell (for example, a cell for a base station in R18, a cell that supports a network energy saving base station, or a cell of a base station that performs network energy saving), or an SSB for the first cell is carried in the first cell (for example, a non-anchor cell) and only a SIB or MIB is transmitted in the second cell, solutions in which the terminal device receives and transmits a random access message in a case that the terminal device triggers RACH may be as follows: The terminal device receives a random access message (for example, a selected SSB) in the first cell, and transmits a random access message in the first cell (for example, an SSB that is corresponding to a RACH resource and selected in the first cell is an SSB selected from SSBs transmitted from the first cell). For example, the terminal device may receive msg2/msg4/msgB/msg0 in the first cell, and transmit msg1/msg3/msgA in the first cell.

### Embodiment 3

Embodiment 3 is intended to resolve a problem of how a terminal device synchronizes with a first cell/first base station.

FIG. 6 is a schematic flowchart of a communication method according to an embodiment of this application. As shown in FIG. 6, the method may include step S610. The following describes this step.

In step S610, a terminal device synchronizes with a first cell/first base station.

In some embodiments, the terminal device may synchronize with the first cell/first base station based on one or more of the following information: information about an SSB for the first cell carried by a second cell/second base station; information about an SSB for a second cell/second base station; information about an SSB for the first cell acquired by the terminal device based on information about an SSB and/or a SIB for a second cell; information about an SSB for the second cell acquired by the terminal device; a synchronization signal or a synchronization sequence for the first cell/first base station; or a simplified SSB for the first cell/first base station.

In some embodiments, synchronization between the terminal device and the first cell/first base station is performed in a first case. For example, the first case may include one or more of the following cases: the first cell is an energy saving cell or a cell for an energy saving base station, the first base station is an energy saving base station, the first cell/first base station supports a first status, the first cell/first base station enters or is about to enter a first status, the first cell/first base station is in a first status, first information of the first cell/first base station is carried by a second cell/second base station, the first cell is a non-anchor cell, or the first base station is a non-anchor base station.

In some embodiments, processes of synchronization between the terminal device and the first cell/first base station may be different depending on different bearer objects (carried by the first cell or carried by the second cell) of SSBs for the first cell. This is described below.

For example, if there is a first cell (for example, a cell for a base station in R18, a cell that supports a network energy saving base station, or a cell of a base station that performs network energy saving), or an SSB for the first cell is carried in a second cell (for example, an anchor cell), the terminal device may synchronize with the first cell based on a Cell-defined SSB for the corresponding first cell carried in the second cell; or the terminal device may acquire information about the SSB for the first cell based on based on information about an SSB and/or a SIB for a second cell (for example, acquire a position of the SSB for the first cell or acquire a synchronization error between the first cell and the second cell), and synchronize with the first cell.

If there is a first cell (for example, a cell for a base station in R18, a cell that supports a network energy saving base station, or a cell of a base station that performs network energy saving), or an SSB for the first cell is carried in the first cell (for example, a non-anchor cell), or a discovery reference signal (discovery reference signal, DRS) of the first cell is synchronized, the terminal device may synchronize with the first cell based on a Cell-defined SSB for the first cell.

### Embodiment 4:

Embodiment 4 is intended to resolve problems of whether a terminal device is required to consider a first cell during cell selection or cell reselection, and how to perform cell selection or cell reselection based on information about the first cell in consideration of the first cell.

FIG. 7 is a schematic flowchart of a communication method according to an embodiment of this application. As shown in FIG. 7, the method may include step S710. The following describes this step.

In step S710, a terminal device determines whether to perform cell selection or cell reselection based on information about a first cell, or a terminal device determines, in a cell selection or cell reselection process, whether to consider information about a first cell.

In some embodiments, the information about the first cell includes information about energy saving of the first cell.

The information about energy saving of the first cell is not limited in embodiments of this application, provided that the information is associated with energy consumption of the first cell. For example, the information about energy saving of the first cell may include one or more of the following information: status information of the first cell; whether the first cell belongs to a cell that supports network energy saving or a cell that supports an energy saving base station; whether the first cell supports a first status, whether part or all of first information of the first cell is carried in a second cell, whether the first cell is a non-anchor cell; whether the first cell transmits or is capable of transmitting a first synchronization signal or a synchronization sequence; or whether the first cell transmits or is capable of transmitting a simplified SSB.

In some embodiments, the status information of the first cell may refer to a status of the first cell, for example, the first cell is in the first status, in a second status, in an on state, in a normal transmission state, in an energy saving state, in a non-energy saving state, or the like.

It should be noted that for detailed content of the first status, reference may be made to the foregoing description, and details are not described herein again. In some embodiments, the second status may refer to a state different from the first status, for example, energy consumption of a cell/base station in the second status is higher than energy consumption in the first status. Specific content of the second status is not limited in embodiments of this application. For example, the second status may include one or more of following states: an on state of a cell/base station, a non-energy saving state of a cell/base station, a non-NES state of a cell/base station, a high-load state of a cell/base station, a DRX state of a cell/base station, a DTX state of a cell/base station, or a state of normal transmission for a cell/base station. In some embodiments, when the first status is the DRX state, the first status may refer to a DRX on state. In some embodiments, when the first status is the DTX state, the first status may refer to a DTX on state. In some embodiments, the second status may also be extended to a state of acquiring information from a non-anchor cell/non-anchor base station.

In some embodiments, the first information may be used by the terminal device to access the first cell, or may be used by the terminal device to camp on the first cell, or may be used by the terminal device to discover/detect/measure the first cell, or may be used by the terminal device to receive paging information of the first cell. For more detailed content of the second cell and the first information, reference may be made to the corresponding description in Embodiment 1. Details are not described herein again.

In some embodiments, if the terminal device is a legacy (legacy) terminal device or a terminal device that does not support network energy saving, step S710 may further include: performing, by the terminal device, cell selection or cell reselection not based on the information about energy saving of the first cell; or determining, by the terminal device, that the information about energy saving of the first cell is not considered in the cell selection or cell reselection process. For example, in a cell selection or cell reselection process, the terminal device does not consider whether there is a first cell (for example, a cell for a base station in R18, a cell that supports a network energy saving base station, or a cell of a base station that performs network energy saving), does not consider whether the first cell is in the first status, or does not consider whether at least one of an SSB/a MIB/(part of or all of) SIBs for the first cell is carried or broadcast by using another cell (for example, the second cell), or does not consider whether the first cell is a cell with a specific identifier (for example, a non-anchor cell).

In some embodiments, if the terminal device is a legacy terminal device or a terminal device that does not support network energy saving, the terminal device cannot camp on the first cell, or it is considered that the first cell is barred (barred).

In some embodiments, if the terminal device is a terminal device that supports network energy saving, step S710 may further include: performing, by the terminal device, cell selection or cell reselection based on the information about energy saving of the first cell; or determining, by the terminal device, that the information about energy saving of the first cell is considered in the cell selection or cell reselection process.

In some embodiments, in cell selection or cell reselection, the terminal device may perform the cell selection or cell reselection process based on channel quality and/or a frequency priority.

If channel quality and/or a frequency priority of the first cell is different from channel quality and/or a frequency priority of a non-specific cell (a legacy cell, for example, a cell that is not in the first status, an anchor cell, a non-energy saving cell or the like), the terminal device may perform cell selection or cell reselection based on the channel quality and/or the frequency priority. This manner may be understood as a legacy cell selection or legacy reselection process (legacy). If the channel quality and/or frequency priority of the first cell is the same as the channel quality and/or frequency priority of a non-specific cell, cell selection or cell reselection may be performed by selecting the first cell or the non-specific cell based on one or more of the following: (1) being implemented by the terminal device; (2) the first cell is preferentially selected; (3) the non-specific cell is preferentially selected; (4) a cell is selected according to a proportion (for example, randomly selecting a number and rolling a die, where when the number ranges from A to B (for example, 0-1), the first cell is selected; otherwise the non-specific cell is selected; or vice versa). In this case, the terminal device may be a terminal device that supports network energy saving.

In some embodiments, the method provided in Embodiment 4 may further include the following steps: ignoring, by the terminal device, the first cell in a process of cell selection or cell reselection or cell measurement, or determining, by the terminal device, that the first cell is a low-priority cell corresponded when the terminal device performs cell selection or cell reselection or cell measurement. In some embodiments, that the first cell is the low-priority cell corresponded when the terminal device performs cell selection or cell reselection or cell measurement includes at least one of the following: the first cell or a frequency of the first cell has a low priority, the first cell is barred, or a same frequency of the first cell is barred.

In a possible implementation, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for the first cell is carried or broadcast by using another cell (for example, the second cell), or the first cell is a cell with a specific identifier (for example, a non-anchor cell), the terminal device may not consider the first cell in the process of cell selection or cell reselection or cell measurement, for example, the first cell is not considered within 300s or the first cell is not considered until a state of the first cell is changed (for example, left the first status), or in the process of cell selection or cell reselection or cell measurement, the terminal device consider that the first cell is not the best cell (best cell) or the highest ranked cell (highest ranked cell), or the terminal device sets a frequency of the first cell to a low-priority frequency (or lower than another frequency, or lower than a frequency priority configured by a network, or lower than a frequency of another cell).

In another possible implementation, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), the terminal device considers that the first cell and/or a same frequency of the first cell is barred or cellbarred (cellbarred), or the terminal device considers that the first cell or a same frequency of the first cell has a low priority; or the terminal device does not access the first cell. Further, within a specific period of time, the terminal device considers that the first cell and/or the same frequency of the first cell is barred or cellbarred, for example, is not considered by the terminal device within 300s or is not considered until a state of the first cell is changed (for example, left in the first status). In at least one embodiment, the terminal device is a legacy terminal device, or a terminal device that does not support network energy saving.

In some embodiments, the method provided in Embodiment 4 may further include the following step: determining, by the terminal device, that the first cell is a high-priority cell corresponded when the terminal device performs cell selection or cell reselection or cell measurement. In some embodiments, that the first cell is a high-priority cell corresponded when the terminal device performs cell selection or cell reselection or cell measurement includes at least one of the following: the first cell or a frequency of the first cell has a high priority, the first cell is a high-priority cell, or a same frequency of the first cell has a high priority.

In a possible implementation, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), an NES terminal device (or referred to as a terminal device that supports network energy saving) considers that at least one of the first cell or a same frequency terminal device in the first cell is a high priority frequency (or higher than a priority of another frequency, or a frequency configured by a network, or a frequency of another cell) or the best cell or the highest ranked cell. Further, within a specific period of time, the terminal device considers that at least one of the first cell or a same frequency of the first cell is a high priority frequency (or higher than a priority of another frequency, or a frequency configured by a network, or a frequency of another cell) or the best cell or the highest ranked cell, for example, is not considered by the terminal device within 300s or is not considered until a state of the first cell is changed (for example, left the first status).

In another possible implementation, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), the NES terminal device considers that at least one of the first cell or a same frequency terminal device of the first cell is a high priority frequency (or higher than a priority of another frequency, or a frequency configured by a network, or a frequency of another cell) or selects the cell or frequency, or the best cell or the highest ranked cell. In at least one embodiment, in another case (for example, in a cell non-energy saving state or a cell DTX/DRX off state, or the like), the terminal device selects another cell or a non-specific cell (legacy cell). Further, in a specific period of time, the terminal device considers that the first cell is not considered, for example, not considered within 300s, or not considered until a state of the specific cell is changed (for example, left the first status). In at least one embodiment, the terminal device is a terminal device that supports network energy saving.

In some embodiments, step S710 is performed when the first cell is in a first case. The first case may include one or more of the following cases: the first cell is a cell that supports energy saving, the first cell is a cell that has an energy saving capability, the first cell is an energy saving cell or a cell for an energy saving base station, the first cell supports or enters or is about to enter the first status, first information of the first cell is carried in the second cell, or the first cell is a non-anchor cell.

In some embodiments, if the first cell is in the first case, a measurement result of the first cell is obtained based on a measurement result of the second cell. In an implementation, the measurement result of the first cell is the measurement result of the second cell. In another implementation, the measurement result of the first cell is a deformation of the measurement result of the second cell (for example, the measurement result of the second cell + offset). In still another possible implementation, the measurement result of the first cell is a measurement result of an SSB for the first cell carried in the second cell. In still another possible implementation, the measurement result of the first cell is a measurement result of a reference signal or a reference sequence carried in the first cell.

In some embodiments, during cell selection or cell reselection, if a discovery signal of the first cell is transmitted but an SSB/SIB is not transmitted, the terminal device performs legacy cell selection or legacy cell reselection, that is, performs a cell selection or cell reselection process based on channel quality and/or a frequency priority. For example, the terminal device may perform cell selection or cell reselection based on measurement of the cell discovery signal. In at least one embodiment, the terminal device is a terminal device that supports network energy saving.

In some embodiments, during cell selection or cell reselection of the terminal device, if a discovery signal of the first cell is transmitted and an SSB/SIB is also transmitted, or an SSB/SIB is communicated, or an on-demand SSB/SIB is transmitted, a legacy terminal device or a terminal device that does not support network energy saving performs legacy cell selection or legacy cell reselection, or the first cell has a low priority/is not selected or barred. A terminal device that supports network energy saving performs cell selection or cell reselection for a network energy saving cell (for example, the first cell has a low priority or high priority) based on a network state.

In some embodiments, for a case in which both an SSB and a SIB for the first cell are carried in the first cell, or a SIB for the first cell is carried in the first cell while an SSB for the first cell is carried in the second cell, or both an SSB and a SIB for the first cell are carried in the second cell, the terminal device may perform measurement and/or cell selection/reselection based on a cell discovery signal or a simplified SSB.

### Embodiment 5

Embodiment 5 is intended to resolve a problem of how a terminal device receives a paging message of a first cell.

FIG. 8 is a schematic flowchart of a method according to an embodiment of this application. As shown in FIG. 8, the method may include step S810. The following describes this step.

In step S810, a terminal device receives a first paging message. The first paging message is a paging message for a first cell/first base station.

In some embodiments, that the first paging message is a paging message for the first cell/first base station may refer to that the first paging message is a paging message associated with the first cell/first base station, for example, the first paging message is a paging message transmitted by the first cell/first base station, or the first paging message is a paging message that requests the terminal device to access the first cell/first base station.

In some embodiments, the first cell/first base station is in one or more of the following cases: whether the first cell belongs to a cell that supports network energy saving or a cell that supports an energy saving base station; whether the first base station belongs to an energy saving base station or a base station having an energy saving capability, whether the first cell/first base station supports a first status, part or all of first information of the first cell is carried in a second cell (for detailed content of the first information and the second cell, reference may be made to the description in Embodiment 1); the first cell is a non-anchor cell, or the first base station is a non-anchor base station.

In some embodiments, the first paging message is transmitted by the first cell/first base station. In some embodiments, the first paging message is transmitted by a second cell/second base station.

In some embodiments, configuration information of the first paging message is transmitted by a second cell/second base station. For example, in a case that the first cell/first base station transmits the first paging message, the second cell/second base station transmits the configuration information of the first paging message.

In some embodiments, the configuration information of the first paging message may include a paging location of the first cell. In some embodiments, the paging location of the first cell may be a specific configuration, and the specific configuration, for example, may be a subset of an existing paging configuration.

In some embodiments, the first paging message may be received in a first cell. For example, the first paging message may be received by the terminal device in the first cell by referring to one or more of the following information: synchronization information of the second cell/second base station, beam information of the second cell/second base station, or a discovery reference signal or reference sequence synchronization information of the first cell/first base station. In a specific example, the terminal device may determine a beam direction of the first cell with reference to a beam direction of the second cell (for example, using the beam direction of the second cell as the beam direction of the first cell), and receive the first paging message based on the determined beam direction of the first cell.

In some embodiments, in a case that the second cell/second base station transmits the first paging message, the first paging message may include first indication information. The first indication information may be used for indicating that the first paging message is for the first cell/first base station, or instructing the terminal device to access the first cell/first base station.

In some embodiments, if there is a paging message (for example, the first paging message), an anchor cell/anchor base station (for example, the second cell/second base station) may indicate that the first cell has left the first status, or indicate that the first cell/first base station transmits first information (for example, at least one of an SSB/MIB/SIB, for content of the first information, reference may be made to the detailed description in Embodiment 1), or indicate that the first cell/first base station enters a second status (for example, a state of abnormal transmission, an on state, or the like, for specific content of the second status, reference may be made to the description in Embodiment 4), or may indicate that the first cell/first base station performs or resumes transmission. In at least one embodiment, the paging message may be transmitted in the first cell.

In some embodiments, if the first cell is a PCell, the method shown in Embodiment 5 may further include the following steps: monitoring, by the terminal device, the first paging message in the first cell, and/or monitoring, by the terminal device, the first paging message not in the second cell.

In some embodiments, if the first cell is a PSCell or a SCell, the method shown in Embodiment 5 may further include the following steps: monitoring, by the terminal device, the first paging message in the second cell, and/or monitoring, by the terminal device, the first paging message not in the first cell.

In some embodiments, after the terminal device receives the first paging message, or when there is a paging message for the first cell, a network may trigger transmission of an SSB/SIB for the first cell, or trigger the terminal device to transmit an on-demand (on-demand) SSB/SIB, or consider that previously stored SSB/SIB information is available.

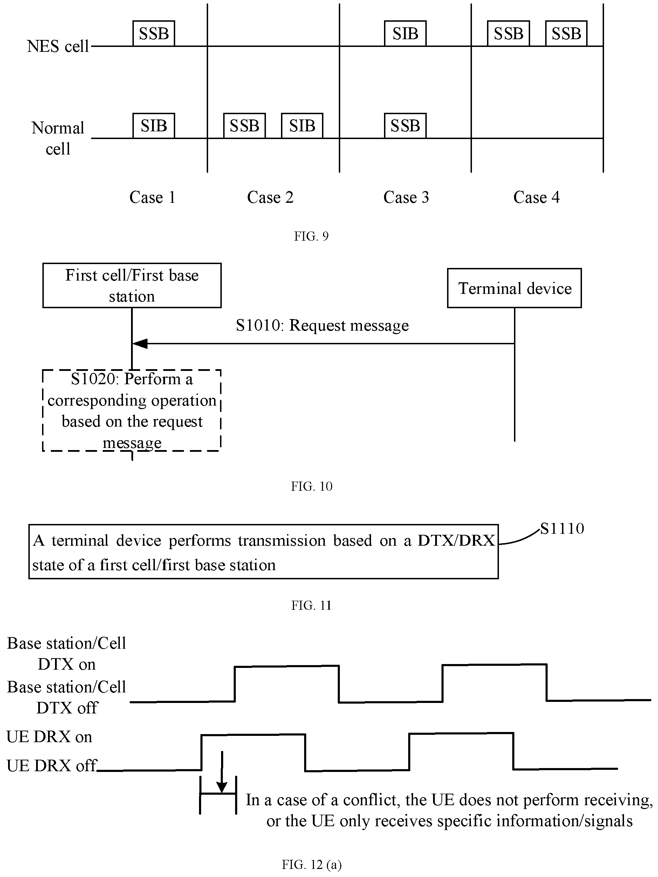

Embodiment 1 to Embodiment 5 are all related to a terminal device accessing an energy saving cell/energy saving base station. With reference to the scenario example diagram in FIG. 9, the following provides several examples for different scenarios. The examples may be understood as a description of application of Embodiment 1 to Embodiment 5. This examples are described for different cases in which first information of a first cell is carried. Before description of the examples, cases in which the first information of the first cell is carried are first described with reference to FIG. 9.

FIG. 9 shows cases (case) in which several types of first information are carried. In case 1, an SSB for the first cell is carried in the first cell, and a SIB for the first cell is carried in a second cell. In case 2, both an SSB and a SIB for the first cell are carried in the second cell. In case 3, a SIB for the first cell is carried in the first cell, and an SSB for the first cell is carried in a second cell. In case 4, both an SSB and a SIB for the first cell are carried in the first cell.

It should be noted that in these examples, the first cell may also be referred to as an NES cell, and the second cell may also be referred to as a normal cell (normal cell).

First, an example in case1 is provided. In case 1, for a UE in an idle state, the UE may perform one of the following.
(1) The SSB for the first cell is carried in the first cell, so that the UE may perform at least one of measurement, cell discovery, or synchronization of the first cell based on the SSB.
(2) The UE may perform RACH in the first cell to synchronize with uplink of the first cell. In at least one embodiment, the UE acquires a RACH configuration from the second cell (an anchor cell). For example, a RACH resource is determined by using an SSB selected by the first cell, and a RACH process is performed in the first cell. For example, the UE determines, based on indication of the first cell or the second cell, to acquire SIB information of the first cell from the second cell.
(3) The first cell is a PCell.
(4) The UE may request the second cell to transmit SIB information of the first cell.
(5) The UE performs a legacy cell selection or legacy cell reselection process.
(6) The first cell blocks (block) access of a legacy UE, or a legacy UE considers that a cell is barred (or barred for 300s, for example, barred for 300s because a SIB message cannot be received).
(7) The UE obtains paging information from the first cell.

In case 1, for a UE in a connected state (the first cell may be a PCell or a SCell of an NES-capable UE, and if the first cell is a SCell), the UE may perform one of the following.
(1) The UE performs RACH in the first cell to synchronize with uplink of the first cell; or if the first cell and the PCell are in a same TAG, synchronization is not required to be performed.
(2) A RACH configuration for the first cell may be acquired from dedicated RRC for the first cell, or may be acquired from dedicated RRC for the second cell, or may be acquired from a SIB for the second cell.
(3) The UE may request the second cell to transmit SIB information of the first cell.
(4) The first cell is not required to receive a paging message.

In case 1, for a UE in a connected state (the first cell may be a PCell or a SCell of an NES-capable UE, and if the first cell is the PCell), the UE may perform one of the following.
(1) The UE performs RACH in the first cell to synchronize with uplink of the first cell; or if the first cell and the PCell are in a same TAG, synchronization is not required to be performed.
(2) A RACH configuration for the first cell may be acquired from dedicated RRC for the first cell, or may be acquired from dedicated RRC for the second cell, or may be acquired from a SIB for the second cell.
(3) The UE may request the second cell to transmit SIB information of the first cell.
(4) A paging message is received in the first cell.
(5) Handover: The UE is preferably handed over to the first cell, or the second cell, or another legacy cell.

The following provides an example in case 2. In case 2, for a UE in an idle state, the UE may perform one of the following.
(1) Discovery of the first cell: The UE discovers the first cell by using information about the second cell or a cell discovery signal/sequence of the first cell.
(2) Downlink synchronization or measurement or cell selection or cell reselection: The UE performs synchronization or measurement or cell selection or cell reselection based on a cell discovery signal/sequence of the first cell, or the UE performs synchronization or measurement or cell selection or cell reselection based on an SSB for the first cell transmitted in the second cell, or the UE performs synchronization or measurement or cell selection or cell reselection of the first cell based on an SSB for the second cell (for example, it is considered that the SSB for the second cell is the SSB for the first cell, it is considered that the second cell is synchronized with the first cell, or it is considered that a measurement result of the second cell may be used as a measurement result of the first cell, specifically, may be equivalent, or may be corrected).
(3) RACH: A RACH configuration is acquired from the second cell, and RACH is performed in the first cell, or RACH is performed in the second cell. For example, at least one of a beam direction or a RACH resource is determined by using an SSB for the first cell or a discovery signal/sequence of the first cell, and a RACH process is performed in the first cell. For example, the UE determines, based on indication of the first cell or the second cell, to acquire SIB information of the first cell from the second cell.
(4) The first cell is a PCell.
(5) The UE may request the second cell to transmit SSB/SIB information of the first cell.
(6) An NES-capable UE performs a legacy cell selection or legacy cell reselection process, or the first cell has a high priority or a low priority.
(7) The first cell is not allowed to be discovered by a legacy UE, or the first cell prevents access of a legacy UE.
(8) Paging: Paging is acquired from the first cell or from the second cell (for example, if the second cell is available after measurement, paging is acquired from the second cell or the first cell, or if the second cell is unavailable after measurement, paging is acquired from the first cell).

In case 2, for a UE in a connected state (the first cell may be a PCell or a SCell of an NES-capable UE, and if the first cell is a SCell), the UE may perform one of the following.
(1) The UE performs RACH in the first cell to synchronize with uplink of the first cell; or, if the first cell and the PCell are in a same TAG, synchronization is not required to be performed.
(2) A RACH configuration for the first cell may be acquired from dedicated RRC for the first cell, or may be acquired from dedicated RRC for the second cell, or may be acquired from a SIB for the second cell.
(3) The UE may request the second cell to transmit SSB/SIB information of the first cell.
(4) The first cell is not required to receive a paging message.

In case 2, for a UE in a connected state (the first cell may be a PCell or a SCell of an NES-capable UE, and if the first cell is the PCell), the UE may perform one of the following.
(1) The UE performs RACH in the first cell to synchronize with uplink of the first cell; or if the first cell and the PCell are in a same TAG, synchronization is not required to be performed.
(2) A RACH configuration for the first cell may be acquired from dedicated RRC for the first cell, or may be acquired from dedicated RRC for the second cell, or may be acquired from a SIB for the second cell.
(3) The UE may request the second cell to transmit SSB/SIB information of the first cell.
(4) A paging message is received in the first cell.
(5) Handover: The UE is preferably handed over to the first cell, or the second cell, or another legacy cell.
The following provides an example in case 3. In case 3, for a UE in an idle state, the UE may perform one of the following.
(1) Discovery of the first cell: The UE discovers the first cell by using information about the second cell or a cell discovery signal/sequence of the first cell.
(2) Downlink synchronization or measurement or cell selection or cell reselection: The UE performs synchronization or measurement or cell selection or cell reselection based on a cell discovery signal/sequence of the first cell, or the UE performs synchronization or measurement or cell selection or cell reselection based on an SSB for the first cell transmitted in the second cell, or the UE performs synchronization or measurement or cell selection or cell reselection of the first cell based on an SSB for the second cell (for example, it is considered that the SSB for the second cell is the SSB for the first cell, it is considered that the second cell is synchronized with the first cell, or it is considered that a measurement result of the second cell may be used as a measurement result of the first cell, specifically, may be equivalent, or may be corrected).
(3) RACH: A RACH configuration is acquired from the first cell, and RACH is performed in the first cell, or RACH is performed in the second cell. For example, a beam direction or a RACH resource is determined by using an SSB for the first cell or a discovery signal/sequence of the first cell, and a RACH process is performed in the first cell.
(4) The first cell is a PCell.
(5) The UE may request the second cell to transmit SSB/SIB information of the first cell.
(6) An NES-capable UE performs a legacy cell selection or legacy cell reselection process, or the first cell has a high priority or a low priority.
(7) The first cell is not allowed to be discovered by a legacy UE, or the first cell prevents access of a legacy UE.
(8) Paging: Paging is acquired from the first cell or from the second cell (for example, if the second cell is available after measurement, paging is acquired from the second cell or the first cell, or if the second cell is unavailable after measurement, paging is acquired from the first cell).

In case 3, for a UE in a connected state (the first cell may be a PCell or a SCell of an NES-capable UE, and if the first cell is a SCell), the UE may perform one of the following.
(1) The UE performs RACH in the first cell to synchronize with uplink of the first cell; or if the first cell and the PCell are in a same TAG, synchronization is not required to be performed.
(2) A RACH configuration for the first cell may be acquired from dedicated RRC for the first cell, or may be acquired from dedicated RRC for the second cell, or may be acquired from a SIB for the second cell.
(3) The UE may request the second cell to transmit SSB/SIB information of the first cell.
(4) The first cell is not required to receive a paging message.

In case 3, for a UE in a connected state (the first cell may be a PCell or a SCell of an NES-capable UE, and if the first cell is the PCell), the UE may perform one of the following.
(1) The UE performs RACH in the first cell to synchronize with uplink of the first cell; or if the first cell and the PCell are in a same TAG, synchronization is not required to be performed.
(2) A RACH configuration for the first cell may be acquired from dedicated RRC for the first cell, or may be acquired from dedicated RRC for the second cell, or may be acquired from a SIB for the second cell.
(3) The UE may request the second cell to transmit SSB/SIB information of the first cell.
(4) A paging message is received in the first cell.
(5) Handover: The UE is preferably handed over to the first cell, or the second cell, or another legacy cell.

Finally, an example in case 4 is provided. In case 4, for a UE in an idle state, the UE may perform one of the following.
(1) Discovery of the first cell: The UE discovers the first cell by using information about the second cell or a cell discovery signal/sequence of the first cell.
(2) Downlink synchronization or measurement or cell selection or cell reselection before transmission of an SSB/SIB: The UE performs synchronization or measurement or cell selection or cell reselection based on a cell discovery signal/sequence of the first cell.
(3) Downlink synchronization or measurement or cell selection or cell reselection after transmission of an on-demand SSB/SIB or an SSB/SIB: The UE performs synchronization or measurement or cell selection or cell reselection based on a cell discovery signal/sequence of the first cell or an SSB for the first cell.
(4)After the first cell is discovered, the UE first performs cell selection/reselection, and then transmits an on-demand SSB/SIB; or the UE first transmits an on-demand SSB/SIB, and then performs cell selection/reselection.
(5) After the first cell is discovered, the UE transmits an on-demand SSB/SIB. In at least one embodiment, the UE transmits the on-demand SSB/SIB by using a specific configuration or resource request of the first cell.
(6) RACH: a RACH configuration is acquired from the first cell and RACH is performed on the first cell. For example, a beam direction or a RACH resource is determined by using an SSB for the first cell or a discovery signal/sequence of the first cell, and a RACH process is performed in the first cell.
(7) The first cell is a PCell.
(8) An NES-capable UE performs a legacy cell selection or legacy cell reselection process, or the first cell has a high priority or a low priority.
(9) After transmission of an SSB/SIB, an NES-capable UE performs a legacy cell selection or legacy cell reselection process, or the first cell has a high priority or a low priority.
(10) Before transmission of an SSB/SIB, the first cell is not allowed to be discovered by a legacy UE, or the first cell prevents access of a legacy UE.
(11) After transmission of an SSB/SIB, a legacy UE performs a legacy cell selection or legacy cell reselection process, or the first cell has a low priority.
(12) Paging: paging is acquired from the first cell. In at least one embodiment, a network transmits an SSB/SIB after a paging message, or a network transmits an SSB/SIB after a request from the UE. In at least one embodiment, after a paging message, the UE performs RACH or access by using stored SIB information.

In case 4, for a UE in a connected state (the first cell may be a PCell or a SCell of an NES-capable UE, and if the first cell is a SCell), the UE may perform one of the following.
(1) The UE performs RACH in the first cell to synchronize with uplink of the first cell; or if the first cell and the PCell are in a same TAG, synchronization is not required to be performed.
(2) A RACH configuration for the first cell may be acquired from dedicated RRC for the first cell, or may be acquired from dedicated RRC for the second cell.
(3) Before transmission of an SSB/SIB, the UE can perform measurement by using a CSI-RS.
(4) The UE may request the first cell to transmit SSB/SIB information of the first cell.
(5) The first cell is not required to receive a paging message.

In case 4, for a UE in a connected state (the first cell may be a PCell or a SCell of an NES-capable UE, and if the first cell is the PCell), the UE may perform one of the following.
(1) The UE performs RACH in the first cell to synchronize with uplink of the first cell; or if the first cell and the PCell are in a same TAG, synchronization is not required to be performed.
(2) A RACH configuration for the first cell may be acquired on-demand, or may be acquired from dedicated RRC of the first cell.
(3) The UE may request the first cell to transmit SSB/SIB information of the first cell.
(4) A paging message is received in the first cell.
(5) Handover: The UE is preferably handed over to the first cell, or the second cell, or another legacy cell.

### Embodiment 6

Embodiment 6 is intended to resolve a problem of how a terminal device requests a cell to hand over a cell status or perform transmission or resume transmission in a case of cell energy saving.

FIG. 10 is a schematic flowchart of a communication method according to an embodiment of this application. As shown in FIG. 10, the method may include step S1010. The following describes this step.

In step S1010, a terminal device transmits a request message. The request message is used for requesting a first cell/first base station to perform one or more of the following operations: changing a status of the first cell/first base station; transmitting information about the first cell/first base station; or requesting the first cell/first base station to perform transmission or resume transmission.

In some embodiments, the request message is transmitted in a case that the first cell supports or enters or is about to enter or is in a first status. For related descriptions of the first status, reference may be made to the foregoing description, and details are not described herein again.

In some embodiments, the change of a status of the first cell/first base station may include one or more of the following: the first cell/first base station has left the first status; the first cell/first base station enters a second status; information about the first cell is broadcast from or carried in the first cell; information of the first base station is broadcast from or carried in the first base station; information about the first cell is acquired from the first cell; information about the first base station is acquired from the first base station; information about the first cell is not broadcast from or carried in an anchor cell; or information about the first base station is not broadcast from or carried in an anchor base station. For related description of the second status, reference may be made to the description in Embodiment 4. Details are not described herein again.

In some embodiments, the information about the first cell/first base station (for example, the first information in Embodiment 1) may be used by the terminal device to access the first cell/first base station, or may be used by the terminal device to camp on the first cell/first base station, or may be used by the terminal device to discover/detect/measure the first cell/first base station, or may be used by the terminal device to receive paging information of the first cell/first base station.

In some embodiments, the information about the first cell may include one or more of the following information: a PUSCH, a PDSCH, a CG, SPS, a PRACH, an SR, an SRS, a CSI-RS, a reference signal, a PSS/SSS, a PDCCH, a PDCCH corresponding to data transmission, DCI, paging information, an SSB, at least part of SIBs, or a MIB.

In some embodiments, the request message may be used for requesting an anchor cell (for example, a second cell) to transmit the information about the first cell, or request the first cell to transmit information about a local cell. For example, the request message may be used for requesting the anchor cell or requesting the first cell to transmit at least one of an SSB/SIB/MIB for the first cell. In some embodiments, the request message may be further used for requesting whether information about the first cell is transmitted from the anchor cell or from the first cell. In some embodiments, the request message may be further used for requesting which information is transmitted from the anchor cell and/or which information is transmitted from the first cell.

In some embodiments, the terminal device learns, through an anchor cell/anchor base station, presence of the first cell/first base station. For example, the anchor cell/anchor base station may indicate the information about the first cell, so that the terminal device learns presence of the first cell/first base station. In some embodiments, the terminal device learns presence of the first cell/first base station through a discovery signal/sequence of the first cell/first base station. For example, the terminal device may learn presence of the first cell/first base station through a DRS signal or a DRS sequence for the first cell.

In some embodiments, the request message is transmitted by the terminal device in the first cell or in the anchor cell.

In some embodiments, if the request message is transmitted by the terminal device in the first cell, step S1010 may further include: transmitting, by the terminal device, a request message by using TA of an anchor cell (for example, a second cell), or transmitting, by the terminal device, a request message based on a cyclic-prefix (cyclic-prefix, CP) boundary. For example, the terminal device may consider that the first cell and the anchor cell have same TA and/or are synchronized, and thus may transmit a request message based on the TA of the anchor cell.

Carrying or a type of the request message is not limited in embodiments of this application. In some embodiments, the request message may be one or more of the following types: a dedicated RRC message; a WUS signal; an on-demand SSB/SIB/MIB. For example, the request message may be a dedicated RRC message, or may be a WUS signal, or may be a combination of a WUS signal and an on-demand SSB/SIB/MIB. In some embodiments, when a plurality of types of messages of the request message are combined, different messages may carry different content of the request message. For example, when the request message is a combination of a WUS signal and an on-demand SSB/SIB/MIB, the first cell may be requested to transmit an SSB/SIB/MIB by using the on-demand SSB/SIB/MIB, and data transmission is requested by using the WUS signal.

In some embodiments, if the request message is the on-demand SSB/SIB/MIB, the request message may further indicate an SSB/SIB/MIB that is requested or SSBs/SIBs/MIBs that are requested.

In some embodiments, the request message may carry indication information or identifier information. For example, the indication information is used for indicating that the message is for the first cell, or the identifier information is an identifier of the first cell.

In some embodiments, the request message is transmitted by the terminal device by using a preconfigured resource. For example, the terminal device transmits the request message in the first cell or in a second cell by using a preconfigured resource. In some embodiments, the preconfigured resource may be indicated or broadcast by the anchor cell/anchor base station (for example, a second cell/second base station), or may be preconfigured or saved by the terminal device.

Still referring to FIG. 10, in some embodiments, after step S1010, the method may further include step S1020. In step S1020, the first cell/first base station performs a corresponding operation according to the request message. For example, the first cell/first base station performs a status change according to the request message, or transmits the information about the first cell/first base station, or performs transmission or resumes transmission.

In some embodiments, the first cell performing transmission or resuming transmission may refer to that the first cell performs transmission or resume transmission of one or more of data/a signal/a channel.

In some embodiments, after the first cell/first base station performs a corresponding operation according to the request message, the first cell may not transmit a DRS or a cell discovery sequence or a simplified SSB for the first cell. For example, after the first cell changes from the first status to a second status, the first cell may not transmit the foregoing information. For another example, after the first cell performs transmission or resumes transmission, the first cell may not transmit the foregoing information. However, embodiments of this application are not limited thereto. After the first cell/first base station performs a corresponding operation according to the request message, the first cell may further continue to transmit the foregoing information, or may not transmit the foregoing information in a case of interaction with a base station.

In some embodiments, after the first cell/first base station performs the corresponding operation according to the request message, the first cell may not transmit the information about the first cell (for example, an SSB/SIB/MIB, association information between the first cell and the anchor cell, or a cell ID, a type, or a frequency of the first cell). For example, after the first cell changes from the first status to a second status, the first cell may not transmit the foregoing information. However, embodiments of this application are not limited thereto. After the first cell/first base station performs a corresponding operation according to the request message, the first cell may further continue to transmit the foregoing information, or may not transmit the foregoing information in a case of interaction with a base station.

### Embodiment 7

Embodiment 7 is intended to resolve a problem of what a terminal device should do when there is a conflict between DTX/DRX of a cell/base station and DTX/DRX of a terminal device (that is, determining behavior of the terminal device in a case of the foregoing conflict).

FIG. 11 is a schematic flowchart of a communication method according to an embodiment of this application. As shown in FIG. 11, the method may include step S1110. The following describes this step.

In step S1110, a terminal device performs transmission based on a DTX/DRX state of a first cell/first base station.

In some embodiments, the DTX/DRX state of the first cell/first base station is configured or indicated by a network. In some embodiments, the network may further configure or indicate the DTX/DRX state of the terminal device.

In some embodiments, when the first cell/first base station is configured with DTX/DRX and the terminal device is also configured with DTX/DRX, there may be a conflict between a DTX/DRX state of the first cell/first base station and a DTX/DRX state of the terminal device.

In some embodiments, in a case that the DTX/DRX state of the first cell/first base station conflicts with the DTX/DRX state of the terminal device, step S1110 may include one of the following: performing, by the terminal device, transmission following the DTX/DRX state of the first cell/first base station; performing, by the terminal device, transmission following the DTX/DRX state of the terminal device; or performing, by the terminal device, transmission according to a first rule; or transmitting, by the terminal device, a specific signal or channel or data; or transmitting, by the terminal device, no information other than a specific signal or channel or data.

In some embodiments, the first rule may be used for indicating one or more of the following information: whether the terminal device performs transmission following the DTX/DRX state of the first cell/first base station; whether the terminal device performs transmission following the DTX/DRX state of the terminal device; whether the terminal device performs transmission following the DTX/DRX state of the first cell/first base station or performs transmission following the DTX/DRX state of the terminal device; whether DTX/DRX of the first cell/first base station or DTX/DRX of the terminal device has a higher priority; priority information of DTX/DRX of the first cell/first base station and priority information of DTX/DRX of the terminal device; or whether the terminal device is allowed not to follow the DTX/DRX state of the first cell/first base station.

For example, the first rule may instruct the terminal device to perform transmission following the DTX/DRX state of the first cell/first base station. In this case, when the DTX/DRX state of the first cell/first base station conflicts with the DTX/DRX state of the terminal device, the terminal device is required to perform transmission following the DTX/DRX state of the first cell/first base station. Alternatively, the first rule may indicate priority information of DTX/DRX of the first cell/first base station and priority information of DTX/DRX of the terminal device. The terminal device may determine DTX/DRX with a higher priority according to respective priority information. In this case, the terminal device may perform transmission following the DTX/DRX with a higher priority. For example, if the terminal device determines that a priority of the DTX/DRX of the first cell/first base station is higher than that of DTX/DRX of the terminal device, the terminal device may perform transmission following the DTX/DRX state of the first cell/first base station. However, embodiments of this application are not limited thereto, and the terminal device may alternatively perform transmission following DTX/DRX with a lower priority. A specific behavior of the terminal device is described in the following for different conflict scenarios. Details are not described herein again.

In some embodiments, the first rule may be indicated by a network, or preconfigured, or predefined.

In some embodiments, the terminal device may transmit a specific signal or channel or data, or transmit first downlink information and/or first uplink information according to the DTX/DRX state of the first cell/first base station. Alternatively, the terminal device may determine, based on the DTX/DRX state of the first cell/first base station, whether to transmit a specific signal or channel or data, or whether to receive first downlink information or transmit first uplink information.

A type of a specific signal or channel or data that can be transmitted by the terminal device is not limited in embodiments of this application. For example, the specific signal or channel or data may include one or more of the following: a PDCCH, a PDSCH, an SPS, an RS, an SSB, a SIB, a paging message, a MIB, a WUS, a PUSCH, an SR, a PUCCH, a CG, an SRS, a measurement report, a RACH, a MAC CE, UCI, an on-demand MIB/SSB/SIB, or the like.

A type of at least one of the first downlink information or the first uplink information that can be transmitted by the terminal device is not limited in embodiments of this application. For example, the type of the first downlink information may include one or more of the following: a PDCCH, a PDSCH, an SPS, an RS, an SSB, a SIB, a paging message, a MIB, or a WUS. The type of the first uplink information may include one or more of the following: a PUSCH, an SR, a PUCCH, a CG, an SRS, a measurement report, a RACH, a MAC CE, UCI, a CSI-RS, an on-demand MIB/SSB/SIB, or a WUS.

In some embodiments, a type of downlink information that can be (supported) received by the terminal device or a type of uplink information that can be transmitted by the terminal device is indicated by a network, predefined, or preconfigured. For example, the type of at least one of the first downlink information or the first uplink information is indicated by a network, predefined, or preconfigured.

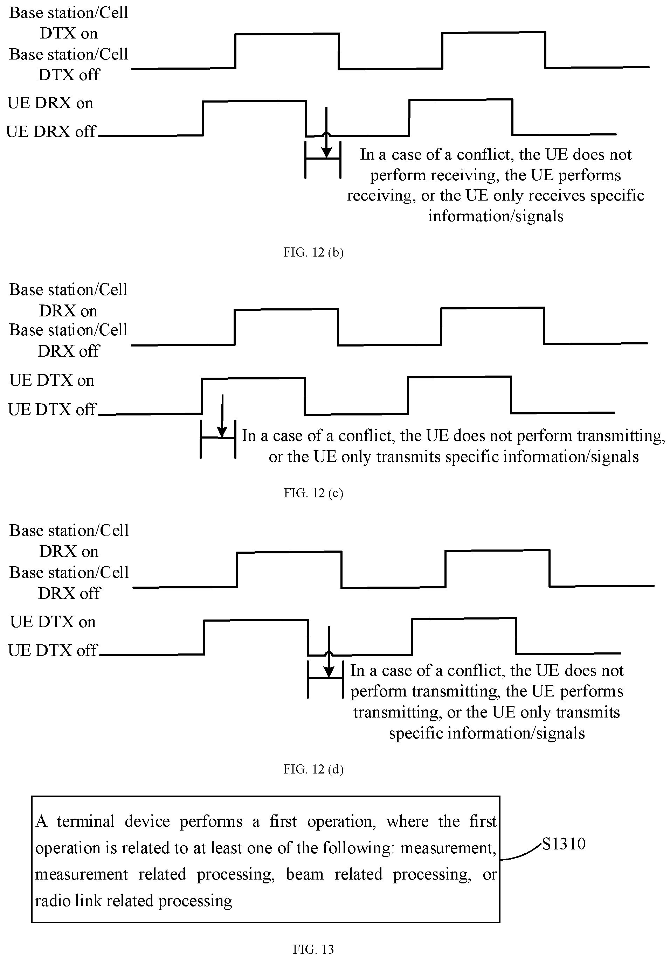

With reference to FIG. 12, the following describes behavior of the terminal device in various conflict cases depending on different cases in which a conflict occurs between the DTX/DRX state of the first cell/first base station and the DTX/DRX state of the terminal device.

As shown in FIG. 12(a), a scenario shown in FIG. 12(a) is that DRX on of the terminal device is in a period (duration) of DTX off of the first cell/first base station. In this case, behavior of the terminal device may be one of the following.

Behavior 1: The terminal device follows DTX of the first cell/first base station. In this case, the first cell/first base station is in a DTX off state, that is, the first cell/first base station does not transmit a signal/a channel/data. In this case, the terminal device follows the DTX of the first cell/first base station, and thus the terminal device may not receive a signal/a channel/data.

Behavior 2: The terminal device follows DRX of the terminal device. In this case, the terminal device is in a DRX on state. In this case, when there is a specific signal/a specific channel/specific data for transmission, the terminal device may transmit the specific signal/specific channel/specific data.

Behavior 3: The terminal device performs transmission according to the first rule. For example, it is determined, according to the first rule, whether to receive a PDCCH or whether to perform DL reception or whether to perform transmission of a specific signal/a specific channel/specific data. Assuming that the first rule is used for instructing the terminal device to follow the DRX of the terminal device, the terminal device may transmit the specific signal/specific channel/specific data when there is a specific signal/a specific channel/specific data.

Behavior 4: The terminal device transmits a specific signal/a specific channel/specific data, or the terminal device does not transmit information other than a specific signal/a specific channel/specific data. In this case, when there is a specific signal/a specific channel/specific data for transmission, the terminal device may transmit the specific signal/specific channel/specific data.

In the scenario of FIG. 12(a), the specific signal/specific channel/specific data may be equivalent to or replaced with the first downlink information described above. In other words, in this scenario, the specific signal/specific channel/specific data may include at least one of the following: a PDCCH, a PDSCH, an SPS, an RS, an SSB, a SIB, a paging message, a MIB, or a WUS.

As shown in FIG. 12(b), a scenario shown in FIG. 12(b) is that DRX off of the terminal device is in a period of DTX on of the first cell/first base station. In this case, behavior of the terminal device may be one of the following.

Behavior 1: The terminal device follows DTX of the first cell/first base station. In this case, the first cell/first base station is in a DTX on state, that is, the first cell/first base station is allowed to transmit a signal/a channel/data. In this case, the terminal device follows the DTX of the first cell/first base station, and thus the terminal device may receive a signal/a channel/data.

Behavior 2: The terminal device follows DRX of the terminal device. In this case, the terminal device is in a DRX off state. Thus, the terminal device may not receive a signal/a channel/data.

Behavior 3: The terminal device performs transmission according to the first rule. For example, it is determined, according to the first rule, whether to receive a PDCCH or whether to perform DL reception or whether to perform transmission of a specific signal/a specific channel/specific data. It is assumed that the first rule is used for instructing the terminal device to follow the DRX of the terminal device. In this case, the terminal device is in the DRX off state. Thus, the terminal device may not receive a signal/a channel/data.

Behavior 4: The terminal device transmits a specific signal/a specific channel/specific data, or the terminal device does not transmit information other than a specific signal/a specific channel/specific data. In this case, when there is a specific signal/a specific channel/specific data for transmission, the terminal device may transmit the specific signal/specific channel/specific data.

In the scenario of FIG. 12(b), the specific signal/specific channel/specific data may be equivalent to or replaced with the first downlink information described above. In other words, in this scenario, the specific signal/specific channel/specific data may include at least one of the following: a PDCCH, a PDSCH, an SPS, an RS, an SSB, a SIB, a paging message, a MIB, or a WUS.

As shown in FIG. 12(c), a scenario shown in FIG. 12(c) is that DTX on of the terminal device is in a period of DRX off of the first cell/first base station. In this case, behavior of the terminal device may be one of the following.

Behavior 1: The terminal device follows DRX of the first cell/first base station. In this case, the first cell/first base station is in a DRX off state, that is, the first cell/first base station does not receive a signal/a channel/data. In this case, the terminal device follows the DRX of the first cell/first base station, and thus the terminal device may not transmit a signal/a channel/data.

Behavior 2: The terminal device follows DTX of the terminal device. In this case, the terminal device is in a DTX on state. In this case, when there is a specific signal/a specific channel/specific data for transmission, the terminal device may transmit the specific signal/specific channel/specific data.

Behavior 3: The terminal device performs transmission according to the first rule. For example, it is determined, according to the first rule, whether to transmit a PUSCH or whether to perform UL transmission or whether to perform transmission of a specific signal/a specific channel/specific data. Assuming that the first rule is used for instructing the terminal device to follow the DTX of the terminal device, the terminal device may transmit the specific signal/specific channel/specific data when there is a specific signal/a specific channel/specific data for transmission.

Behavior 4: The terminal device transmits a specific signal/a specific channel/specific data, or the terminal device does not transmit information other than a specific signal/a specific channel/specific data. In this case, when there is a specific signal/a specific channel/specific data for transmission, the terminal device may transmit the specific signal/specific channel/specific data.

In the scenario of FIG. 12(c), the specific signal/specific channel/specific data may be equivalent to or replaced with the first uplink information described above. In other words, in this scenario, the specific signal/specific channel/specific data may include at least one of the following: a PUSCH, an SR, a PUCCH, a CG, an SRS, a measurement report, a RACH, a MAC CE, UCI, a CSI-RS, an on-demand MIB/SSB/SIB, or a WUS.

As shown in FIG. 12(d), a scenario shown in FIG. 12(d) is that DTX off of the terminal device is in a period of DRX on of the first cell/first base station. In this case, behavior of the terminal device may be one of the following.

Behavior 1: The terminal device follows DRX of the first cell/first base station. In this case, the first cell/first base station is in a DRX on state, that is, the first cell/first base station is allowed to receive a signal/a channel/data. In this case, the terminal device follows the DRX of the first cell/first base station, and thus the terminal device may transmit a signal/a channel/data.

Behavior 2: The terminal device follows DTX of the terminal device. In this case, the terminal device is in a DTX off state. Thus, the terminal device may not transmit a signal/a channel/data.

Behavior 3: The terminal device performs transmission according to the first rule. For example, it is determined, according to the first rule, whether to transmit a PUSCH or whether to perform UL transmission or whether to perform transmission of a specific signal/a specific channel/specific data. Assuming that the first rule is used for instructing the terminal device to follow the DTX of the terminal device, the terminal device may not transmit a signal/a channel/data.

Behavior 4: The terminal device transmits a specific signal/a specific channel/specific data, or the terminal device does not transmit information other than a specific signal/a specific channel/specific data. In this case, when there is a specific signal/a specific channel/specific data for transmission, the terminal device may transmit the specific signal/specific channel/specific data.

In the scenario of FIG. 12(d), the specific signal/specific channel/specific data may be equivalent to or replaced with the first uplink information described above. In other words, in this scenario, the specific signal/specific channel/specific data may include at least one of the following: a PUSCH, an SR, a PUCCH, a CG, an SRS, a measurement report, a RACH, a MAC CE, UCI, a CSI-RS, an on-demand MIB/SSB/SIB, or a WUS.

### Embodiment 8

Embodiment 8 is intended to resolve a problem of how to avoid a radio link failure or a beam failure of a terminal device due to measurement in a network energy saving scenario.

FIG. 13 is a schematic flowchart of a communication method according to an embodiment of this application. As shown in FIG. 13, the method may include step S1310. The following describes this step.

In step S1310, a terminal device performs a first operation. The first operation is related to at least one of the following: measurement, measurement related processing, beam related processing, or radio link related processing.

In some embodiments, in a case that a first condition is met, the terminal device performs step S1310.

In some embodiments, the first condition may include one or more of the following conditions: a first cell/first base station supports or enters or is about to enter or is in a first status; at least one of an SSB/MIB/SIB for the first cell is configured as an SSB/MIB/SIB with a long periodicity. For related descriptions of the first status, reference may be made to the foregoing description, and details are not described herein again.

In some embodiments, the SSB/MIB/SIB with a long periodicity may be an SSB/MIB/SIB whose periodicity is greater than a specific value (for example, a first threshold), or may be an SSB/MIB/SIB whose periodicity is greater than a threshold.

In some embodiments, the first operation may include one or more of the following operations: a first measurement or a first adjustment that is used for modifying a threshold for determining synchronization/out-of-synchronization of a radio link; first radio link monitoring (radio link monitoring, RLM) relaxation; first beam failure detection (beam failure detection, BFD) relaxation; first radio link failure (radio link failure, RLF) processing; or first beam recovery procedure (beam recovery procedure, BFR) processing.

In some embodiments, the first measurement or first adjustment may include modifying a threshold for determining "out-of-sync" and/or "in-sync". For example, the terminal device may reduce a threshold for "in-sync", so as to avoid an unnecessary RLF or beam failure or the like due to extension of measurement duration. A manner of modifying a threshold for determining synchronization/out-of-synchronization of a radio link is not limited in this application, for example, modifying a threshold by generating a proportion value of the threshold.

In some embodiments, the first RLF processing includes one or more of the following processing: configuring duration of a counter N310/N311, configuring duration of a timer T310/T311, skipping triggering of an RLF in a case that a timer T310 expires, requesting the first cell to leave the first status, transmitting an on-demand SSB/MIB/SIB/reference signal RS, stopping or suspending a timer T310, or stopping or resetting a counter N310. Configuring the duration of the counter N310/N311 and/or configuring the duration of the timer T310/T311 may avoid untimely changes in measurement results due to extension of a periodicity of a MIB/SSB or the like.

In some embodiments, two sets of N310/N311 duration may be configured for the terminal device, and/or two sets of T310/T311 duration may be configured, so that the terminal device may use one set of duration parameters when the first cell/first base station is in the first status and use the other set of duration parameters when the first cell/first base station is in a second status.

In some embodiments, the first BFR processing includes one or more of the following: configuring a beam failure instance maximum count (beamFailureInstanceMaxCount)/beam failure detection timer (beamFailureDetectionTimer)/beam failure recovery timer (beamFailureRecoveryTimer)/threshold of reference signal received power for an SSB (*rsrp-ThresholdSSB*)*,* threshold of reference signal received power for a BFR (*rsrp-ThresholdBFR*); stopping or suspending a beam failure detection timer/beam failure recovery timer, stopping or resetting a beam failure instance counter (BFI_COUNTER), skipping triggering of a BRF or indicating a beam failure to a higher layer; requesting a first cell to leave a first status; or transmitting an on-demand SSB/MIB/SIB/RS.

In some embodiments, the configuring a beam failure detection timer/beam failure recovery timer may refer to extend duration of a timer. In some embodiments, the configuring a threshold of reference signal received power for an SSB/threshold of reference signal received power for a BFR may refer to configuring a high threshold value or increasing a threshold value. In some embodiments, the configuring a beam failure instance maximum count may refer to configuring a maximum count of large beam failure instances, or increasing a value of the beam failure instance maximum count.

In some embodiments, skipping triggering of a BRF or indicating a beam failure to a higher layer; requesting a first cell to leave a first status; or transmitting an on-demand SSB/MIB/SIB/RS is triggered in a specific case. For example, in a case that a count of the beam failure instance counter is greater than or equal to the beam failure instance maximum count, BRF is not triggered or a beam failure is indicated to a higher layer and/or a first cell is requested to leave a first status and/or an on-demand SSB/MIB/SIB/RS is transmitted.

In some embodiments, two sets of BFR parameters may be configured for the terminal device, so that the terminal device may use one set of BFR parameters when the first cell/first base station is in the first status, and use the other set of BFR parameters when the first cell/first base station is in a second status.

In some embodiments, the first RLM relaxation includes one or more of following: relaxation of cell RLM measurement for all frequencies, or relaxation of cell RLM measurement for a high frequency/specific frequency. Relaxation of first RLM measurement can increase a measurement interval, so as to avoid an unnecessary RLF or beam failure caused by insufficient measurement quantity or extension of measurement duration.

In some embodiments, the first BFD relaxation includes one or more of following: relaxation of cell BFD measurement for all frequencies, or relaxation of cell BFD measurement for a high frequency/specific frequency. Relaxation of first BFD measurement can increase a measurement interval, so as to avoid an unnecessary RLF or beam failure caused by insufficient measurement quantity or extension of measurement duration.

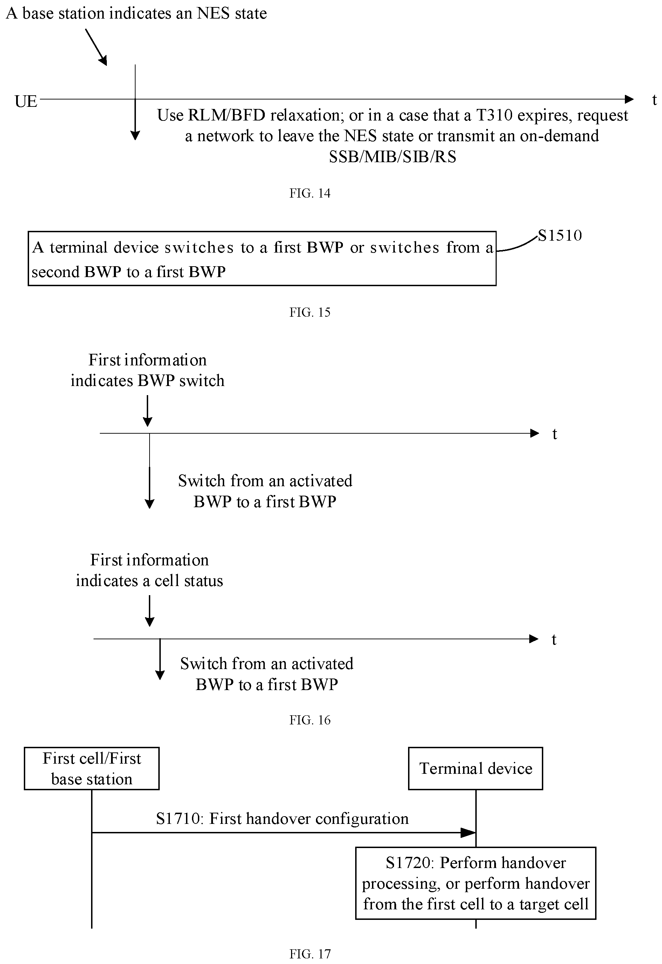

As shown in FIG. 14, in some embodiments, the terminal device may perform the first operation after receiving an indication of a network. In some embodiments, the indication of a network may be used for indicating that a first cell supports or enters or is about to enter or is in a first status. In some embodiments, the indication of a network may be used for indicating that at least one of an SSB/MIB/SIB for the first cell is configured as an SSB/MIB/SIB with a long periodicity.

### Embodiment 9

Embodiment 9 is intended to resolve the problem of how to perform a BWP switch in different network load conditions. In other words, Embodiment 9 provides a method for performing a BWP switch in network energy saving and non-network energy saving for a case of whether there is network energy saving or not.

It should be noted that in Embodiment 9, the BWP switch is used as an example for description. However, this embodiment is not limited thereto. The solution in Embodiment 9 may also be applicable to a scenario of a PCell switch and SCell reactivation.

It should be noted that the solution in Embodiment 9 may be applied to a terminal device in one of the following states: a terminal device in an idle state, a terminal device in an inactive state, and a terminal device in a connected state.

FIG. 15 is a schematic flowchart of a communication method according to an embodiment of this application. As shown in FIG. 15, the method may include step S1510. The following describes this step.

In step S1510, a terminal device switches to a first BWP, or switches from a second BWP to the first BWP.

The first BWP may be used for a cell/base station that supports or enters or is about to enter or is in a first status. The second BWP is a currently activated BWP, or a used BWP, or a BWP used before switching to the first BWP, or a BWP not corresponding to the first status. For detailed content of the first status, reference may be made to the foregoing description. Details are not described herein again.

In some embodiments, step S1510 is performed by the terminal device when the first cell/first base station supports or enters or is about to enter or is in the first status.

In some embodiments, the first BWP is preconfigured by a network, configured by using an RRC dedicated message, or predefined.

In some embodiments, a BWP configured by a network further includes a third BWP. The third BWP is used for a cell that is not in the first status, or is used for a cell that is about to leave the first status, or is used for a cell that has left the first status.

In some embodiments, the third BWP may be an initial BWP. However, embodiments of this application are not limited thereto. In some embodiments, the third BWP may be, for example, a default BWP.

In some embodiments, in a case that a third BWP is configured by a network, the method in Embodiment 9 may further include the following steps: in a case that the first cell is not in the first status, or is about to leave the first status, or has left the first status, switching, by the terminal device, from a current BWP to the third BWP or from the first BWP to the third BWP; or in a case that a BWP timer in the first status expires or is not in operation, switching, by the terminal device, from a current BWP to the third BWP or from the first BWP to the third BWP.

In some embodiments, a type of the third BWP and the type of the second BWP may be the same, for example, both may be a default BWP or an initial BWP, where the second BWP refers to a current BWP, and the third BWP is a BWP configured by a network and used in a non-first status or used in a second status. In some embodiments, the type of the third BWP may be different from the type of the second BWP. For example, the third BWP is an initial BWP, and the second BWP is a default BWP.

In some embodiments, when the first BWP and the third BWP are configured by a network, in a case that the network indicates the first status or the network is in the first status or the network indicates a BWP switch (for example, switching to the first BWP), the terminal device switches to the first BWP; in a case that the network indicates the second status or the network is in the second status or the network indicates a BWP switch (for example, switching to the second BWP), the terminal device switches to the third BWP. In other words, when the first BWP and the third BWP are configured by a network, the terminal device may switch between the first BWP and the third BWP.

In some embodiments, step S1510 may further include: switching, by the terminal device, to the first BWP or from the second BWP to the first BWP based on BWP information configured by the network.

In some embodiments, the BWP information configured by the network may include one or more of the following information: an indication or configuration for that the first cell/first base station is in the first status, an indication or configuration for indicating that the first cell/first base station switches to the first status, an indication for indicating that the terminal device switches to the first BWP, an identifier or indication of the first BWP, BWP mode information, status mode information of the first cell/first base station, a relationship between a BWP and a state of the first cell/first cell, or a relationship between a BWP and a state of the first base station/first base station.

In some embodiments, the network may configure the BWP information by using system information. For example, the network may configure the BWP information by using a SIB1, a MIB, or a dedicated SIB (for example, a new SIB). In some embodiments, the network may configure the BWP information by using dedicated RRC information. For example, for a terminal device in a connected state, the network may configure a BWP, and during configuration of the BWP, a BWP of a specific identifier is indicated. In some embodiments, the BWP of a specific identifier may be used for a cell/base station in the first status.

In some embodiments, the network may configure a relationship between a network status and a BWP, for example, an energy saving cell corresponds to an energy saving BWP, and a non-energy saving cell corresponds to a non-energy saving BWP. For example, assuming that the cell/base station in the first status corresponds to the first BWP, and a cell/base station in the second status is corresponding to the third BWP, the terminal device may determine or use a corresponding BWP according to a network status. In an example, when the network status is the first status, the terminal device determines that the first BWP is used; when the network state is the second status, the terminal device determines that the third BWP is used.

In some embodiments, the network may configure status mode information of the network, for example, configure status mode information of the first cell/first base station. For example, when a status of the first cell/first base station is the first status, a corresponding mode is a first mode; when a status of the first cell/first base station is the second status, a corresponding mode is a second mode.

In some embodiments, a network device may be configured with a relationship between a network status and a BWP, and a relationship between a network status and a status mode of a network. In this case, the terminal device may determine or use a corresponding BWP based on status mode information of the network. For example, when the status mode of the network is the first mode, a status corresponding to the network is the first status, and a BWP corresponding to the first status is the first BWP. In this case, the terminal device determines that the first BWP is used. Alternatively, when the status mode of the network is the second mode, a status corresponding to the network is the second status, and a BWP corresponding to the second status is the third BWP. In this case, the terminal device determines that the third BWP is used.

In some embodiments, the network may configure BWP mode information. In some embodiments, the BWP mode information configured by the network may include different BWPs used at different instants. In this case, the terminal device may determine or use a corresponding BWP based on the BWP mode information.

In some embodiments, the terminal device may perform a BWP switch, perform transmission or camping or measurement based on BWP information configured by the network.

In some embodiments, the switching, by a terminal device, to a first BWP or from a second BWP to a first BWP includes: switching, by the terminal device, to the first BWP or from the second BWP to the first BWP based on indication information of a network.

FIG. 16 is an example diagram in which a terminal device performs switch based on indication information of a network according to an embodiment of this application. As shown in FIG. 16, in some embodiments, the indication information of the network may mean that the network indicates status information of a first cell/first base station. For example, the indication information of the network may mean that the network indicates that the first cell/first base station is in a first status, or that the network is in a first status. In some embodiments, the indication information of the network may refer to BWP switchover information indicated by the network. For example, the indication information of the network may mean that the network instructs a terminal device to switch to a first BWP.

In some embodiments, the switching, by a terminal device, to a first BWP or from a second BWP to a first BWP includes: switching, by the terminal device, to the first BWP or from the second BWP to the first BWP based on a timer or a state of a timer.

In some embodiments, the switching, by a terminal device, to a first BWP or from a second BWP to a first BWP includes: immediately switching, by the terminal device, to the first BWP or from the second BWP to the first BWP.

In some embodiments, the switching, by a terminal device, to a first BWP or from a second BWP to a first BWP includes: switching, by the terminal device, to the first BWP at a switch time indicated by a network, or switching, by the terminal device, from the second BWP to the first BWP at a switch time indicated by a network.

In some embodiments, the switching, by a terminal device, to a first BWP or from a second BWP to a first BWP includes: determining, by the terminal device based on indication information of a network, a time for switching to the first BWP, or determining, by the terminal device based on indication information of a network, a time for switching from the second BWP to the first BWP.

In some embodiments, the switching, by a terminal device, to a first BWP or from a second BWP to a first BWP includes: determining, by the terminal device based on a timer, a time for switching to the first BWP, or determining, by the terminal device based on a timer, a time for switching from the second BWP to the first BWP.

In some embodiments, the timer may be predefined or configured by the network.

In some embodiments, the timer is for a BWP, or for a terminal device, or for a MAC entity, or for a BWP mode, or for a cell, which is not specifically limited in embodiments of this application.

In some embodiments, the timer may be used for an NES network or for using different BWPs for different network statuses.

In some embodiments, the timer may be used for switch between the first BWP and a third BWP. For example, when the first BWP is used, a timer corresponding to the first BWP is enabled, and when the timer corresponding to the first BWP expires, the terminal device switches to the third BWP. For another example, when the third BWP is used, a timer corresponding to the third BWP is enabled, and when the timer corresponding to the third BWP expires, the terminal device switches to the first BWP. For another example, when the terminal device switches to one BWP, a timer corresponding to the BWP is enabled, and when the timer corresponding to the BWP expires, the terminal device switches to a next BWP (for example, switching to a next BWP in a BWP mode).

### Embodiment 10

Embodiment 10 is intended to resolve a cell handover method in an energy saving state, so as to reduce a handover delay and implement a network energy saving effect.

FIG. 17 is a schematic flowchart of a communication method according to an embodiment of this application. As shown in FIG. 17, the method may include step S1710 and step S1720. The following describes these steps.

In step S1710, a terminal device receives a first handover configuration transmitted by a first cell/first base station. In other words, a network configures the first handover configuration for the terminal device. The first handover configuration includes handover configuration information for a plurality of cells. In some embodiments, a plurality of cells included in the first handover configuration may also be referred to as candidate cells.

In some embodiments, handover configuration information of each of the plurality of cells may include a handover ID. For example, the network may update (such as modify/release/add) a candidate cell in the first handover configuration or a handover configuration for a candidate cell based on the handover ID.

In some embodiments, the handover configuration information of each of the plurality of cells may include a handover configuration parameter for the cell, for example, may include part or all of parameters in an existing configuration RRCreconfiguration; for another example, may include a key (key) update parameter.

In some embodiments, the first handover configuration may include a configuration for a current handover, or a common parameter for all cells, for example, a T304, a security parameter, or the like.

In some embodiments, the first handover configuration is received by the terminal device in a first case, or the first handover configuration is configured by a network for the terminal device in a first case. The first case may include one or more of the following: the first cell/first base station is a cell or a base station that supports energy saving, the first cell/first base station is a cell or a base station that has an energy saving capability, the first cell/first base station supports a first status, the first cell/first base station is about to enter a first status, the first cell/first base station enters a first status, the first cell/first base station is in a first status, an SSB for the first cell is not transmitted, a MIB for the first cell is not transmitted or broadcast, part or all of SIBs for the first cell are not transmitted or broadcast, at least one of an SSB/a MIB/part or all of SIBs for the first cell is carried or broadcast by an anchor cell, the first cell is a non-anchor cell, or the first base station is a non-anchor base station For related descriptions of the first status, reference may be made to the foregoing description, and details are not described herein again.

In some embodiments, the first handover configuration may not include a handover execution condition for at least one or more cells in a plurality of cells. For example, in a case that a CHO command is reused, a handover execution configuration, such as condExecutionCond, is not included.

In some embodiments, the first handover configuration includes a handover execution condition for at least one cell in a plurality of cells, or a handover execution condition for a plurality of cells. For example, in a case that a CHO command is reused, a handover execution configuration, such as condExecutionCond, is included.

In some embodiments, in a case that the first handover configuration includes a handover execution condition for at least one cell in a plurality of cells, a handover of the terminal device may be triggered based on the handover execution condition for the at least one cell in the plurality of cells.

In some embodiments, the network may transmit an updated first handover configuration. For the updated handover configuration, the update may be transmitted before a case that a base station of any target cell indicates that a handover of the terminal device is completed, or indicates a similar function (for example, a network to which the terminal device belongs is allowed to be disabled, and the terminal device completes the handover).

In some embodiments, the first handover configuration further includes measurement configuration information and/or measurement reporting configuration information, the measurement configuration information is used by the terminal device to perform measurement on at least one cell in the plurality of cells, and/or the measurement reporting configuration information is used by the terminal device to report a measurement result of at least one cell in the plurality of cells. In at least one embodiment, the first handover configuration does not include performing a handover based on a measurement configuration. In some embodiments, the measurement may include an A3 measurement event, an A5 measurement event, a B1 measurement event, a B3 measurement event, and the like.

In some embodiments, the first handover configuration may include a relationship between a plurality of terminal devices and a terminal device group.

In some embodiments, the first handover configuration may include an identity of a terminal device group and/or an identity of a terminal device group RNTI.

In some embodiments, the first handover configuration may include an identity of a cell-specific (cell specific) RNTI, and the identity may be used for transmitting first signaling.

In step S1720, the terminal device performs handover processing, or performs handover from the first cell to a target cell.

In some embodiments, the handover is performed by the terminal device in a case that the terminal device receives the first signaling, or the handover is triggered based on the received first signaling. In this case, the cell handover may be understood as a handover triggered by the first handover configuration + the first signaling. It should be noted that, regardless of whether the first handover configuration includes the handover execution condition, a triggering manner of the first handover configuration + the first signaling may be used to perform cell handover.

In some embodiments, the handover is triggered based on a handover execution condition of at least one cell in the plurality of cells. In this case, the cell handover may be understood as a handover performed based on the first handover configuration (or the first handover configuration + the handover execution condition).

In some embodiments, the first signaling is used for instructing the terminal device to perform the foregoing handover or handover processing, or the first signaling is used for instructing the terminal device to hand over from the first cell to the target cell.

In some embodiments, the first signaling is configured by the network for the terminal device in the first case described above, for example, is configured for the terminal device in a case that the network supports the first status or network energy saving.

In some embodiments, the first signaling is scrambled by or corresponding to the terminal device group RNTI or the cell-specific RNTI, or scrambled by or corresponding to a terminal device-specific RNTI (for example, C-RNTI).

In some embodiments, the first signaling is for a terminal device group or a terminal device in a cell, or is for a terminal device.

In some embodiments, the first signaling may be an RRC message, a DL MAC CE, a PDCCH, or DCI.

In some embodiments, the first signaling may carry a parameter such as a T304, a security parameter, or the like for a terminal device group or a cell. In at least one embodiment, when there is a parameter such as T304 and key for the terminal device group or cell in the first signaling, the terminal device uses the parameter such as T304 and key for the terminal device group or cell, and/or ignores a same parameter configured in step S1710.

In some embodiments, the first signaling may carry a handover ID, or indicate a cell ID to which the terminal device is handed over.

In some embodiments, the first signaling may carry TA information, for example, carrying TA corresponding to a cell to which the terminal device is to be handed over, or an offset between TA corresponding to a cell to which the terminal device is to be handed over and TA of a current cell.

In some embodiments, the method further includes: enabling, by the terminal device, a timer T304 when receiving the first signaling; or enabling, by the terminal device, a timer T304 when receiving the first handover configuration. In this case, step S1720 may further include: before the timer T304 expires, handing over, by the terminal device, from the first cell to the target cell. In some embodiments, the target cell may be a cell corresponding to the handover ID carried in the first signaling, or a cell corresponding to the cell ID to which the terminal device is handed over is indicated in the first signaling.

In some embodiments, the method further includes: when the timer T304 expires, in a case that the terminal device does not access the target cell, indicating, by the terminal device, handover failure information in the first cell.

In some embodiments, the method further includes: when the timer T304 expires, in a case that the first cell does not receive indication information of the target cell (for example, indicating that a handover of the terminal device is completed, or terminal devices that complete a handover, or indicating a similar function (for example, a network to which the terminal device belongs is allowed to be disabled, and the terminal device complete a handover)), receiving, by the terminal device, the first signaling again, or retransmitting, by the network, the first signaling.

In some embodiments, the method further includes: when the timer T304 expires, in a case that the first cell does not receive handover complete indication information transmitted by all terminal devices, or transmitted by any terminal device, or transmitted by part of terminal devices, receiving, by the terminal device, the first signaling again or receiving, by the terminal device, a handover command for the terminal device, or retransmitting, by the network, the first signaling or a handover command for the part that does not receive the handover complete indication information, for example, an existing handover command may be transmitted, for example, a one-to-one corresponding handover command between a network and a terminal device.

In some embodiments, if a terminal device that is not handed over or fails to be handed over is determined by the network based on third information transmitted by the target cell, the network may retransmit the first signaling or a handover command for the terminal device that is not handed over or fails to be handed over, for example, an existing handover command may be transmitted, for example, a one-to-one corresponding handover command between a network and a terminal device.

In some embodiments, the terminal device performs a RACH procedure in a target cell that a handover is to be performed, and synchronizes with the target cell based on TA information carried in first handover configuration information or TA information carried in the first signaling.

In some embodiments, the terminal device performs a RACH procedure in a cell that a handover is to be performed, or transmits first information to indicate a cell/ a base station of a cell that a handover is to be performed, and the terminal device completes a handover.

In some embodiments, in a process of performing a handover in a cell that a handover is to be performed, or in a case that a handover is complete, the terminal device indicates a terminal device identity (such as C-RNTI) of the terminal device in a first cell (a source cell). The target cell indicates, to a first base station based on the terminal device identity of the terminal device in the first cell, a terminal device that the handover is successful/completed. (For example, a base station of a target cell forwards the terminal device identity to the first base station).

In some embodiments, after completing a handover in a cell that a handover is to be performed, the terminal device indicates, to the first cell (the source cell) by using second information, that the handover is completed. In at least one embodiment, the terminal device identity (such as a C-RNTI) and/or an identity (such as a cell ID or a handover ID) of a cell in which handover is completed may be carried.

In some embodiments, after the handover of the terminal device is complete, the network enters the first status, or at least one of an SSB/MIB/(part or all of) SIBs of the network is carried or broadcast by another cell (for example, a second cell), or the network is a network or a cell of a specific identity (for example, a non-anchor cell).

In some embodiments, in a case that the handover is completed, or in a case that the foregoing indication information is transmitted to the first base station (a source base station) or a target base station, the terminal device deletes or suspends (suspend) the first handover configuration.

In some embodiments, in a case that the terminal device meets a handover execution condition in a plurality of candidate cells, the terminal device may perform handover (a cell with higher priority first) based on a priority of the candidate cells (for example, a configuration in the first handover configuration or indicated in the first signaling). In some embodiments, the terminal device may perform handover based on a location/channel quality of a candidate cell (a cell of higher channel quality first, a cell whose location closer to a location of the terminal device first, a cell at a specific location first, and a cell with wide coverage first).

In some embodiments, when a handover of a cell with a higher priority fails, the terminal device performs handover in a cell with priority next to the cell with a higher priority (In at least one embodiment, the terminal device may attempt X times of handovers, where X is preconfigured, for example, configured in the first handover configuration or indicated in the first signaling. In at least one embodiment, the terminal device may attempt M times of handovers in each cell, where M is preconfigured, for example, configured in the first handover configuration or indicated in the first signaling). In at least one embodiment, the terminal device or the cell to which the terminal device is handed over may indicate, to a source base station, at least one of a cell or cell list to which the terminal device is successfully handed over, a cell or a cell list to which the terminal device fails to be handed over, a cell that the terminal device attempts, or a quantity of failures.

For ease of understanding, the following describes the technical solutions of this application with reference to several specific examples.

It should be noted that the following examples may be implemented either alone or in any combination, which is not limited in embodiments of this application.

### Example 1

A solution in Example 1 may be for acquiring at least one of an SSB/MIB/SIB for a first cell/first base station.

An applicable scenario of Example 1 may include one or more of the following: (1) An SSB (MIB) for the first cell is carried/transmitted/indicated in the first cell, and a SIB for the first cell is carried/transmitted/indicated in a second cell; (2) an SSB for the first cell is carried/transmitted/indicated in the first cell, and a MIB and a SIB for the first cell are carried/transmitted/indicated in a second cell. (3) a MIB and a SIB for the first cell are carried/transmitted/indicated in a second cell; (4) an SSB and a MIB and a SIB for the first cell are carried/transmitted/indicated in a second cell; or (5) other cases: at least one of an SSB/MIB/SIB for the first cell is carried/transmitted/indicated in a second cell.

In some embodiments, the first cell may be referred to as a non-anchor cell, and the second cell may be referred to as an anchor cell. In some embodiments, one anchor cell may correspond to one or more non-anchor cells.

A specific implementation process of acquiring at least one of an SSB/MIB/SIB for the first cell is as follows:

In step 1, a terminal device acquires or reads first information of the first cell/first base station.

In some embodiments, the first information includes at least one of the following: at least one of SSB/MIB/SIB information of the first cell/first base station.

In some embodiments, the acquiring the first information of the first cell/first base station may indicate acquiring or reading the first information of the first cell/first base station by using a second cell.

In some embodiments, at least one of the following manners may be used to determine how to acquire the first information of the first cell/first base station, or determine a cell or a base station from which to acquire the first information of the first cell/first base station, or receive or acquire the first information of the first cell/first base station, or determine that the first information of the first cell/first base station is acquired from the second cell, or determine whether to acquire the first information of the first cell/first base station from the second cell. (The following uses an anchor cell and a non-anchor cell as an example).

Manner 1: The first cell indicates association information, or indicates type information (or referred to as a specific type), or indication information of acquisition of the first information. Manner 1 is described in detail in the following.

In at least one embodiment, the first cell may perform indication by using one or more of the following. For example, indication may be performed by using a MIB or part of system information (such as a simplified SIB1, and a SIB1) of the first cell, or a specific SSB (namely, some SSBs, such as a specially configured SSB), or a dedicated RRC message (for example, for a terminal device in a connected state), a specific synchronization or reference signal, or the like.

In at least one embodiment, the first cell may indicate that the first cell is associated with the second cell. In at least one embodiment, the first cell may indicate at least one of a frequency, TA, a cell ID, or the like of the second cell. In at least one embodiment, the first cell may indicate a type of the second cell, for example, an anchor cell.

In at least one embodiment, the second cell may broadcast or carry the first information of the first cell by using an existing SIB or a new SIB (dedicated).

In at least one embodiment, the first cell may instruct the terminal device not to acquire the first information from a non-anchor cell, or acquire the first information (which may be understood as the indication information of acquisition of the first information) from an anchor cell.

In at least one embodiment, the first cell may indicate a MIB, a SIB, SIBs, and SSBs included in the first information.

In at least one embodiment, the terminal device does not acquire the first information from a non-anchor cell or acquires the first information from an anchor cell until a state of the first cell changes (for example, the first cell is on, not off, is not in an energy saving state, is not in an NES state, and may broadcast the first information, or is not in the first status), or the terminal device receives indication information of acquisition of new first information (for example, acquiring from a non-anchor cell, or acquiring from a local cell).

In at least one embodiment, the first cell may indicate that the first cell is a cell of a specific type, for example, a non-anchor cell.

For example, a corresponding anchor cell may broadcast or indicate a SIB and/or a MIB of a non-anchor cell. The terminal device acquires first information of the non-anchor cell by reading broadcast of the anchor cell or acquired an indication of the anchor cell.

Manner 2: The second cell indicates association information, or indicates type information (or referred to as a specific type), or indication information of acquisition of the first information. Manner 2 is described in detail in the following.

In at least one embodiment, the second cell may perform indication by using one or more of the following. For example, indication may be performed by using a MIB or system information (such as a SIB1, another existing SIB, or a new SIB) or a dedicated RRC message of the second cell.

In at least one embodiment, the second cell may indicate that the first cell is associated with the second cell. In at least one embodiment, the second cell may indicate at least one of a frequency, TA, a cell ID, or the like of the first cell. In at least one embodiment, the second cell may indicate a type of the first cell, for example, a non-anchor cell.

In at least one embodiment, the second cell may indicate a MIB, a SIB, SIBs, and SSBs included in the first information.

In at least one embodiment, the second cell may broadcast or carry the first information of the first cell by using an existing SIB or a new SIB (dedicated).

In at least one embodiment, the second cell may indicate that the second cell is a cell of a specific type, for example, an anchor cell.

In at least one embodiment, the second cell may instruct the terminal device not to acquire the first information from a non-anchor cell, or acquire the first information (which may be understood as the indication information of acquisition of the first information) from an anchor cell.

In at least one embodiment, the terminal device does not acquire the first information from a non-anchor cell or acquires the first information from an anchor cell until a state of the first cell changes (for example, the first cell is on, not off, is not in an energy saving state, is not in an NES state, and may broadcast the first information, or is not in the first status), or the terminal device receives indication information of acquisition of new first information (for example, acquiring from a non-anchor cell, or acquiring from a local cell).

For example, a corresponding anchor cell may broadcast or indicate a SIB and/or a MIB of a non-anchor cell. The terminal device acquires first information of the non-anchor cell by reading broadcast of the anchor cell or acquired an indication of the anchor cell.

Manner 3: The second cell broadcasts or indicates the first information of the first cell, and indicates that the first cell is in a first status or indication information of acquisition of the first information. Manner 3 is described in detail in the following.

In at least one embodiment, the first information of the first cell and information indicating that the first cell is in the first status may be carried in one message or in different messages.

In at least one embodiment, the first status is one or more of the following: an off state, an energy saving state, an NES state, a network DTX/DRX state, or a network DTX/DRX off state. In at least one embodiment, the first status may be extended to a state of acquiring first information of a non-anchor from an anchor, or a state of not acquiring first information from a non-anchor.

In at least one embodiment, the second cell broadcasts or carries the first information of the first cell by using an existing SIB or a new SIB (dedicated).

In at least one embodiment, the second cell may indicate a MIB, a SIB, SIBs, and SSBs included in the first information.

In at least one embodiment, the second cell may perform indication by using a MIB or system information (such as a SIB1, another existing SIB, or a new SIB) or a dedicated RRC message of the second cell.

In at least one embodiment, the second cell may instruct the terminal device not to acquire the first information from a non-anchor cell, or acquire the first information (which may be understood as the indication information of acquisition of the first information) from an anchor cell.

In at least one embodiment, the terminal device does not acquire the first information from a non-anchor cell or acquires the first information from an anchor cell until a state of the first cell changes (for example, the first cell is on, not off, is not in an energy saving state, is not in an NES state, and may broadcast the first information, or is not in the first status), or the terminal device receives indication information of acquisition of new first information (for example, acquiring from a non-anchor cell, or acquiring from a local cell).

In at least one embodiment, the second cell may indicate that the first cell is associated with the second cell. In at least one embodiment, the second cell may indicate at least one of a frequency, TA, a cell ID, or the like of the first cell. In at least one embodiment, the second cell may indicate a type of the first cell, for example, a non-anchor cell.

In at least one embodiment, the second cell may indicate that the second cell is a cell of a specific type, for example, an anchor cell.

For example, a corresponding anchor cell may broadcast or indicate a SIB and/or a MIB of a non-anchor cell. The terminal device acquires first information of the non-anchor cell by reading broadcast of the anchor cell or acquired an indication of the anchor cell.

For example, correspondingly, the terminal device does not acquire the first information from a non-anchor cell.

Manner 4: A third cell indicates second information, and the second information is used for indicating that the first information of the first cell is broadcast or indicated in a second cell/ second base station. Manner 4 is described in detail in the following.

In at least one embodiment, the third cell may further indicate a MIB, a SIB, SIBs, and SSBs included in the first information.

In at least one embodiment, the second cell broadcasts or carries the first information of the first cell by using an existing SIB or a new SIB (dedicated).

In at least one embodiment, the third cell may perform indication by using a MIB or system information (such as a SIB 1, another existing SIB, or a new SIB) or a dedicated RRC message of the third cell.

In at least one embodiment, the third cell may instruct the terminal device not to acquire the first information from the first cell or acquire the first information from the second cell.

In at least one embodiment, the terminal device does not acquire the first information from the first cell or acquires the first information from the second cell until a state of the first cell changes (for example, the first cell is on, not off, is not in an energy saving state, is not in an NES state, and may broadcast the first information, or is not in the first status), or the terminal device receives indication information of acquisition of new first information (for example, acquiring from a non-anchor cell, or acquiring from the first cell according to the indication).

In at least one embodiment, the third cell may indicate that the first cell is associated with the second cell.

In at least one embodiment, the third cell may indicate at least one of a frequency, TA, a cell ID, or the like of the first cell; and/or the third cell may indicate at least one of a frequency, TA, a cell ID, or the like of the second cell.

In at least one embodiment, the third cell may indicate a type of the first cell (for example, a non-anchor cell) and/or a type of the second cell (for example, an anchor cell).

In at least one embodiment, the second cell may be an anchor cell.

For example, a corresponding second cell may broadcast or indicate a SIB and/or a MIB of the first cell. The terminal device acquires the first information of the first cell by reading broadcast of the second cell or acquires an indication of the second cell.

For example, correspondingly, the terminal device does not acquire the first information from the first cell.

In some embodiments, the second cell transmits or broadcasts or carries the first information of the first cell in a first condition. For example, the first condition includes at least one of the following: (1) the first cell is in a first status, or the second cell learns that the first cell is in a first status; (2) the first cell is a non-anchor cell of the second cell, or the first cell is a non-anchor cell of the third cell; (3) the first cell requests the second cell to transmit or carry or broadcast the first information of the first cell; (4) the second cell is an anchor cell or has a capability of transmitting the first information of the first cell; or (5) the second cell receives a request from the terminal device for transmitting the first information of the first cell. For example, a terminal device that camps on or accesses the second cell may request the second cell to transmit or broadcast or carry the first information in one or more of the following cases: the second cell broadcasts that the cell may broadcast the first information of the first cell, or indicate that the cell is an anchor cell of the first cell, or indicates that the non-anchor cell does not broadcast the first information.

### Example 2

A solution in Example 2 may be used either alone or in combination with the solution in Example 1.

It is assumed that a RACH resource of a first cell is configured by using a second cell (for example, an anchor cell), or a RACH resource of a first cell is broadcast by using the first cell. In this case, a UE triggering a RACH may include the following two cases (case).

Case 1: If there is a first cell (for example, a cell for a base station in R18, a cell that supports a network energy saving base station, or a cell of a base station that performs network energy saving), or an SSB for the first cell is carried in the second cell (for example, an anchor cell), when a terminal device triggers a RACH (for example, the two cells belong to a same TAG, but the terminal device is not connected), the following possible solutions are provided.

Solution 1: msg2/msg4/msgB/msg0 is received in the second cell (for example, an anchor cell), and msg1/msg3/msgA is transmitted in the first cell (for example, an SSB corresponding to a RACH resource selected from a non-anchor cell is an SSB corresponding to the first cell selected from the second cell).

Solution 2: msg2/msg4/msgB/msg0 is received in the second cell (for example, an anchor cell), and msg1/msg3/msgA is transmitted in the second cell (for example, an SSB corresponding to a RACH resource selected from the second cell is an SSB corresponding to the first cell selected from the second cell).

Solution 3: msg2/msg4/msgB/msg0 is received in the first cell (for example, a non-anchor cell) (for example, an SSB corresponding to a RACH resource selected from the non-anchor cell is an SSB corresponding to the first cell selected from the second cell), and msg1/msg3/msgA is transmitted in the first cell (for example, an SSB corresponding to a RACH resource selected from the non-anchor cell is an SSB corresponding to the first cell selected from the second cell).

Case 2: If there is a first cell (for example, a cell for a base station in R18, a cell that supports a network energy saving base station, or a cell of a base station that performs network energy saving), or an SSB for the first cell is carried in the first cell (for example, a non-anchor cell), and only a SIB or a MIB is transmitted in the second cell, when a terminal device triggers a RACH, msg 2/msg 4/msg B/msg0 is received in the first cell (for example, a non-anchor cell) (for example, a selected SSB), and msg1/msg3/msgA is transmitted in the first cell (for example, an SSB corresponding to a RACH resource selected from the non-anchor cell is an SSB selected from SSBs transmitted from the first cell).

### Example 3

A solution in Example 3 may be for a terminal device to perform cell selection or cell reselection. The solution in Example 3 may be used either alone or in combination with the solution in Example 1.

In some embodiments, when performing cell selection or cell reselection, a UE does not consider whether there is a first cell (for example, a cell for a base station in R18, a cell that supports a network energy saving base station, or a cell of a base station that performs network energy saving), or whether a first cell is in a first status, or whether at least one of an SSB/a MIB/(part of or all of) SIBs for the first cell is carried or broadcast by using another cell (for example, a second cell), or whether a first cell is a cell with a specific identifier (for example, a non-anchor cell). In this case, the UE may be a legacy UE, or UE that does not support network energy saving.

In some embodiments, in cell selection or cell reselection, the UE may perform a cell selection or cell reselection process based on channel quality and/or a frequency priority. If channel quality and/or a frequency priority of the first cell is different from channel quality and/or a frequency priority of a non-specific cell (a legacy cell, for example, a cell that is not in a first status, an anchor cell, a non-energy saving cell or the like), the UE performs cell selection or cell reselection based on the channel quality and/or the frequency priority (legacy). If the channel quality and/or frequency priority of the first cell is the same as the channel quality and/or frequency priority of a non-specific cell, cell selection or cell reselection may be performed by selecting the first cell or the non-specific cell based on one or more of the following: (1) being implemented by a UE; (2) the first cell is preferentially selected; (3) a non-specific cell is preferentially selected; (4) a cell is selected according to a proportion (for example, randomly selecting a number to roll a die, where when the number ranges from A to B (for example, 0-1), the first cell is selected; otherwise a non-specific cell is selected; or vice versa). In this case, the UE may be a UE that supports network energy saving. Further, the first cell may be understood as follows: the first cell is in the first status, or at least one of an SSB/a MIB/(part of or all of) SIBs for the first cell is carried or broadcast by using another cell (for example, the second cell), or the first cell is a cell with a specific identifier (for example, a non-anchor cell).

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for the first cell is carried or broadcast by using another cell (for example, the second cell), or the first cell is a cell with a specific identifier (for example, a non-anchor cell), the UE may not consider the first cell in the process of cell selection or cell reselection or cell measurement, for example, the first cell is not considered by the UE within 300s or the first cell is not considered until a state of the first cell is changed (for example, left the first status), or in the process of cell selection or cell reselection or cell measurement, the UE consider that the first cell is not the best cell (best cell) or the highest ranked cell (highest ranked cell), or the UE sets a frequency of the first cell to a low-priority frequency (or lower than another frequency, or lower than a frequency priority configured by a network, or lower than a frequency of another cell).

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), the UE considers that the first cell and/or a same frequency of the first cell is barred (barred) or cellbarred (cellbarred); or the UE considers that the first cell or a same frequency of the first cell has a low priority; or the UE does not access the first cell. Further, within a specific period of time, the UE considers that the first cell and/or the same frequency of the first cell is barred or cellbarred, for example, is not considered by the UE within 300s or is not considered until a state of the first cell is changed (for example, left the first status). In at least one embodiment, the UE is a legacy UE, or a UE that does not support network energy saving.

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), an NES UE (or referred to as a UE that supports network energy saving) considers that the first cell or a same frequency UE in the first cell is a high priority frequency (or higher than a priority of another frequency, or a frequency configured by a network, or a frequency of another cell) or the best cell or the highest ranked cell. Further, within a specific period of time, the UE considers that the first cell or a same frequency of the first cell is a high priority frequency (or higher than a priority of another frequency, a frequency configured by a network, or a frequency of another cell) or the best cell or the highest ranked cell, for example, is not considered by the UE within 300s or is not considered until a state of the first cell is changed (for example, left the first status).

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), the NES UE considers that the first cell or a same frequency UE of the first cell is a high priority frequency (or higher than a priority of another frequency, or a frequency configured by a network, or a frequency of another cell) or selects the cell or frequency, or the best cell or the highest ranked cell. In at least one embodiment, in another case (for example, in a cell non-energy saving state or a cell DTX/DRX off state, or the like), the UE selects another cell or a non-specific cell (legacy cell). Further, in a specific period of time, the UE considers that the first cell is not considered, for example, not considered within 300s, or not considered until a state of the specific cell is changed (for example, left the first status). In at least one embodiment, the UE is a UE that supports network energy saving.

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), the UE considers that a measurement result of the second cell may be used as a measurement result of the first cell. For example, the measurement result of the second cell or a deformation of the measurement result (for example, the measurement result of the second cell + offset) serves as a measurement result of the first cell. For another example, a measurement result of an SSB corresponding to the first cell and carried in the second cell is the measurement result of the first cell. Further, within a specific period of time, the UE considers that the first cell and/or a same frequency of the first cell is barred or cellbarred, for example, is not considered by the UE within 300s or not considered until a state of a specific cell is changed (for example, left the first status).

In some embodiments, during cell selection or cell reselection, if a discovery signal of the first cell is transmitted but an SSB/SIB is not transmitted, the UE performs legacy cell selection or legacy cell reselection, that is, performs a cell selection or cell reselection process based on channel quality and/or a frequency priority. In at least one embodiment, cell selection or cell reselection is performed based on measurement of a cell discovery signal. In at least one embodiment, the UE is a UE that supports network energy saving. If a discovery signal of the first cell is transmitted and an SSB/SIB is also transmitted, or an SSB/SIB is communicated, or an on-demand SSB/SIB is transmitted, a legacy UE or a UE that does not support network energy saving performs legacy cell selection or legacy cell reselection, or the first cell has a low priority/is not selected or barred. The UE that supports network energy saving performs cell selection or cell reselection for a network energy saving cell (for example, the first cell has a low priority or high priority) based on a network state.

In some embodiments, for a case in which both an SSB and a SIB for the first cell are carried in the first cell, or a SIB for the first cell is carried in the first cell while an SSB for the first cell is carried in the second cell, or both an SSB and a SIB for the first cell are carried in the second cell, the UE may perform measurement and/or cell selection/reselection based on a cell discovery signal or a simplified SSB.

For example, in some implementations, cell selection/cell reselection is another thing to be considered in RAN2. For an NES-capable UE, a cell NES state/information can be used for a proper cell selection/reselection. For example, the NES-capable UE can prioritize an NES cell for load balance. Another case is the NES-capable UE can deprioritize a cell in an NES state for good performance and prioritize a cell in a non-NES state for load balance. (Cell selection/reselection is another thing to be considered in RAN2. For NES-capable UE, the cell NES state/information can be used for a proper cell selection/reselection. For example, the NES-capable UE can (de)prioritize the NES cell for load balance. Another case is the NES-capable UE can deprioritize the cell in the NES state for a good performance and prioritize the cell in non-NES state for the load balance.)

It is assumed that a legacy UE cannot be informed of the cell NES state/information. If that is the case, RAN2 needs to consider how to assure the legacy UE experience and the backward compatibility. (We assume the legacy UE cannot be informed of the cell NES state/information. If that is the case, RAN2 needs to consider how to assure the legacy UE experience and the backward compatibility.)

### Example 4

A solution in Example 4 may be applied to paging between a cell and a UE, for example, paging in a case where at least part of each of a first cell and a second cell are commonly covered. It should be noted that the solution in Example 4 may be used either alone or in combination with the solution in Example 1.

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), the first cell transmits a paging message. Further, the second cell transmits paging configuration information for receiving paging in the first cell. In at least one embodiment, a paging location of the first cell is specifically configured, and the specific location may be a subset of an existing paging configuration.

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), when there is a paging message, an anchor cell instructs the first cell to leave the first status, or transmits an SSB/MIB/SIB (for example, for SI change), or enters a second status, or performs or resumes transmission. In at least one embodiment, the paging is transmitted in the first cell. In at least one embodiment, for a definition of the second status, reference may be made to the foregoing description. Details are not described herein again.

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), when there is a paging message, a UE performs synchronization by using synchronization/beam information of an anchor cell, or a DRS of a specific cell, and then receives a paging message in a non-anchor cell.

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), the second cell transmits paging. Further, the second cell or the paging message indicates that the paging is for the first cell, and/or indicates that the UE accesses from the first cell.

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), when the first cell is a PCell, the UE listens to paging in the first cell.

In some embodiments, if there is a first cell (for example, a cell for a base station in R18, a cell that supports a network energy saving base station, or a cell of a base station that performs network energy saving), or the first cell is in the first status, or at least one of an SSB/a MIB/(part of or all of) SIBs for a specific cell is carried or broadcast by using another cell (for example, the second cell), or the first cell is a cell with a specific identifier (for example, a non-anchor cell), when the first cell is a PSCell or an SCell, the UE does not listen to paging in the first cell and/or the UE listens to paging in an anchor cell.

In some embodiments, after paging is received, or in the case that there is paging for the first cell, a network triggers transmission of an SSB/SIB for the first cell, or the UE transmits an on-demand SSB/SIB, or considers that a previously stored SSB/SIB information is available.

### Example 5

A solution in Example 5 may be for synchronization between a UE and a first cell. The synchronization between the UE and the first cell may include the following two cases.

Case 1: If there is a first cell (for example, a cell for a base station in R18, a cell that supports a network energy saving base station, or a cell of a base station that performs network energy saving), or an SSB for the first cell is carried in a second cell (for example, an anchor cell), the UE performs synchronization based on a Cell-defined SSB corresponding to the first cell and carried in a second cell; or the UE acquires information about the SSB for the first cell based on an SSB and/or a SIB of a second cell (for example, acquires a position of the SSB for the first cell or acquires a synchronization error between the first cell and the second cell), and synchronizes with the first cell.

Case2: If there is a first cell (for example, a cell for a base station in R18, a cell that supports a network energy saving base station, or a cell of a base station that performs network energy saving), or an SSB for the first cell is carried in a second cell (for example, an anchor cell), or a DRS for the first cell is synchronized, the UE performs synchronization based on a Cell-defined SSB for the first cell.

### Example 6

A solution in Example 6 may be for a second cell to broadcast information about a first cell. The second cell broadcasting information about the first cell may include the following two cases.

Case 1: If there is a first cell (for example, a cell for a base station in R18, a cell that supports a network energy saving base station, or a cell of a base station that performs network energy saving), or an SSB for the first cell is carried in a second cell (for example, an anchor cell), the second cell broadcasts one of the following information indications: an SSB configuration or location of the first cell, or a synchronization difference between the first cell and the second cell.

In at least one embodiment, if a SIB for the first cell is carried in the second cell (for example, an anchor cell), the second cell broadcasts the SIB information of the first cell.

In at least one embodiment, if the SIB for the first cell is carried in the first cell, the second cell is not required to broadcast the SIB information of the first cell, or the second cell indicates a bearer period/a resource location or the like of the SIB information of the first cell.

Case 2. If there is a first cell (for example, a cell for a base station in R18, a cell that supports a network energy saving base station, or a cell of a base station that performs network energy saving), or an SSB for the first cell is carried in a second cell (for example, an anchor cell), at least one of the following is included: (1) the second cell does not broadcast an SSB for the first cell; (2) if the SIB for the first cell is carried in the first cell (for example, a non-anchor cell), the second cell does not broadcast the SIB information of the first cell; or (3) if the SIB for the first cell is carried in the second cell, the second cell is required to broadcast the SIB information of the first cell.

### Example 7

A solution in Example 7 is applicable to a case in which a first cell is in a first status, and a UE requests the first cell to change a state, or transmits an SSB/MIB/SIB, or performs transmission. The following describes a specific implementation process of the solution in Example 7.

In step 1, a UE transmits a request message. The request message is used for requesting a first cell to perform a status change, or request to transmit an SSB/MIB/SIB for a first cell, or request a first cell to perform or resume transmission.

In at least one embodiment, the state change of the first cell includes leaving a first status, or entering a second status, or broadcasting or carrying an SSB/MIB/SIB from a local cell, or no longer broadcasting or carrying an SSB/MIB/SIB for a local cell from an anchor cell. The first status includes at least one of the following: a low-load state, an off state, an energy saving state, an NES state, a cell DRX state (for example, an off state), a cell DTX state (for example, an off state), or an on-off switching state. The second status includes at least one of the following: a high-load state, an on state, a non-energy saving state, a non-NES state, a cell DRX state (for example, an on state), a cell DTX state (for example, an on state).

In at least one embodiment, the UE learns, by using an anchor cell, that there is a first cell (a non-anchor cell). For example, an anchor cell indicates non-anchor cell information, and the UE transmits the request message in the anchor cell or the non-anchor cell. In at least one embodiment, the request message may be a dedicated RRC message, or a WUS signal, or an on-demand SSB/SIB/MIB (for a non-anchor cell, or carrying a non-anchor cell identifier. Further, an on-demand SSB/SIB/MIB message indicates an SSB/SIB/MIB that is requested or SSBs/SIBs/MIBs that are requested).

In at least one embodiment, the request message may be used for requesting the anchor cell to transmit at least one of an SSB/SIB/MIB for the first cell, or requesting the first cell to transmit at least one of an SSB/SIB/MIB for a local cell. In at least one embodiment, the request message may be used for requesting whether to transmit at least one of the SSB/SIB/MIB from the anchor cell or the first cell, or requesting information that is transmitted from the anchor cell and/or the first cell.

In at least one embodiment, the UE transmits the request message in a second cell (for example, an anchor cell) or the first cell by using a preconfigured resource. The preconfigured resource may be indicated or broadcast by an anchor cell, or preconfigured, or saved by the UE.

In at least one embodiment, the UE may transmit the request in a non-anchor cell by using TA of the anchor cell (For example, it may be considered that the non-anchor cell and the anchor cell have same TA and/or are synchronized).

In at least one embodiment, the request is a combination of a WUS signal and an on-demand SSB/SIB/MIB. For example, transmission of the on-demand SSB/SIB/MIB is for requesting the first cell to transmit an SSB/SIB/MIB, and the WUS is for requesting data transmission.

In step 2, the first cell performs status change, or transmits the SSB/MIB/SIB, or performs or resumes transmission.

In at least one embodiment, in this case, the first cell does not transmit a discovery signal (DRS) for the first cell or a cell discovery sequence, or a simplified SSB (certainly, transmission may continue to be performed, or no transmission is performed in a case of interaction with a base station.).

In at least one embodiment, in this case, an anchor cell of the first cell no longer transmits the information about the first cell, such as an SSB/SIB/MIB, information about a relationship between the first cell and the anchor cell, an identifier of the first cell (a cell ID, a type, a frequency or the like). Certainly, transmission may continue to be performed, or no transmission is performed in a case of interaction with a base station.

### Example 8

A solution in Example 8 is applicable to determining UE behavior in a case of cell DTX/DRX. The following describes a specific implementation process of the solution in Example 8.

In step 1, a network configures a cell DTX/DRX configuration or indicate a cell DTX/DRX state.

In at least one embodiment, the network may further configure a UE DTX/DRX configuration.

In at least one embodiment, the network may further indicate a first rule, where the first rule is used for indicating whether a UE follows the cell DTX/DRX or the UE DTX/DRX, or indicating whether the cell DTX/DRX or the UE DTX/DRX has a higher priority; or indicating a priority of the cell DTX/DRX and/or a priority of the UE DTX/DRX; or indicating whether a UE is allowed not to follow the cell DTX/DRX.

In at least one embodiment, the network may indicate specific UL information that may be transmitted in a case of a conflict. The specific information may be at least one of a PUSCH, an SR, a PUCCH, a CG, an SRS, a measurement report, a RACH, a MAC CE, UCI, at least one of an on-demand MIB/SSB/SIB, a UE wake up signal (WUS), or the like.

In at least one embodiment, the network may indicate specific DL information that may be transmitted in a case of a conflict. The specific information may be at least one of a PDCCH, a PDSCH, an SPS, an RS, an SSB, a SIB, paging, a MIB, a WUS, or the like.

In step 2, the UE configures or indicates a cell DTX/DRX state based on the cell DTX/DRX indicated or configured by the network, and performs transmission.

In at least one embodiment, in a case a conflict between the cell DTX/DRX and the UE DTX/DRX, or in a case that UE DRX on is in duration of cell DTX off, the UE behaves as one of the following: following cell DTX, following the UE DRX (specific information may be transmitted in a case that there is specific information), following the first rule, and determining, according to the first rule, whether to receive a PDCCH or perform DL reception or specific information reception (that is, following the UE DRX on, for example, whether there is a specific service (such as a high-delay service) to be transmitted, or whether there is specific information to be transmitted). The specific information may be at least one of a PDCCH, a PDSCH, an SPS, an RS, an SSB, a SIB, paging, a MIB, a WUS, or the like.

In at least one embodiment, in a case of a conflict between the cell DTX/DRX and the UE DTX/DRX, or in a case of the UE DTX on being in duration of the cell DRX off, the UE behaves as one of the following: following cell DRX, following UE DTX (for example, whether there is a specific service (such as a high-delay service) to be transmitted, or whether there is specific information to be transmitted. In at least one embodiment, the network may indicate UL information that may be transmitted in a case of a conflict. The information may be at least one of a PUSCH, an SR, a PUCCH, a CG, an SRS, a measurement report, a RACH, a MAC CE, UCI, at least one of an on-demand MIB/SSB/SIB, a UE wake up signal, a CSI-RS, or the like), following the first rule, and determining, according to the first rule, whether to transmit information or specific information (that is, following the UE DTX on, for example, whether there is a specific service (such as a high-delay service) to be transmitted, or whether there is specific information to be transmitted. In at least one embodiment, the network may indicate UL information that may be transmitted in a case of a conflict. The information may be at least one of a PUSCH, an SR, a PUCCH, a CG, an SRS, a measurement report, a RACH, a MAC CE, UCI, a CSI-RS, or the like.)

In at least one embodiment, in a case of a conflict between the cell DTX/DRX and the UE DTX/DRX, or in a case of the UE DTX off being in duration of the cell DRX on, the UE behaves as one of the following: following cell DRX, following UE DTX (for example, whether there is a specific service (such as a high-delay service) to be transmitted, or whether there is specific information to be transmitted. In at least one embodiment, the network may indicate UL information that may be transmitted in a case of a conflict. The information may be at least one of a PUSCH, an SR, a PUCCH, a CG, an SRS, a measurement report, a RACH, a MAC CE, UCI, at least one of an on-demand MIB/SSB/SIB, a UE wake up signal, or the like), following the first rule, and determining, according to the first rule, whether to transmit information or specific information (that is, following the UE DTX on, for example, whether there is a specific service (such as a high-delay service) to be transmitted, or whether there is specific information to be transmitted. In at least one embodiment, the network may indicate UL information that may be transmitted in a case of a conflict. The information may be at least one of a PUSCH, an SR, a PUCCH, a CG, an SRS, a measurement report, a RACH, a MAC CE, UCI, a CSI-RS, or the like.)

In at least one embodiment, in a case of a conflict between the cell DTX/DRX and the UE DTX/DRX, or in a case that UE DRX off is in duration of cell DTX on, the UE behaves as one of the following: following cell DTX, following the UE DRX (specific information may be transmitted in a case that there is specific information), following the first rule, and determining, according to the first rule, whether to receive a PDCCH or perform DL reception or specific information reception (that is, following the UE DRX on, for example, whether there is a specific service (such as a high-delay service) to be transmitted, or whether there is specific information to be transmitted). The specific information may be at least one of a PDCCH, a PDSCH, an SPS, an RS, an SSB, a SIB, paging, a MIB, a WUS, or the like.

In some implementations, it is assumed that network DRX/DTX is not only for data transmission but also for semi-static and common signalling/channel transmission, for example, a PRACH, an SR and an RS. In detail, such semi-static information and PDCCH are refrained by the network DRX/DTX configuration, that is, an SR/CG/SRS/RACH and DG-PUSCH are not expected if the cell is in the network DRX off duration, while a reference signal/SPS and a PDCCH scrambled with a specific RNTI are refrained if the cell is in network DTX off duration. (We assume the network DRX/DTX configuration is not only for data transmission but also for partial semi-static and common signalling/channel, e.g. PRACH, SR and RS. In detail, such semi-static information and PDCCH are refrained by the network DRX/DTX configuration, i.e. SR/CG/SRS/RACH and DG-PUSCH are not expected if the cell is in the network DRX off duration, while, Reference Signal/SPS and PDCCH scrambled with specific RNTI are refrained if the cell is in network DTX off duration.)

In one implementation, an NES network can indicate the network DTX/DRX configuration via SIB message. The cell DTX/DRX can be configured as a periodic DTX/DRX pattern. In each DTX/DRX periodicity, the NES network does transmission/decoding during the on-duration. If an NES-capable UE can be aware of the network DTX/DRX configuration, the UE behavior is assumed as below. (In one implementation, the NES network can indicate the network DTX/DRX configuration via SIB message. The cell DTX/DRX can be configured as a periodic DTX/DRX pattern. In each DTX/DRX periodicity, the NES network does transmission/decoding during the on-duration. If an NES-capable UE can be aware of the network DTX/DRX configuration, the UE behavior is assumed as below.)

### Connected UE (Connected UE)

In the case that the network DRX configuration is indicated, the connected UE does not transmit data/SRS or perform random access when the network is in a DRX off state. Accordingly, the network blind decoding is reduced and power consumption is reduced. However, the side effect would be the data transmission delay in this solution. (In the case that the network DRX configuration is indicated, the CONNECTED UE does not transmit data/SRS or perform random access when the network is in DRX off state. Accordingly, the network blind decoding is reduced and power consumption is saved. And the side effect would be the data transmission delay.)

In the case that the network DTX configuration is indicated, the connected UE will not monitor the specific reference signal and PDCCH when the network is in a DTX off state. Since the RS becomes sparse by the network DTX configuration, one relative issue is the impact on the UE measurement and the resultant HO, RRM/RLM, and the like, which we understand should be evaluated by RAN1/RAN4 firstly. (In the case that the network DTX configuration is indicated, the CONNECTED UE will not monitor the specific reference signal and PDCCH when the network is in DTX off state. Since the RS becomes sparse by the network DTX configuration, one relative issue is the impact on the UE measurement and the resultant HO, RRM/RLM, etc, which we understand should be evaluated by RAN1/RAN4 firstly.)

Furthermore, the network DTX configuration may not always align with its served UEs' DRX configuration. If that is the case, one issue is whether the network should transmit the DL information when the network's DTX state and UE's DRX state conflict, for example, to follow the network DTX configuration or the UE DRX configuration. (Furthermore, the network DTX configuration may not always align with its served UEs' DRX configuration. If that is the case, one issue is whether the network should transmit the DL information when the network's DTX state and UE's DRX state conflict, e.g. to follow the network DTX configuration or the UE DRX configuration.)

Additionally, to balance the network energy saving and the UE performance, the connected UE can report the traffic characteristics or its variation(for example, preferred network DRX pattern) to assist the proper network DRX/DTX configuration. (Additionally, to balance the network energy saving and the UE performance, the CONNECTED UE can report the traffic characteristics or its variation(e.g. preferred network DRX pattern) to assist the proper network DRX/DTX configuration.)

### Idle/inactive UE (IDLE/INACTIVE UE)

In the case that the network DTX configuration is indicated, the idle/inactive UE will not monitor the specific reference signal when the network is in a DTX off state. As a result, there exists a similar measurement issue as the connected UE. (In the case that the network DTX configuration is indicated, the IDLE/INACTIVE UE will not monitor the specific reference signal when the network is in DTX off state. As a result, there exists a similar measurement issue as the CONNECTED UE.)

In the case that the network DRX configuration is indicated, the idle/inactive UE will not perform random access when the network is in DRX off state. The side effect would be the initial access delay in this solution. (In the case that the network DRX configuration is indicated, the IDLE/INACTIVE UE will not perform random access when the network is in DRX off state. And the side effect would be the initial access delay.)

### Example 9

Example 9 is applicable to processing in which a first cell is configured with a long periodicity of an SSB/MIB/SIB or a cell is turned off. The following describes a specific implementation process of the solution in Example 9.

Step 1: When a first condition is met, a UE performs a first operation, where the first operation includes at least one of the following: first measurement, RLM, BFD, RLF processing, or BRF processing.

In at least one embodiment, the first condition includes at least one of the following: the first cell is in a first status, the first cell is configured as an SSB/MIB/SIB of a specific periodicity, for example, an SSB/MIB/SIB with a long periodicity, an SSB/MIB/SIB with a periodicity greater than a specific value, or an SSB/MIB/SIB with a periodicity greater than a threshold. The first status includes at least one of the following: a low-load state, an off state, an energy saving state, an NES state, a cell DRX state (for example, an off state), a cell DTX state (for example, an off state), or an on-off switching state.

In at least one embodiment, the first RLM/BFD includes: RLM/BFD relaxation, for example, may include relaxation of cell measurement for all frequencies, or relaxation of cell measurement for a high frequency/specific frequency (a measurement interval is increased).

In at least one embodiment, the first RLF processing includes at least one of the following: configuring duration of a specific N310/N311 and/or T310/T311 (for avoiding untimely changes in measurement results due to extension of a periodicity of a MIB/SSB or the like); when a T310 expires, skipping triggering of the RLF, and/or requesting the first cell to leave the first status, and/or transmitting an on-demand SSB/MIB/SIB/RS; stopping or suspending a timer T310; or stopping or resetting a counter N310.

In at least one embodiment, two sets of duration of N310/N311 and/or T310/T311 are configured, one set is used for the first status, and the other set is used for a second status.

In at least one embodiment, the first BFR processing includes at least one of the following: configuring a specific beamFailureInstanceMaxCount/beamFailureDetectionTimer/beamFailureRecoveryTimer/rsrp-ThresholdSSB/rsrp-ThresholdBFR (for example, extending timer, configuring a high threshold, and configuring a large maximum count); stopping or suspending at least one of the foregoing timers; or stopping or resetting BFI_COUNTER; skipping triggering of the BRF or indicating a beam failure to a higher layer, and/or requesting the first cell to leave the first status, and/or transmitting an on-demand SSB/MIB/SIB/RS (for example, in a case of BFI_COUNTER >= beamFailureInstanceMaxCount, skipping triggering of the BRF or indicating a beam failure to a higher layer, and/or requesting the first cell to leave the first status, and/or transmitting an on-demand SSB/MIB/SIB/RS).

In at least one embodiment, two sets of BFR parameters are configured, one set is for the first status and the other set is for the second status.

In at least one embodiment, the first measurement includes: modifying a determining threshold of "out-of-sync" and/or a determining threshold of "in-sync", for example, reducing the threshold of "in-sync"; and for example, generating a proportion of a threshold.

### Example 10

Example 10 is a BWP switch method. In some embodiments, the method in Example 10 may also be applicable to a PCell handover and SCell reactivation. A scenario in which the solution in Example 10 may be applied includes an idle C or an inactive UE or a connected UE. The following describes a specific implementation process of the solution in Example 10.

In step 1, a network configures BWP information.

In at least one embodiment, the BWP information is configured by using system information, for example, a SIB1, a MIB, or a dedicated (new) SIB.

In at least one embodiment, the network configures a first BWP, and the BWP is for a cell in a first status. When the network indicates the first status, or when the network is in the first status, or when the network indicates a BWP switch, a UE switches to the first BWP.

In at least one embodiment, the network configures a first BWP and a second BWP, where the first BWP is for a cell in a first status, and the second BWP is for a cell not in the first status cell or in a second status. When the network indicates the first status, or when the network is in the first status, or when the network indicates a BWP switch, a UE switches to the first BWP. Alternatively, when the network indicates the second status, or when the network is in the second status, or when the network indicates a BWP switch, the UE switches to the second BWP. Alternatively, when a network status changes, the UE switches between the first BWP and the second BWP. (In at least one embodiment, the second BWP may be an initial BWP).

In at least one embodiment, the network configures a relationship between a network status and a BWP, for example, an NES cell state corresponds to a NES BWP, and a non-NES cell state corresponds to a non-NES BWP; for example, the NES cell state corresponds to the first BWP, and the non-NES cell state corresponds to the second BWP. The UE determines or uses a corresponding BWP based on a network status.

In at least one embodiment, the network configures a relationship between a network status and a BWP, for example, an NES cell state corresponds to a NES BWP, and a non-NES cell state corresponds to a non-NES BWP; for example, the NES cell state corresponds to the first BWP, and the non-NES cell state corresponds to the second BWP. The UE determines or uses a corresponding BWP based on a pattern of a network status.

In at least one embodiment, the network configures a BWP pattern and the pattern include different BWPs used at different instants. The UE determines or uses a corresponding BWP based on the pattern.

In at least one embodiment, the BWP information is configured by using dedicated RRC information. For example, for a connected UE, the network configures a BWP, and during configuration of the BWP, a BWP of a specific identifier is indicated. The BWP of the specific identifier is used for a cell in the first status.

In at least one embodiment, the first status includes at least one of the following: a low-load state, an off state, an energy saving state, an NES state, a cell DRX state (for example, an off state), a cell DTX state (for example, an off state), or an on-off switching state.

In at least one embodiment, the second status includes at least one of the following: a high-load state, an on state, a non-energy saving state, a non-NES state, a cell DRX state (for example, an on state), a cell DTX state (for example, an on state).

In step 2, the UE performs BWP switch, transmission, camping, or measurement based on the BWP information.

In at least one embodiment, the BWP switch may indicate: (1) an immediate BWP switch; (2) switch at an indicated switch time; (3) determining a BWP to be switched and/or performing a BWP switch based on the indication information; or (4) performing a BWP switch when a timer expires.

In at least one embodiment, the performing a BWP switch when a timer expires may include at least one of the following: (1) the timer may be predefined or configured by a network; (2) the timer is for a BWP, or for a UE, or for a MAC entity, or for a BWP pattern, or for a cell; (3) the timer is for an NES network, or for a case in which a corresponding network status uses different BWPs; or (4) for example, when the first BWP is used, a timer corresponding to the first BWP is enabled, and when the timer corresponding to the first BWP expires, the UE switches to the second BWP. For example, a timer corresponding to the second BWP is enabled when the second BWP is used, and when the timer corresponding to the second BWP expires, the UE switches to the first BWP. For example, in a case of switching to one BWP, a timer corresponding to a BWP is enabled, and when a timer corresponding to the BWP expires, the UE switches to a next BWP (for example, a next BWP in the BWP pattern).

In some implementations, for example, for a connected UE: in legacy, a connected UE can be configured with four BWPs and only one of them would be used/activated at a time. It may be understood that such a principle can be reused for a NES-capable UE. For the NES-capable UE, it is assumed that one of the four configured BWPs would be flagged by a network as an NES-specific BWP. When the NES-capable UE is informed of a cell NES state, or, the NES-capable UE receives a BWP switch indication via a group-common signalling, the UE can switch to this NES-state BWP without an explicit indication of a BWP index. When the cell leaves the NES state or a specific BWP timer expires, the UE can switch back to the BWP that is previously activated for the UE. (In legacy, a CONNECTED UE can be configured with four BWPs and only one of them would be used/activated at a time. We understand such a principle can be reused for the NES-capable UE. We assume one of the four configured BWPs would be flagged as the NES-specific BWP. When a NES-capable UE is informed of the cell NES state, or, the NES-capable UE receives a BWP switch indication via a group-common signalling, the UE can switch to this NES-state BWP without an explicit indication of the BWP index. When the cell leaves the NES state or a specific BWP timer expiry, the UE can switch back to the BWP that is previously activated for the UE.)

### Example 11

A solution in Example 11 corresponds to a handover method in network energy saving. The following describes a specific implementation process of the solution in Example 11.

### Solution 1 (UE handover based on a first handover configuration + first signaling)

In step 1, a network configures the first handover configuration for a UE, and the first handover configuration includes handover configuration information for a plurality of cells.

In at least one embodiment, in a first case, the network configuring the first handover configuration for the UE includes: the network supports a first status or network energy saving, the network is about to enter the first status or perform network energy saving, the network enters the first status, or at least one of an SSB/a MIB/(part of or all of) SIBs of the network is carried or broadcast by using another cell (for example, a first cell), or the network is a network or a cell (for example, a non-anchor cell) of a specific identifier.

In at least one embodiment, the first handover configuration includes handover configuration information of a plurality of cells, and handover configuration information of each cell includes a handover ID. In at least one embodiment, a candidate cell in the first handover configuration or a handover configuration for a candidate cell may be updated (such as modified/released/added) based on the handover ID.

In at least one embodiment, the first handover configuration includes handover configuration information for a plurality of cells. For each cell, a handover configuration parameter is configured, for example, configuring part of or all parameters in an existing configuration RRCreconfiguration; for example, including a key (key) update parameter.

In at least one embodiment, the first handover configuration includes a configuration for a current handover or a common parameter for all cells, such as a T304 or a key parameter.

In at least one embodiment, the first handover configuration does not include a handover execution condition. For example, in a case that a CHO command is reused, a handover execution configuration, such as condExecutionCond, is not included.

In at least one embodiment, the network may transmit an updated first handover configuration. For the updated handover configuration, the update may be transmitted before a case that a base station of any target cell indicates that a handover of the UE is completed, or indicates a similar function (for example, a network to which the UE belongs is allowed to be disabled, and the UE completes the handover).

In at least one embodiment, the first handover configuration includes a measurement configuration and/or a measurement reporting configuration, but does not include performing a handover based on the measurement configuration. The UE reports a measurement result for one or more candidate cells based on the measurement configuration and/or the measurement reporting configuration. In at least one embodiment, the measurement may be A3, A5, B1, B3, or the like.

In at least one embodiment, the first handover configuration includes a relationship between a plurality of UEs and a UE group.

In at least one embodiment, the first handover configuration includes an identity of a UE group and/or an identity of a UE group RNTI.

In at least one embodiment, the first handover configuration includes an identity of a cell specific RNTI, which is used for transmitting the first signaling. The first signaling is used for UE handover in a cell.

In step 2, the network transmits the first signaling to indicate the UE handover.

In at least one embodiment, in a second case, the network configuring the first signaling for the UE includes: the network supports a first status or network energy saving, the network is about to enter the first status or perform network energy saving, the network enters the first status, or at least one of an SSB/a MIB/(part of or all of) SIBs of the network is carried or broadcast by using another cell (for example, a first cell), or the network is a network or a cell (for example, a non-anchor cell) of a specific identifier.

In at least one embodiment, the first signaling is scrambled by or corresponds to a UE group RNTI or a cell specific RNTI, or is scrambled by or corresponds to a UE-specific RNTI (for example, a C-RNTI).

In at least one embodiment, the first signaling is for the UE group or a UE in a cell, or is for the UE.

In at least one embodiment, the first signaling may be an RRC message, or a DL MAC CE, or a PDCCH, or DCI.

In at least one embodiment, the first signaling may carry parameters such as a T304 or a key for the UE group or in a cell. In at least one embodiment, in a case that there is a parameter such as a T304 or a key for the UE group or in a cell, the UE uses the parameter such as a T304 or a key for the UE group or in a cell, or the like and/or ignores a same parameter configured in the first step.

In at least one embodiment, the first signaling carries a handover ID, or indicates a cell ID to which the UE is handed over.

In at least one embodiment, the first signaling carries TA information, for example, carries TA corresponding to a cell to which the UE is handed over, or an offset between TA corresponding to a cell to which the UE is to be handed over and TA of a current cell.

In step 3, the UE performs a handover based on the first signaling.

In at least one embodiment, when receiving the first signaling, the UE enables the timer T304.

In at least one embodiment, before the timer T304 expires, the UE performs access in a target cell to which the UE is to be handed over (for example, carrying a handover ID in the first signaling, or indicating a cell ID of a cell to which the UE is handed over).

In at least one embodiment, when the T304 expires, if the UE has not accessed the cell, the UE indicates a handover failure message in an original cell.

In at least one embodiment, when the timer T304 expires, if the original cell has not received indication information of the target cell (for example, indicates that a handover of the UE is completed, or UEs that complete handover, or a similar function (for example, a network to which the UE belongs is allowed to be disabled, and the UE completes the handover)), the network retransmits the first signaling.

In at least one embodiment, when the timer T304 expires, if a handover complete indication (such as second information) transmitted by all UEs or any UE or part of UEs is not received, the network retransmits the first signaling or a handover command (an existing handover command, in one-to-one correspondence) for the part of UEs.

In at least one embodiment, if the network determines, based on third information of the target cell, a UE for which handover is not performed or fails, the network retransmits the first signaling or a handover command (an existing handover command, in one-to-one correspondence) for the UE.

In at least one embodiment, the UE performs handover in a target cell to which the UE is to be handed over (for example, carrying a handover ID in the first signaling, or indicating a cell ID of a cell to which the UE is handed over).

In at least one embodiment, the UE performs a RACH process in a target cell to which the UE is to be handed over, and TA information carried in the first handover configuration information or, for example, TA information carried in the first signaling is synchronized with the cell.

In at least one embodiment, the UE performs a RACH process in a cell to which the UE is to be handed over, or transmits first information to indicate a base station of a handover cell/cell, and that a handover of the UE is completed.

In at least one embodiment, in a process of handover performed in a cell to which the UE is to be handed over, or in a case that handover is complete, the UE indicates a UE identity (for example, a C-RNTI) of the UE in an original cell, and the cell indicates, to an original base station based on the UE identity of the UE in the original cell, a UE that is handed over successfully/completes handover (For example, a base station of the cell forwards the identity of the UE to the original base station). The information may be transmitted by using third information.

In at least one embodiment, after completing a handover in a cell to which the UE is to be handed over, the UE indicates, to the original cell by using the second information, that the handover is completed. In at least one embodiment, the UE identity (for example, a C-RNTI) and/or an identity (such as a cell ID or a handover ID) of a cell in which handover is completed may be carried.

In at least one embodiment, after the handover of the UE is complete, the network enters the first status, or at least one of an SSB/MIB/(part of or all of) SIBs of the network is carried or broadcast by another cell (for example, the first cell), or the network is a network or a cell (for example, a non-anchor cell) of a specific identifier.

In at least one embodiment, in a case that the handover is completed, or in a case that the indication information is transmitted to an original base station or a target base station, the UE deletes or suspends the first handover configuration.

In at least one embodiment, in a case that a plurality of candidate cells meet the handover execution condition, the UE performs handover (a cell with higher priority first) based on a priority of the candidate cells (for example, configured in the first handover configuration or indicated in the first signaling). Alternatively, the UE performs handover based on a location/channel quality of a candidate cell (a cell of higher channel quality first, a cell whose location closer to a location of the UE first, a cell at a specific location first, and a cell with wide coverage first). In some embodiments, when a handover of a cell with a higher priority fails, the UE performs handover in a cell with priority next to the cell with a higher priority (In at least one embodiment, the UE may attempt X times of handovers, where X is preconfigured, for example, configured in the first handover configuration or indicated in the first signaling. In at least one embodiment, the UE may attempt M times of handovers in each cell, where M is preconfigured, for example, configured in the first handover configuration or indicated in the first signaling). In at least one embodiment, the UE or the cell to which the UE is handed over may indicate, to the original base station, at least one of a cell to which the UE is successfully handed over, a cell (list) to which the UE fails to be handed over, a cell that the UE attempts, or a quantity of failures.

### Solution 2 (UE handover based on a second handover configuration + first signaling)

In step 1, a network configures the second handover configuration for a UE, and the first handover configuration includes handover configuration information for a plurality of cells.

In at least one embodiment, in a first case, the network configuring the second handover configuration for the UE includes: the network supports a first status or network energy saving, the network is about to enter the first status or perform network energy saving, the network enters the first status, or at least one of an SSB/a MIB/(part of or all of) SIBs of the network is carried or broadcast by using another cell (for example, a first cell), or the network is a network or a cell (for example, a non-anchor cell) of a specific identifier.

In at least one embodiment, the second handover configuration includes handover configuration information of a plurality of cells, and handover configuration information of each cell includes a handover ID. In at least one embodiment, a candidate cell in the first handover configuration or a handover configuration for a candidate cell may be updated (such as modified/released/added) based on the handover ID.

In at least one embodiment, the second handover configuration includes handover configuration information for a plurality of cells. For each cell, a handover configuration parameter is configured, for example, configuring part of or all parameters in an existing configuration RRCreconfiguration; for example, including a key (key) update parameter.

In at least one embodiment, the second handover configuration includes a configuration for a current handover or a common parameter for all cells, such as a T304 or a key parameter.

In at least one embodiment, the second handover configuration includes a handover execution condition. For example, in a case that a CHO command is reused, a handover execution configuration, such as condExecutionCond, is included.

In at least one embodiment, the network may transmit an updated second handover configuration. For the updated handover configuration, the update may be transmitted before a case that a base station of any target cell indicates that a handover of the UE is completed, or indicates a similar function (for example, a network to which the UE belongs is allowed to be disabled, and the UE completes the handover).

In at least one embodiment, the second handover configuration includes a measurement configuration and/or a measurement reporting configuration, but does not include performing a handover based on the measurement configuration. The UE reports a measurement result for one or more candidate cells based on the measurement configuration and/or the measurement reporting configuration. In at least one embodiment, the measurement may be A3, A5, B1, B3, or the like.

In at least one embodiment, the second handover configuration includes a relationship between a plurality of UEs and a UE group.

In at least one embodiment, the second handover configuration includes an identity of a UE group and/or an identity of a UE group RNTI.

In at least one embodiment, the second handover configuration includes an identity of a cell specific RNTI, which is used for transmitting the first signaling. The first signaling is used for UE handover in a cell.

In step 2, the network transmits the first signaling to indicate the UE handover.

In at least one embodiment, in a second case, the network configuring the first signaling for the UE includes: the network supports a first status or network energy saving, the network is about to enter the first status or perform network energy saving, the network enters the first status, or at least one of an SSB/a MIB/(part of or all of) SIBs of the network is carried or broadcast by using another cell (for example, a first cell), or the network is a network or a cell (for example, a non-anchor cell) of a specific identifier.

In at least one embodiment, the first signaling is scrambled by or corresponds to a UE group RNTI or a cell specific RNTI, or is scrambled by or corresponds to a UE-specific RNTI (for example, a C-RNTI).

In at least one embodiment, the first signaling is for the UE group or a UE in a cell, or is for the UE.

In at least one embodiment, the first signaling may be an RRC message, or a DL MAC CE, or a PDCCH, or DCI.

In at least one embodiment, the first signaling may carry parameters such as a T304 or a key for the UE group or in a cell. In at least one embodiment, in a case that there is a parameter such as a T304 or a key for the UE group or in a cell, the UE uses the parameter such as a T304 or a key for the UE group or in a cell, or the like and/or ignores a same parameter configured in the first step.

In at least one embodiment, the first signaling carries a handover ID, or indicates a cell ID to which the UE is handed over.

In at least one embodiment, the first signaling carries TA information, for example, carries TA corresponding to a cell to which the UE is handed over, or an offset between TA corresponding to a cell to which the UE is to be handed over and TA of a current cell.

In step 3, the UE performs a handover based on the first signaling.

In at least one embodiment, when receiving the first signaling, the UE enables the timer T304.

In at least one embodiment, before the timer T304 expires, the UE performs access in a target cell to which the UE is to be handed over (for example, carrying a handover ID in the first signaling, or indicating a cell ID of a cell to which the UE is handed over).

In at least one embodiment, when the T304 expires, if the UE has not accessed the cell, the UE indicates a handover failure message in an original cell.

In at least one embodiment, when the timer T304 expires, if the original cell has not received indication information of the target cell (for example, indicates that a handover of the UE is completed, or UEs that complete handover, or a similar function (for example, a network to which the UE belongs is allowed to be disabled, and the UE completes the handover)), the network retransmits the first signaling.

In at least one embodiment, when the timer T304 expires, if a handover complete indication (such as second information) transmitted by all UEs or any UE or part of UEs is not received, the network retransmits the first signaling or a handover command (an existing handover command, in one-to-one correspondence) for the part of UEs.

In at least one embodiment, if the network determines, based on third information of the target cell, a UE for which handover is not performed or fails, the network retransmits the first signaling or a handover command (an existing handover command, in one-to-one correspondence) for the UE.

In at least one embodiment, the UE performs handover in a target cell to which the UE is to be handed over (for example, carrying a handover ID in the first signaling, or indicating a cell ID of a cell to which the UE is handed over).

In at least one embodiment, the UE performs a RACH process in a target cell to which the UE is to be handed over, and TA information carried in the first handover configuration information or, for example, TA information carried in the first signaling is synchronized with the cell.

In at least one embodiment, the UE performs a RACH process in a cell to which the UE is to be handed over, or transmits first information to indicate a base station of a handover cell/cell, and that a handover of the UE is completed.

In at least one embodiment, in a process of handover performed in a cell to which the UE is to be handed over, or in a case that handover is complete, the UE indicates a UE identity (for example, a C-RNTI) of the UE in an original cell, and the cell indicates, to an original base station based on the UE identity of the UE in the original cell, a UE that is handed over successfully/completes handover (For example, a base station of the cell forwards the identity of the UE to the original base station). The information may be transmitted by using third information.

In at least one embodiment, after completing a handover in a cell to which the UE is to be handed over, the UE indicates, to the original cell by using the second information, that the handover is completed. In at least one embodiment, the UE identity (for example, a C-RNTI) and/or an identity (such as a cell ID or a handover ID) of a cell in which handover is completed may be carried.

In at least one embodiment, after the handover of the UE is complete, the network enters the first status, or at least one of an SSB/MIB/(part of or all of) SIBs of the network is carried or broadcast by another cell (for example, the first cell), or the network is a network or a cell (for example, a non-anchor cell) of a specific identifier.

In at least one embodiment, in a case that the handover is completed, or in a case that the indication information is transmitted to an original base station or a target base station, the UE deletes or suspends the first handover configuration.

In at least one embodiment, in a case that a plurality of candidate cells meet the handover execution condition, the UE performs handover (a cell with higher priority first) based on a priority of the candidate cells (for example, configurated in the first handover configuration or indicated in the first signaling). Alternatively, the UE performs handover based on a location/channel quality of a candidate cell (a cell of higher channel quality first, a cell whose location closer to a location of the UE first, a cell at a specific location first, and a cell with wide coverage first). In some embodiments, when a handover of a cell with a higher priority fails, the UE performs handover in a cell with priority next to the cell with a higher priority (In at least one embodiment, the UE may attempt X times of handovers, where X is preconfigured, for example, configured in the first handover configuration or indicated in the first signaling. In at least one embodiment, the UE may attempt M times of handovers in each cell, where M is preconfigured, for example, configured in the first handover configuration or indicated in the first signaling). In at least one embodiment, the UE or the cell to which the UE is handed over may indicate, to the original base station, at least one of a cell to which the UE is successfully handed over, a cell (list) to which the UE fails to be handed over, a cell that the UE attempts, or a quantity of failures.

### Solution 3: (UE handover is performed based on a second handover configuration)

In step 1, a network configures the second handover configuration for a UE, and the first handover configuration includes handover configuration information for a plurality of cells.

In at least one embodiment, in a first case, the network configuring the second handover configuration for the UE includes: the network supports a first status or network energy saving, the network is about to enter the first status or perform network energy saving, the network enters the first status, or at least one of an SSB/a MIB/(part of or all of) SIBs of the network is carried or broadcast by using another cell (for example, a first cell), or the network is a network or a cell (for example, a non-anchor cell) of a specific identifier.

In at least one embodiment, the second handover configuration includes handover configuration information of a plurality of cells, and handover configuration information of each cell includes a handover ID. In at least one embodiment, a candidate cell in the first handover configuration or a handover configuration for a candidate cell may be updated (such as modified/released/added) based on the handover ID.

In at least one embodiment, the second handover configuration includes handover configuration information for a plurality of cells. For each cell, a handover configuration parameter is configured, for example, configuring part of or all parameters in an existing configuration RRCreconfiguration; for example, including a key (key) update parameter.

In at least one embodiment, the second handover configuration includes a configuration for a current handover or a common parameter for all cells, such as a T304 or a key parameter.

In at least one embodiment, the second handover configuration includes a handover execution condition. For example, in a case that a CHO command is reused, a handover execution configuration, such as condExecutionCond, is included.

In at least one embodiment, the network may transmit an updated second handover configuration. For the updated handover configuration, the update may be transmitted before a case that a base station of any target cell indicates that a handover of the UE is completed, or indicates a similar function (for example, a network to which the UE belongs is allowed to be disabled, and the UE completes the handover).

In at least one embodiment, the second handover configuration includes a measurement configuration and/or a measurement reporting configuration, but does not include performing a handover based on the measurement configuration. The UE reports a measurement result for one or more candidate cells based on the measurement configuration and/or the measurement reporting configuration. In at least one embodiment, the measurement may be A3, A5, B1, B3, or the like.

In at least one embodiment, the second handover configuration includes a relationship between a plurality of UEs and a UE group.

In at least one embodiment, the second handover configuration includes an identity of a UE group and/or an identity of a UE group RNTI.

In at least one embodiment, the second handover configuration includes an identity of a cell specific RNTI, which is used for transmitting the first signaling. The first signaling is used for UE handover in a cell.

In step 2, the UE performs a handover based on the second handover configuration.

In at least one embodiment, in a case that there is a parameter such as a T304 or a key for the UE group or in a cell, the UE uses the parameter such as a T304 or a key for the UE group or in a cell, or the like and/or ignores a same parameter configured for each cell.

In at least one embodiment, when receiving the first signaling, the UE enables the timer T304.

In at least one embodiment, before the timer T304 expires, the UE performs handover in a cell to which the UE is to be handed over (for example, a cell that meets the handover execution condition).

In at least one embodiment, when the T304 expires, if the UE has not accessed the cell, the UE indicates a handover failure message in an original cell.

In at least one embodiment, when the timer T304 expires, if the original cell has not received indication information of the target cell (for example, indicates that a handover of the UE is completed, or UEs that complete handover, or a similar function (for example, a network to which the UE belongs is allowed to be disabled, and the UE completes the handover)), the network retransmits the second handover configuration information, or uses legacy handover (in one-to-one correspondence).

In at least one embodiment, when the timer T304 expires, if a handover complete indication (such as second information) transmitted by all UEs or any UE or part of UEs is not received, the network retransmits the second handover configuration information or a handover command (an existing handover command, in one-to-one correspondence) for the UEs.

In at least one embodiment, if the network determines, based on third information of the target cell, a UE for which handover is not performed or fails, the network retransmits the second handover configuration information or a handover command (an existing handover command, in one-to-one correspondence) for the UE.

In step 3, the UE performs handover in a cell to which the UE is to be handed over (for example, a cell that meets the handover execution condition).

In at least one embodiment, the UE performs a RACH process in a cell to which the UE is to be handed over, or TA information carried in the second handover configuration information is synchronized with the cell.

In at least one embodiment, the UE performs a RACH process in a cell to which the UE is to be handed over, or transmits first information to indicate a base station of a handover cell/cell, and that a handover of the UE is completed.

In at least one embodiment, in a process of handover performed in a cell to which the UE is to be handed over, or in a case that handover is complete, the UE indicates a UE identity (for example, a C-RNTI) of the UE in an original cell, and the cell indicates, to an original base station based on the UE identity of the UE in the original cell, a UE that is handed over successfully/completes handover (For example, a base station of the cell forwards the identity of the UE to the original base station). The information may be transmitted by using third information.

In at least one embodiment, after completing a handover in a cell to which the UE is to be handed over, the UE indicates, to the original cell by using the second information, that the handover is completed. In at least one embodiment, the UE identity (for example, a C-RNTI) and/or an identity (such as a cell ID or a handover ID) of a cell in which handover is completed may be carried.

In at least one embodiment, after the handover of the UE is complete, the network enters the first status, or at least one of an SSB/MIB/(part of or all of) SIBs of the network is carried or broadcast by another cell (for example, the first cell), or the network is a network or a cell (for example, a non-anchor cell) of a specific identifier.

In at least one embodiment, in a case that a handover of the UE is completed, or in a case that the UE is handed over to a new cell, or in a case that the indication information is transmitted to an original base station or a target base station, the UE deletes or suspends the first handover configuration.

In at least one embodiment, when receiving the first signaling, the UE deletes or suspends the handover execution condition, and/or deletes or suspends the measurement configuration and/or measurement reporting configuration.

In at least one embodiment, in a case that the UE does not receive the first signaling or performs a handover execution condition, the UE deletes or suspends the measurement configuration and/or the measurement reporting configuration.

In at least one embodiment, in a case that a plurality of candidate cells meet the handover execution condition, the UE performs handover (a cell with higher priority first) based on a priority of the candidate cells (for example, configurated in the second handover configuration or indicated in the first signaling). Alternatively, the UE performs handover based on a location/channel quality of a candidate cell (a cell of higher channel quality first, a cell whose location closer to a location of the UE first, a cell at a specific location first, and a cell with wide coverage first). In some embodiments, when a handover of a cell with a higher priority fails, the UE performs handover in a cell with priority next to the cell with a higher priority (In at least one embodiment, the UE may attempt X times of handovers, where X is preconfigured, for example, configured in the second handover configuration or indicated in the first signaling. In at least one embodiment, the UE may attempt M times of handovers in each cell, where M is preconfigured, for example, configured in the second handover configuration or indicated in the first signaling). In at least one embodiment, the UE or the cell to which the UE is handed over may indicate, to the original base station, at least one of a cell to which the UE is successfully handed over, a cell (list) to which the UE fails to be handed over, a cell that the UE attempts, or a quantity of failures.

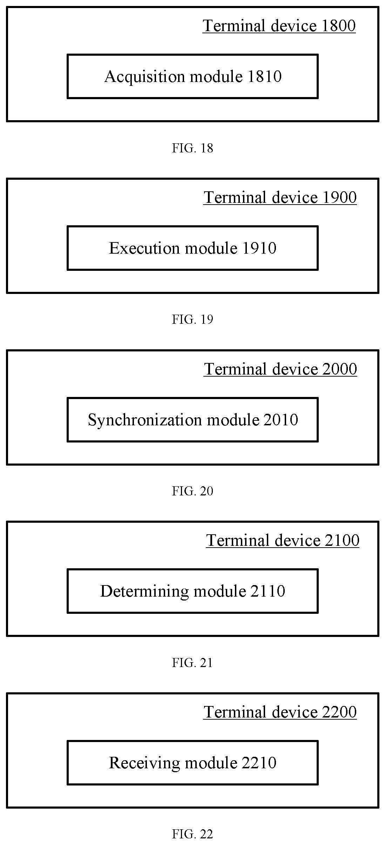

The foregoing describes in detail the method embodiments of this application with reference to FIG. 1 to FIG. 17. The following describes in detail apparatus embodiments of this application with reference to FIG. 18 to FIG. 37. It should be understood that the description of the method embodiments corresponds to the description of the apparatus embodiments, and therefore, for parts that are not described in detail, refer to the foregoing method embodiments.

FIG. 18 is a schematic structural diagram of a terminal device according to an embodiment of this application. A terminal device 1800 shown in FIG. 18 may include an acquisition module 1810.

The acquisition module 1810 may be configured to acquire first information of a first cell/first base station, where part or all of the first information is carried in the first cell/first base station, or part or all of the first information is carried in a second cell/second base station.

FIG. 19 is a schematic structural diagram of a terminal device according to an embodiment of this application. A terminal device 1900 shown in FIG. 19 may include an execution module 1910.

The execution module 1910 is configured to: in a case that the terminal device performs a random access procedure for a first cell, or in a case that the terminal device randomly accesses a first cell, perform one of the following operations: receiving, in a second cell, information transmitted by a base station, and transmitting information to the base station in the first cell, or receiving, in a second cell, information transmitted by a base station and transmitting information to the base station, or receiving, in the first cell, information transmitted by a base station and transmitting information to the base station; or receiving, in the first cell, information transmitted by the base station, and transmitting information to the base station in a second cell.

FIG. 20 is a schematic structural diagram of a terminal device according to an embodiment of this application. A terminal device 2000 shown in FIG. 20 may include a synchronization module 2010.

The synchronization module 2010 may be configured to synchronize with a first cell/first base station based on one or more of the following information: information about a synchronization signal block SSB for the first cell carried by a second cell/second base station; information about an SSB for a second cell/second base station; information about an SSB for the first cell acquired by the terminal device based on information about an SSB and/or a system information block SIB for a second cell; information about an SSB for the second cell acquired by the terminal device; a synchronization signal or a synchronization sequence for the first cell/first base station; or a simplified SSB for the first cell/first base station.

FIG. 21 is a schematic structural diagram of a terminal device according to an embodiment of this application. A terminal device 2100 shown in FIG. 21 may include a determining module 2110.

The determining module 2110 may be configured to determine whether to perform cell selection or cell reselection based on information about the first cell, or determine, in a cell selection or cell reselection process, whether to consider information about the first cell.

FIG. 22 is a schematic structural diagram of a terminal device according to an embodiment of this application. A terminal device 2200 shown in FIG. 22 may include a receiving module 2210.

The receiving module 2210 may be configured to receive a first paging message, where the first paging message is a paging message for a first cell/first base station.

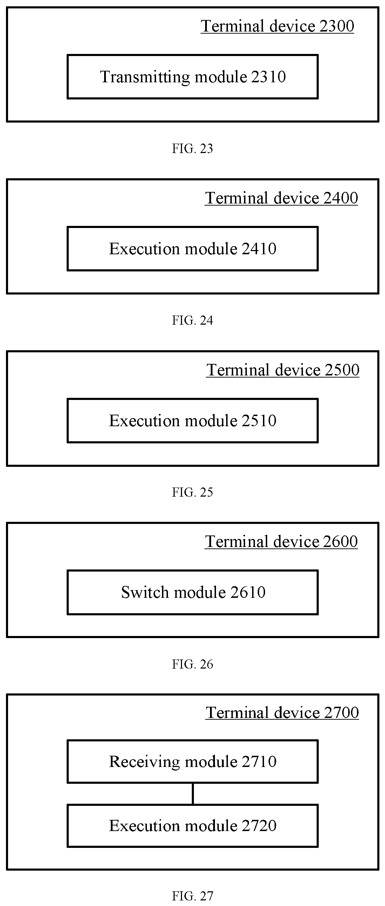

FIG. 23 is a schematic structural diagram of a terminal device according to an embodiment of this application. A terminal device 2300 shown in FIG. 23 may include a transmitting module 2310.

The transmitting module 2310 may be configured to transmit a request message, where the request message is used for requesting a first cell/first base station to perform one or more of the following operations: changing a state of the first cell/first base station; transmitting information about the first cell/first base station, where the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or performing transmission or resuming transmission.

FIG. 24 is a schematic structural diagram of a terminal device according to an embodiment of this application. A terminal device 2400 shown in FIG. 24 may include an execution module 2410.

The execution module 2410 may be configured to perform transmission based on a discontinuous transmission DTX/discontinuous reception DRX state of a first cell/first base station.

FIG. 25 is a schematic structural diagram of a terminal device according to an embodiment of this application. A terminal device 2500 shown in FIG. 25 may include an execution module 2510.

The execution module 2510 may be configured to execute a first operation, where the first operation is related to at least one of the following: measurement, measurement related processing, beam related processing, or radio link related processing.

FIG. 26 is a schematic structural diagram of a terminal device according to an embodiment of this application. A terminal device 2600 shown in FIG. 26 may include a switch module 2610.

The switch module 2610 may be configured to switch to a first bandwidth part BWP, or switch from a second BWP to a first BWP, the first BWP is used for a cell/base station that supports or enters or is about to enter or is in a first status, and the first status includes one or more of the following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or the second BWP is a currently activated BWP, or a used BWP, or a BWP used before switching to the first BWP, or a BWP not corresponding to the first status.

FIG. 27 is a schematic structural diagram of a terminal device according to an embodiment of this application. A terminal device 2700 shown in FIG. 27 may include a receiving module 2710 and an execution module 2720.

The receiving module 2710 may be configured to receive a first handover configuration transmitted by a first cell/first base station, where the first handover configuration includes handover configuration information for a plurality of cells; and the execution module 2720 may be configured to execute handover processing, or perform a handover from the first cell to a target cell.

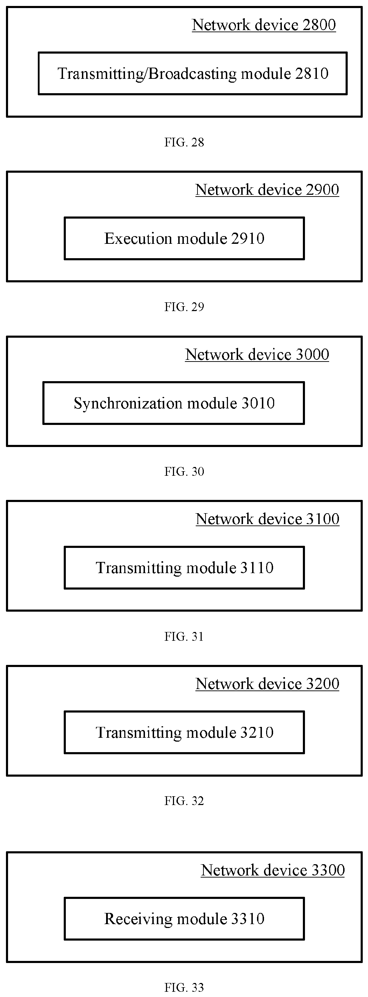

The following describes a network device provided in embodiments of this application with reference to FIG. 28 to FIG. 36. It should be noted that, in some embodiments, the network device may be a base station, and in some embodiments, the network device may alternatively be a cell, which is not limited in embodiments of this application.

FIG. 28 is a schematic structural diagram of a network device according to an embodiment of this application. A network device 2800 shown in FIG. 28 may include a transmitting/broadcasting module 2810.

The transmitting/broadcasting module 2810 may be configured to transmit/broadcast first information of a first cell/first base station to a terminal device, where part or all of the first information is carried in the first cell/first base station, or part or all of the first information is carried in a second cell/second base station.

FIG. 29 is a schematic structural diagram of a network device according to an embodiment of this application. A network device 2900 shown in FIG. 29 may include an execution module 2910.

The execution module 2910 is configured to: in a case that a terminal device performs a random access procedure for a first cell, or in a case that a terminal device randomly accesses a first cell, perform one of the following operations: transmitting information to the terminal device in a second cell, and receiving, in the first cell, information transmitted by the terminal device; or in a second cell, transmitting information to the terminal device and receiving information transmitted by the terminal device; or in the first cell, transmitting information to the terminal device and receiving information transmitted by the terminal device; or transmitting information to the terminal device in the first cell, and receiving, in a second cell, information transmitted by the terminal device.

FIG. 30 is a schematic structural diagram of a network device according to an embodiment of this application. A network device 3000 shown in FIG. 30 may include a synchronization module 3010.

The synchronization module 3010 may be configured to synchronize with a terminal device based on one or more of the following information: information about a synchronization signal block SSB for the first cell carried by a second cell/second base station; information about an SSB for a second cell/second base station; information about an SSB for the first cell acquired by the terminal device based on information about an SSB and/or a system information block SIB for a second cell; information about an SSB for the second cell acquired by the terminal device; a synchronization signal or a synchronization sequence for the first cell/first base station; or a simplified SSB for the first cell/first base station.

FIG. 31 is a schematic structural diagram of a network device according to an embodiment of this application. A network device 3100 shown in FIG. 31 may be, for example, a first cell/first base station. The network device 3100 may include a transmitting module 3110.

The transmitting module 3110 may be configured to transmit a first paging message, where the first paging message is a paging message for a first cell/first base station.

FIG. 32 is a schematic structural diagram of a network device according to an embodiment of this application. A network device 3200 shown in FIG. 32 may be, for example, a second cell/first base station. The network device 3200 may include a transmitting module 3210.

The transmitting module 3210 may be configured to transmit a first paging message, where the first paging message is a paging message for a first cell/first base station.

FIG. 33 is a schematic structural diagram of a network device according to an embodiment of this application. A network device 3300 shown in FIG. 33 may include a receiving module 3310.

The receiving module 3310 may be configured to receive a request message transmitted by a terminal device, where the request message is used for requesting a first cell/first base station to perform one or more of the following operations: changing a state of the first cell/first base station; transmitting information about the first cell/first base station, where the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or performing transmission or resuming transmission.

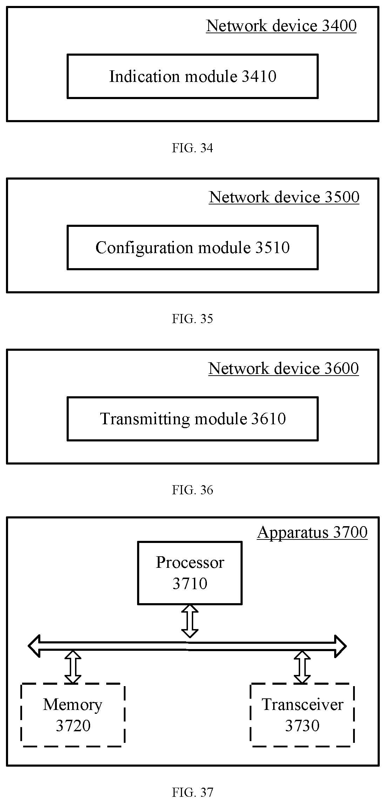

FIG. 34 is a schematic structural diagram of a network device according to an embodiment of this application. A network device 3400 shown in FIG. 34 may include an indication module 3410.

The indication module 3410 may be configured to indicate a discontinuous transmission DTX/discontinuous reception DRX state of a first cell/first base station to a terminal device, and the DTX/DRX state of the first cell/first base station is used by the terminal device to perform transmission based on the DTX/DRX state of the first cell/first base station.

FIG. 35 is a schematic structural diagram of a network device according to an embodiment of this application. A network device 3500 shown in FIG. 35 may include a configuration module 3510.

The configuration module 3510 may be adapted to configure bandwidth part BWP information, where the BWP information is used by a terminal device to switch to a first BWP, or is used by a terminal device to switch from a second BWP to a first BWP. The first BWP is used for a cell/base station that supports or enters or is about to enter or is in a first status, and the first status includes one or more of the following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or the second BWP is a currently activated BWP, or a used BWP, or a BWP used before switching to the first BWP, or a BWP not corresponding to the first status.

FIG. 36 is a schematic structural diagram of a network device according to an embodiment of this application. A network device 3600 shown in FIG. 36 may include a transmitting module 3610.

The transmitting module 3610 may be configured to transmit a first handover configuration to a terminal device, where the first handover configuration includes handover configuration information for a plurality of cells, and the first handover configuration is used by the terminal device to perform handover processing or hand over from the first cell to a target cell.

FIG. 37 is a schematic diagram of a structure of a communications apparatus according to an embodiment of this application. Dashed lines in FIG. 37 indicate that the unit or module is optional. The apparatus 3700 may be configured to implement the methods described in the foregoing method embodiments. The apparatus 3700 may be a chip, a terminal device, or a network device.

The apparatus 3700 may include one or more processors 3710. The processor 3710 may allow the apparatus 3700 to implement the methods described in the foregoing method embodiments. The processor 3710 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 3700 may further include one or more memories 3720. The memory 3720 stores a program. The program may be executed by the processor 3710, to cause the processor 3710 to perform the methods described in the foregoing method embodiments. The memory 3720 may be separated from the processor 3710 or integrated into the processor 3710.

The apparatus 3700 may further include a transceiver 3730. The processor 3710 may communicate with another device or chip by using the transceiver 3730. For example, the processor 3710 may transmit data to and receive data from another device or chip by using the transceiver 3730.

An embodiment of this application further provides a computer-readable storage medium, configured to store a program. The computer-readable storage medium may be applied to the terminal or the network device provided in embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to perform the methods performed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should be further understood that determining B based on A does not mean determining B based on only A, but instead B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, the "predefined" or "pre-configured" may be implemented by pre-storing corresponding code, tables, or other forms that may be used to indicate related information in devices (for example, including a terminal device and a network device), and a specific implementation thereof is not limited in this application. For example, predefining may indicate being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state drive (SSD)), or the like.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

## Claims

1. A communication method, comprising:
acquiring, by a terminal device, first information of a first cell/first base station, wherein part or all of the first information is carried in the first cell/first base station, or part or all of the first information is carried in a second cell/second base station.

2. The method according to claim 1, wherein the first cell belongs to a cell that supports network energy saving or a cell that supports an energy saving base station, or the first base station belongs to an energy saving base station or a base station having an energy saving capability, or the first cell/first base station supports a first status, or the first cell/first base station is about to enter a first status, or the first cell/first base station is in a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

3. The method according to claim 1 or 2, wherein the first information is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station.

4. The method according to any one of claims 1 to 3, wherein the first information comprises one or more of following information: a synchronization signal block SSB for the first cell; at least part of system information of the first cell; information used for searching for the first cell/first base station; information used for measuring the first cell/first base station; or information related to paging of the first cell/first base station.

5. The method according to any one of claims 1 to 4, wherein the first information comprises one or more of following information: an SSB, a master information block MIB, a system information block SIB1, or at least part of other SIBs.

6. The method according to any one of claims 1 to 5, wherein a manner in which the terminal device acquires the first information is determined by the terminal device based on second information, wherein the second information comprises one or more of following information:
association information of the first cell/first base station and the second cell/second base station;
type information of the first cell/first base station;
type information of the second cell/second base station;
indication information of acquisition of the first information;
a type of the first information;
content of the first information; or
a current state of the first cell/first base station.

7. The method according to claim 6, wherein the indication information of acquisition of the first information comprises: indication information used for indicating that the terminal device does not acquire the first information from a non-anchor cell/non-anchor base station; and/or indication information used for indicating that the terminal device acquires the first information from an anchor cell/anchor base station.

8. The method according to claim 6 or 7, wherein part or all of information in the second information is indicated by the first cell/first base station; or part or all of information in the second information is indicated by the second cell/second base station; or part or all of information in the second information is indicated by the first cell and the second cell; or part or all of information in the second information is indicated by the first base station and the second base station.

9. The method according to claim 6 or 7, wherein part or all of information in the second information is indicated by a third cell/third base station, and/or the third cell/third base station is used for indicating that part or all of the first information is carried in the second cell/second base station.

10. The method according to any one of claims 6 to 9, wherein part or all of information in the second information is carried by one or more of following: a cell system information, an SSB, a dedicated radio resource control RRC message, a synchronization signal, a reference sequence, or a reference signal.

11. The method according to any one of claims 6 to 10, wherein the acquiring, by the terminal device, first information of a first cell/first base station comprises:
in a case that a current state of the first cell/first base station is the first status or the indication information of acquisition of the first information is not updated, acquiring, by the terminal device, the first information from the second cell/second base station.

12. The method according to any one of claims 1 to 11, wherein the first information is carried/indicated/broadcast by the second cell/second base station by using a SIB, or is indicated by the second cell/second base station by using a dedicated RRC message.

13. The method according to any one of claims 1 to 12, wherein the first information is carried/indicated/broadcast by the second cell/second base station or indicated by the second cell/second base station by using a dedicated RRC message when one or more of following conditions are met:
the first cell belongs to a cell that supports network energy saving or a cell that supports an energy saving base station;
the first base station belongs to an energy saving base station or a base station having an energy saving capability;
the first cell/first base station supports the first status;
the first cell/first base station enters or is about to enter the first status;
the first cell/first base station is in the first status;
the second cell/second base station learns that the first cell/first base station is in the first status;
the second cell/second base station learns that the first cell/first base station supports the first status;
the second cell/second base station learns that the first cell/first base station enters or is about to enter the first status;
the first cell is a non-anchor cell of the second cell;
the first base station is a non-anchor base station of the second base station;
the first cell requests the second cell to carry/indicate/broadcast the first information;
the first base station requests the second base station to carry/indicate/broadcast the first information;
the second cell is an anchor cell;
the second base station is an anchor base station;
the second cell/second base station has a capability of transmitting the first information; or
the second cell/second base station receives a request message transmitted by the terminal device, wherein the request message is used for requesting the second cell/second base station to transmit/broadcast the first information.

14. The method according to any one of claims 1 to 13, wherein an SSB for the first cell/first base station is carried in the second cell/second base station, and the second cell is configured to broadcast one or more of following information: a configuration of an SSB for the first cell/first base station, a position of an SSB for the first cell/first base station, a synchronization time difference between the first cell and the second cell, or a synchronization time difference between the first base station and the second base station.

15. A communication method, comprising: performing, by a terminal device, a random access procedure for a first cell, or in a case of randomly accessing a first cell, performing, by a terminal device, one of following operations:
receiving, by the terminal device in a second cell, information transmitted by a base station, and transmitting information to the base station in the first cell; or
receiving, by the terminal device in a second cell, information transmitted by a base station and transmitting information to the base station; or
receiving, by the terminal device in the first cell, information transmitted by a base station and transmitting information to the base station; or
receiving, by the terminal device in the first cell, information transmitted by a base station, and transmitting information to the base station in a second cell.

16. The method according to claim 15, wherein the performing, by a terminal device, a random access procedure for a first cell, or in a case of randomly accessing a first cell, performing operations by a terminal device comprises:
transmitting, by the terminal device, a random access message in the first cell, and receiving, in a second cell, a random access message in the first cell; or
transmitting and receiving, by the terminal device, a random access message for the first cell in a second cell; or
transmitting and receiving, by the terminal device, a random access message for the first cell in the first cell; or
receiving, by the terminal device, a random access message in the first cell, and transmitting, in a second cell, a random access message for the first cell.

17. The method according to claim 15 or 16, wherein the first cell belongs to a cell that supports network energy saving or a cell that supports an energy saving base station, or the first cell supports a first status, or the first cell is about to enter a first status, or the first cell is in a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

18. The method according to any one of claims 15 to 17, wherein part or all of first information of the first cell is carried in the second cell.

19. The method according to any one of claims 15 to 18, wherein part or all of first information of the first cell comprises a random access parameter and/or a random access resource configuration.

20. A communication method, comprising:
performing, by a terminal device, synchronization with a first cell/first base station based on one or more of following information:
information about a synchronization signal block SSB for the first cell carried by a second cell/second base station;
information about an SSB for a second cell/second base station;
information about an SSB for the first cell acquired by the terminal device based on information about an SSB and/or a system information block SIB for a second cell;
information about an SSB for the second cell acquired by the terminal device;
a synchronization signal or a synchronization sequence for the first cell/first base station; or
a simplified SSB for the first cell/first base station.

21. The method according to claim 20, wherein synchronization between the terminal device and the first cell/first base station is performed in a first case, and the first case comprises one or more of following cases: the first cell is an energy saving cell or a cell for an energy saving base station, the first base station is an energy saving base station, the first cell/first base station supports a first status, the first cell/first base station enters or is about to enter a first status, the first cell/first base station is in a first status, first information of the first cell/first base station is carried by a second cell/second base station, the first cell is a non-anchor cell, or the first base station is a non-anchor base station; and
the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

22. A communication method, comprising:
determining, by a terminal device, whether to perform cell selection or cell reselection based on information about a first cell, or determining, by a terminal device, whether to consider information about a first cell in a cell selection or cell reselection process.

23. The method according to claim 22, wherein the information about the first cell comprises information about energy saving of the first cell.

24. The method according to claim 22 or 23, wherein the information about energy saving of the first cell comprises one or more of following information:
status information of the first cell;
whether the first cell belongs to a cell that supports network energy saving or a cell that supports an energy saving base station;
whether the first cell supports a first status, or is about to enter a first status, or is in a first status, wherein the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station;
whether part or all of first information of the first cell is carried in a second cell, wherein the first information is used by the terminal device to access the first cell, or is used by the terminal device to camp on the first cell, or is used by the terminal device to discover/detect/measure the first cell, or is used by the terminal device to receive paging information of the first cell;
whether the first cell is a non-anchor cell;
whether the first cell transmits or is capable of transmitting a first synchronization signal or a synchronization sequence; or
whether the first cell transmits or is capable of transmitting a simplified SSB.

25. The method according to any one of claims 22 to 24, wherein in a case that the terminal device is a legacy Legacy terminal device or a terminal device that does not support network energy saving, the determining, by a terminal device, whether to perform cell selection or cell reselection based on information about a first cell, or determining, by a terminal device, whether to consider information about a first cell in a cell selection or cell reselection process comprises:
performing, by the terminal device, cell selection or cell reselection not based on the information about energy saving of the first cell; or
determining, by the terminal device, that the information about energy saving of the first cell is not considered in the cell selection or cell reselection process.

26. The method according to any one of claims 22 to 25, wherein in a case that the terminal device is a Legacy terminal device or a terminal device that does not support network energy saving, the terminal device fails to camp on the first cell, or considers that the first cell is barred.

27. The method according to any one of claims 22 to 24, wherein in a case that the terminal device is a terminal device that supports network energy saving, the determining, by a terminal device, whether to perform cell selection or cell reselection based on information about a first cell, or determining, by a terminal device, whether to consider information about a first cell in a cell selection or cell reselection process comprises:
performing, by the terminal device, cell selection or cell reselection based on the information about energy saving of the first cell; or
determining, by the terminal device, that the information about energy saving of the first cell is considered in the cell selection or cell reselection process.

28. The method according to any one of claims 22 to 27, wherein the method further comprises:
ignoring, by the terminal device, the first cell in a process of cell selection or cell reselection or cell measurement, or determining, by the terminal device, that the first cell is a low-priority cell corresponded when the terminal device performs cell selection or cell reselection or cell measurement.

29. The method according to claim 28, wherein that the first cell is a low-priority cell corresponded when the terminal device performs cell selection or cell reselection or cell measurement comprises at least one of following: the first cell or a frequency of the first cell has a low priority, the first cell is barred, or a same frequency of the first cell is barred.

30. The method according to any one of claims 22 to 27, wherein the method further comprises:
determining, by the terminal device, that the first cell is a high-priority cell corresponded when the terminal device performs cell selection or cell reselection or cell measurement.

31. The method according to claim 30, wherein that the first cell is a high-priority cell corresponded when the terminal device performs cell selection or cell reselection or cell measurement comprises at least one of following: the first cell or a frequency of the first cell has a high priority, the first cell is a high-priority cell, or a same frequency of the first cell has a high priority.

32. The method according to any one of claims 22 to 31, wherein the determining, by a terminal device, whether to perform cell selection or cell reselection based on information about a first cell, or determining, by a terminal device, whether to consider information about a first cell in a cell selection or cell reselection process is performed when the first cell is in a first case,
wherein the first case comprises one or more of following cases: the first cell is a cell that supports energy saving, the first cell is a cell that has an energy saving capability, the first cell is an energy saving cell or a cell for an energy saving base station, the first cell supports or enters or is about to enter a first status, first information of the first cell is carried in a second cell, or the first cell is a non-anchor cell; and
the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

33. The method according to claim 32, wherein in a case that the first cell is in the first case, a measurement result of the first cell is obtained based on a measurement result of the second cell,
wherein the measurement result of the first cell is the measurement result of the second cell, or the measurement result of the first cell is a deformation of the measurement result of the second cell, or the measurement result of the first cell is a measurement result of a synchronization signal block SSB for the first cell carried by the second cell, or the measurement result of the first cell is a measurement result of a reference signal or reference sequence carried by the first cell.

34. A communication method, comprising:
receiving, by a terminal device, a first paging message, wherein the first paging message is a paging message for a first cell/first base station.

35. The method according to claim 34, wherein the first cell/first base station is in one or more of following cases:
whether the first cell belongs to a cell that supports network energy saving or a cell that supports an energy saving base station;
whether the first base station belongs to an energy saving base station or a base station having an energy saving capability;
whether the first cell/first base station supports a first status, or is about to enter a first status, or is in a first status, wherein the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station;
part or all of first information of the first cell is carried in a second cell, wherein the first information is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station;
the first cell is a non-anchor cell; or
the first base station is a non-anchor base station.

36. The method according to claim 34 or 35, wherein the first paging message is transmitted by the first cell/first base station, or the first paging message is transmitted by the second cell/second base station.

37. The method according to any one of claims 34 to 36, wherein configuration information of the first paging message is transmitted by the second cell/second base station.

38. The method according to any one of claims 34 to 37, wherein the first paging message is received on the first cell by the terminal device by referring to one or more of following information: synchronization information of the second cell/second base station, beam information of the second cell/second base station, or a discovery reference signal or reference sequence synchronization information of the first cell/first base station.

39. The method according to any one of claims 36 to 38, wherein the first paging message is transmitted by the second cell/second base station, the first paging message comprises first indication information, and the first indication information is used for indicating that the first paging message is for the first cell/first base station, or instruct the terminal device to access the first cell/first base station.

40. The method according to any one of claims 34 to 39, wherein in a case that the first cell is a primary cell PCell, the method further comprises:
monitoring, by the terminal device, the first paging message in the first cell, and/or monitoring, by the terminal device, the first paging message not in a second cell.

41. The method according to any one of claims 34 to 39, wherein in a case that the first cell is a primary secondary cell PSCell or a secondary cell SCell, the method further comprises:
monitoring, by the terminal device, the first paging message in a second cell, and/or monitoring, by the terminal device, the first paging message not in the first cell.

42. A communication method, comprising:
transmitting, by a terminal device, a request message, wherein the request message is used for requesting a first cell/first base station to perform one or more of following operations:
changing a state of the first cell/first base station;
transmitting information about the first cell/first base station, wherein the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or
performing transmission or resuming transmission.

43. The method according to claim 42, wherein the request message is transmitted in a case that the first cell supports or enters or is about to enter or is in a first status,
wherein the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

44. The method according to claim 42 or 43, wherein the changing of a state of the first cell/first base station comprises one or more of following:
leaving, by the first cell/first base station, the first status;
entering, by the first cell/first base station, a second status;
broadcasting or carrying information about the first cell from the first cell;
broadcasting or carrying information about the first base station from the first base station;
acquiring information about the first cell from the first cell;
acquiring information about the first base station from the first base station;
broadcasting or carrying no information about the first cell from an anchor cell; or
broadcasting or carrying no information about the first base station from an anchor base station,
wherein the second status comprises one or more of following states: an on state of a cell/base station, a non-energy saving state of a cell/base station, a non-NES state of a cell/base station, a high-load state of a cell/base station, a DRX state of a cell/base station, a DTX state of a cell/base station, or a state of normal transmission for a cell/base station.

45. The method according to any one of claims 42 to 44, wherein presence of the first cell/first base station is learned by the terminal device through an anchor cell/anchor base station, or is learned by the terminal device by using a discovery signal/sequence of the first cell/first base station.

46. The method according to any one of claims 42 to 45, wherein the request message is transmitted by the terminal device in the first cell or in an anchor cell.

47. The method according to any one of claims 42 to 46, wherein in a case that the request message is transmitted by the terminal device in the first cell, the transmitting, by a terminal device, a request message comprises:
transmitting, by the terminal device, the request message by using a timing advance TA of an anchor cell, or transmitting, by the terminal device, the request message based on a cyclic prefix CP boundary.

48. The method according to any one of claims 42 to 47, wherein the request message is transmitted by the terminal device by using a preconfigured resource.

49. The method according to any one of claims 42 to 48, wherein the information about the first cell comprises one or more of following information: a physical uplink shared channel PUSCH, a physical downlink shared channel PDSCH, a configured grant CG, a sounding reference signal SPS, a physical random access channel PRACH, a scheduling request SR, a semi-persistent scheduling SRS, a channel state information reference signal CSI-RS, a reference signal, a primary synchronization signal PSS/a secondary synchronization signal SSS, a physical downlink control channel PDCCH, a PDCCH corresponding to data transmission, downlink control information DCI, paging information, a synchronization information block SSB, at least part of a system information block SIB, or a master information block MIB.

50. A communication method, comprising:
performing, by a terminal device, transmission based on a discontinuous transmission DTX/discontinuous reception DRX state of a first cell/first base station.

51. The method according to claim 50, wherein in a case that the DTX/DRX state of the first cell/first base station conflicts with a DTX/DRX state of the terminal device, the performing, by a terminal device, transmission based on a DTX/DRX state of a first cell/first base station comprises:
performing, by the terminal device, transmission following the DTX/DRX state of the first cell/first base station; or
performing, by the terminal device, transmission following the DTX/DRX state of the terminal device; or
performing, by the terminal device, transmission according to a first rule; or
transmitting, by the terminal device, a specific signal or channel or data; or
transmitting, by the terminal device, no information other than a specific signal or channel or data.

52. The method according to claim 51, wherein the first rule is used for indicating one or more of following information:
whether the terminal device performs transmission following the DTX/DRX state of the first cell/first base station;
whether the terminal device performs transmission following the DTX/DRX state of the terminal device;
whether the terminal device performs transmission following the DTX/DRX state of the first cell/first base station or performing transmission following the DTX/DRX state of the terminal device;
whether DTX/DRX of the first cell/first base station or DTX/DRX of the terminal device has a higher priority;
priority information of DTX/DRX of the first cell/first base station and priority information of DTX/DRX of the terminal device; or
whether the terminal device is allowed not to follow the DTX/DRX state of the first cell/first base station.

53. The method according to any one of claims 50 to 52, wherein the performing, by a terminal device, transmission based on a DTX/DRX state of a first cell/first base station comprises:
transmitting, by the terminal device, a specific signal or channel or data based on the DTX/DRX state of the first cell/first base station, or transmitting first downlink information and/or first uplink information, or determining whether to transmit a specific signal or channel or data, or determining whether to receive first downlink information or transmit first uplink information.

54. The method according to any one of claims 51 to 53, wherein
the specific signal or channel or data comprises one or more of following: a physical downlink control channel PDCCH, a physical downlink shared channel PDSCH, semi-persistent scheduling SPS, a reference signal RS, a synchronization information block SSB, a system information block SIB, a paging message, a master information block MIB, a wake-up signal WUS, a physical uplink shared channel PUSCH, a scheduling request SR, a physical uplink control channel PUCCH, a configured grant CG, a sounding reference signal SRS, a measurement report, random access RACH, a medium access control control element MAC CE, uplink control information UCI, or an on-demand MIB/SSB/SIB;
a type of the first downlink information comprises one or more of following: a PDCCH, a PDSCH, an SPS, an RS, an SSB, a SIB, a paging message, a MIB, or a WUS; and
a type of the first uplink information comprises one or more of following: a PUSCH, an SR, a PUCCH, a CG, an SRS, a measurement report, a RACH, a MAC CE, UCI, an on-demand MIB/SSB/SIB, or a WUS.

55. The method according to claim 53 or 54, wherein a type of downlink information supported to be received by the terminal device or a type of uplink information supported to be transmitted by the terminal device is indicated by a network, is predefined, or is preconfigured.

56. The method according to any one of claims 50 to 55, wherein the DTX/DRX state of the first cell/first base station is configured or indicated by a network.

57. A communication method, comprising:
performing, by a terminal device, a first operation, wherein the first operation is related to at least one of following: measurement, measurement related processing, beam related processing, or radio link related processing.

58. The method according to claim 57, wherein the performing, by a terminal device, a first operation comprises:
in a case that a first condition is met, performing, by the terminal device, the first operation, wherein the first condition comprises one or more of following conditions:
a first cell/first base station supports or enters or is about to enter a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and
at least one of a synchronization information block SSB/master information block MIB/system information block SIB for the first cell is configured as an SSB/MIB/SIB with a long periodicity.

59. The method according to claim 57 or 58, wherein the first operation comprises one or more of following operations: a first measurement or a first adjustment, wherein the first measurement or the first adjustment is used for modifying a threshold for determining synchronization/out-of-synchronization of a radio link; first radio link monitoring RLM relaxation; first beam failure detection BFD relaxation; first radio link failure RLF processing; or first beam recovery procedure BFR processing.

60. The method according to claim 59, wherein
the first RLF processing comprises one or more of following processing: configuring duration of a counter N310/N311, configuring duration of a timer T310/T311, skipping triggering of an RLF in a case that a timer T310 expires, requesting the first cell to leave the first status, transmitting an on-demand SSB/MIB/SIB/reference signal RS, stopping or suspending a timer T310, or stopping or resetting a counter N310; and/or
the first BFR processing comprises one or more of following: configuring a beam failure instance maximum count/beam failure detection timer/beam failure recovery timer/threshold of reference signal received power for an SSB, threshold of reference signal received power for a BFR; stopping or suspending a beam failure detection timer/beam failure recovery timer, stopping or resetting a beam failure instance counter, skipping triggering of a BRF or indicating a beam failure to a higher layer; requesting a first cell to leave a first status; or transmitting an on-demand SSB/MIB/SIB/RS; and/or
the first RLM relaxation comprises one or more of following: relaxation of cell RLM measurement for all frequencies, or relaxation of cell RLM measurement for a high frequency/specific frequency; and/or
the first BFD relaxation comprises one or more of following: relaxation of cell BFD measurement for all frequencies, or relaxation of cell BFD measurement for a high frequency/specific frequency.

61. A communication method, comprising:
switching, by a terminal device, to a first bandwidth part BWP or from a second BWP to a first BWP,
wherein the first BWP is used for a cell/base station that supports or enters or is about to enter or is in a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or
the second BWP is a currently activated BWP, or a used BWP, or a BWP used before switching to the first BWP, or a BWP not corresponding to the first status.

62. The method according to claim 61, wherein the switching, by a terminal device, to a first BWP or from a second BWP to a first BWP comprises:
in a case that a first cell/first base station supports or enters or is about to enter or is in the first status, switching, by the terminal device, to the first BWP, or switching, by the terminal device, from the second BWP to the first BWP.

63. The method according to claim 61 or 62, wherein the switching, by a terminal device, to a first BWP or from a second BWP to a first BWP comprises:
switching, by the terminal device, to the first BWP or from the second BWP to the first BWP based on BWP information configured by a network.

64. The method according to claim 63, wherein the BWP information comprises one or more of following information: an indication or configuration for that the first cell/first base station is in the first status, an indication or configuration for indicating that the first cell/first base station switches to the first status, an indication for indicating that the terminal device switches to the first BWP, an identifier or indication of the first BWP, BWP mode information, status mode information of the first cell/first base station, a relationship between a BWP and a state of the first cell/first cell, or a relationship between a BWP and a state of the first base station/first base station.

65. The method according to claim 63 or 64, wherein the BWP information is configured by a network by using system information.

66. The method according to any one of claims 61 to 65, wherein the first BWP is preconfigured by a network, or is configured by using an RRC dedicated message, or is predefined.

67. The method according to claim 66, wherein a BWP configured by a network further comprises a third BWP, the third BWP is used for a cell that is not in the first status, or is used for a cell that is about to leave the first status, or is used for a cell that has left the first status, and the method further comprises:
in a case that the first cell is not in the first status, or is about to leave the first status, or has left the first status, switching, by the terminal device, from a current BWP to the third BWP or from the first BWP to the third BWP; or
in a case that a BWP timer in the first status expires or is not in operation, switching, by the terminal device, from a current BWP to the third BWP or from the first BWP to the third BWP.

68. The method according to any one of claims 61 to 67, wherein the switching, by a terminal device, to a first BWP or from a second BWP to a first BWP comprises:
switching, by the terminal device, to the first BWP or from the second BWP to the first BWP based on indication information of a network; or
switching, by the terminal device, to the first BWP or from the second BWP to the first BWP based on a timer or a state of a timer.

69. The method according to any one of claims 61 to 68, wherein the switching, by a terminal device, to a first BWP or from a second BWP to a first BWP comprises:
immediately switching, by the terminal device, to the first BWP or from the second BWP to the first BWP; or
switching, by the terminal device, to the first BWP at a switch time indicated by a network, or switching, by the terminal device, from the second BWP to the first BWP at a BWP at a switch time indicated by a network; or
determining, by the terminal device based on indication information of a network, a time for switching to the first BWP, or determining, by the terminal device based on indication information of a network, a time for switching from the second BWP to the first BWP; or
determining, by the terminal device based on a timer, a time for switching to the first BWP, or determining, by the terminal device based on a timer, a time for switching from the second BWP to the first BWP.

70. A communication method, comprising:
receiving, by a terminal device, a first handover configuration transmitted by a first cell/first base station, wherein the first handover configuration comprises handover configuration information for a plurality of cells; and
performing, by the terminal device, handover processing, or handing over, by the terminal device, from the first cell to a target cell.

71. The method according to claim 70, wherein the first handover configuration is received by the terminal device in a first case, and the first case comprises one or more of following: the first cell/first base station is a cell or a base station that supports energy saving, the first cell/first base station is a cell or a base station that has an energy saving capability, the first cell/first base station supports a first status, the first cell/first base station is about to enter a first status, the first cell/first base station enters a first status, the first cell/first base station is in a first status, a synchronization information block SSB for the first cell is not transmitted, a master information block MIB for the first cell is not transmitted or broadcast, part or all of system information blocks SIBs for the first cell are not transmitted or broadcast, at least one of an SSB/a MIB/part or all of system information blocks SIBs for the first cell is carried or broadcast by an anchor cell, the first cell is a non-anchor cell, or the first base station is a non-anchor base station; and
the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

72. The method according to claim 70 or 71, wherein the first handover configuration comprises a handover execution condition for at least one cell in the plurality of cells, or a handover execution condition for the plurality of cells.

73. The method according to any one of claims 70 to 72, wherein the handover is performed in a case that first signaling is received, or the handover is triggered based on received first signaling.

74. The method according to claim 73, wherein the first signaling is used for instructing the terminal device to perform the handover or handover processing, or the first signaling is used for instructing the terminal device to hand over from the first cell to the target cell.

75. The method according to claim 73 or 74, wherein the method further comprises:
enabling, by the terminal device, a timer T304 when receiving the first signaling; or
enabling, by the terminal device, a timer T304 when receiving the first handover configuration; and
the performing, by the terminal device, handover processing, or handing over, by the terminal device from the first cell to a target cell comprises:
before the timer T304 expires, handing over, by the terminal device, from the first cell to the target cell.

76. The method according to claim 75, wherein the method further comprises:
when the timer T304 expires, in a case that the terminal device does not access the target cell, indicating, by the terminal device, handover failure information in the first cell; or
when the timer T304 expires, in a case that the first cell does not receive indication information of the target cell, receiving, by the terminal device, the first signaling again; or
when the timer T304 expires, in a case that the first cell does not receive handover complete indication information transmitted by the terminal device, receiving, by the terminal device, the first signaling or a handover command for the terminal device again.

77. The method according to any one of claims 70 to 72, wherein the handover is triggered based on a handover execution condition for at least one cell in the plurality of cells.

78. The method according to any one of claims 70 to 77, wherein the first handover configuration further comprises measurement configuration information and/or measurement reporting configuration information, the measurement configuration information is used by the terminal device to perform measurement on at least one cell in the plurality of cells, and/or the measurement reporting configuration information is used by the terminal device to report a measurement result of at least one cell in the plurality of cells.

79. A communication method, comprising:
transmitting/broadcasting, by a second cell/second base station, first information of a first cell/first base station to a terminal device; and part or all of the first information is carried in the first cell/first base station, or part or all of the first information is carried in the second cell/second base station.

80. The method according to claim 79, wherein the first cell belongs to a cell that supports network energy saving or a cell that supports an energy saving base station, or the first base station belongs to an energy saving base station or a base station having an energy saving capability, or the first cell/first base station supports a first status, or the first cell/first base station is about to enter a first status, or the first cell/first base station is in a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

81. The method according to claim 79 or 80, wherein the first information is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station.

82. The method according to any one of claims 79 to 81, wherein the first information comprises one or more of following information: a synchronization signal block SSB for the first cell; at least part of system information of the first cell; information used for searching for the first cell/first base station; information used for measuring the first cell/first base station; or information related to paging of the first cell/first base station.

83. The method according to any one of claims 79 to 82, wherein the first information comprises one or more of following information: an SSB, a master information block MIB, a system information block SIB1, or at least part of other SIBs.

84. The method according to any one of claims 79 to 83, wherein a manner in which the terminal device acquires the first information is determined by the terminal device based on second information, wherein the second information comprises one or more of following information:
association information of the first cell/first base station and the second cell/second base station;
type information of the first cell/first base station;
type information of the second cell/second base station;
indication information of acquisition of the first information;
a type of the first information;
content of the first information; or
a current state of the first cell/first base station.

85. The method according to claim 84, wherein the indication information of acquisition of the first information comprises: indication information used for indicating that the terminal device does not acquire the first information from a non-anchor cell/non-anchor base station; and/or indication information used for indicating that the terminal device acquires the first information from an anchor cell/anchor base station.

86. The method according to claim 84 or 85, wherein part or all of information in the second information is indicated by the first cell/first base station; or part or all of information in the second information is indicated by the second cell/second base station; or part or all of information in the second information is indicated by the first cell and the second cell; or part or all of information in the second information is indicated by the first base station and the second base station.

87. The method according to claim 84 or 85, wherein part or all of information in the second information is indicated by a third cell/third base station, and/or the third cell/third base station is used for indicating that part or all of the first information is carried in the second cell/second base station.

88. The method according to any one of claims 84 to 87, wherein part or all of information in the second information is carried by one or more of following: a cell system information, an SSB, a dedicated radio resource control RRC message, a synchronization signal, a reference sequence, or a reference signal.

89. The method according to any one of claims 84 to 88, wherein the transmitting/broadcasting, by a second cell/second base station, first information of a first cell/first base station to a terminal device comprises:
in a case that a current state of the first cell/first base station is the first status or the indication information of acquisition of the first information is not updated, transmitting/broadcasting, by the second cell/second base station, the first information of the first cell/first base station to the terminal device.

90. The method according to any one of claims 79 to 89, wherein the first information is carried/indicated/broadcast by the second cell/second base station by using a SIB, or is indicated by the second cell/second base station by using a dedicated RRC message.

91. The method according to any one of claims 79 to 90, wherein the first information is carried/indicated/broadcast by the second cell/second base station or indicated by the second cell/second base station by using a dedicated RRC message when one or more of following conditions are met:
the first cell belongs to a cell that supports network energy saving or a cell that supports an energy saving base station;
the first base station belongs to an energy saving base station or a base station having an energy saving capability;
the first cell/first base station supports the first status;
the first cell/first base station enters or is about to enter the first status;
the first cell/first base station is in the first status;
the second cell/second base station learns that the first cell/first base station is in the first status;
the second cell/second base station learns that the first cell/first base station supports the first status;
the second cell/second base station learns that the first cell/first base station enters or is about to enter the first status;
the first cell is a non-anchor cell of the second cell;
the first base station is a non-anchor base station of the second base station;
the first cell requests the second cell to carry/indicate/broadcast the first information;
the first base station requests the second base station to carry/indicate/broadcast the first information;
the second cell is an anchor cell;
the second base station is an anchor base station;
the second cell/second base station has a capability of transmitting the first information; or
the second cell/second base station receives a request message transmitted by the terminal device, wherein the request message is used for requesting the second cell/second base station to transmit/broadcast the first information.

92. The method according to any one of claims 79 to 91, wherein an SSB for the first cell/first base station is carried in the second cell/second base station, and the second cell is configured to broadcast one or more of following information: a configuration of an SSB for the first cell/first base station, a position of an SSB for the first cell/first base station, a synchronization time difference between the first cell and the second cell, or a synchronization time difference between the first base station and the second base station.

93. A communication method, comprising: in a case that a terminal device performs a random access procedure for a first cell, or in a case that a terminal device randomly accesses a first cell, performing, by a base station, one of following operations:
transmitting, by the base station, information to the terminal device in a second cell, and receiving, by the base station in the first cell, information transmitted by the terminal device; or
in a second cell, transmitting, by the base station, information to the terminal device and receiving, by the base station, information transmitted by the terminal device; or
in the first cell, transmitting, by the base station, information to the terminal device and receiving, by the base station, information transmitted by the terminal device; or
transmitting, by the base station, information to the terminal device in the first cell, and receiving, by the base station in a second cell, information transmitted by the terminal device.

94. The method according to claim 93, wherein in a case that a terminal device performs a random access procedure for a first cell, or in a case that a terminal device randomly accesses a first cell, the performing, by a base station, operations comprises:
receiving, by the base station, a random access message in the first cell, and transmitting, by the base station in the second cell, a random access message for the first cell; or
transmitting and receiving, by the base station in the second cell, a random access message for the first cell; or
transmitting and receiving, by the base station in the first cell, a random access message for the first cell; or
transmitting, by the base station, a random access message in the first cell, and receiving, by the base station in the second cell, a random access message for the first cell.

95. The method according to claim 93 or 94, wherein the first cell belongs to a cell that supports network energy saving or a cell that supports an energy saving base station, or the first cell supports a first status, or the first cell is about to enter a first status, or the first cell is in a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

96. The method according to any one of claims 93 to 95, wherein part or all of first information of the first cell is carried in the second cell.

97. The method according to any one of claims 93 to 96, wherein part or all of first information of the first cell comprises a random access parameter and/or a random access resource configuration.

98. A communication method, comprising:
performing, by a first cell/first base station, synchronization with a terminal device based on one or more of following information:
information about a synchronization signal block SSB for the first cell carried by a second cell/second base station;
information about an SSB for a second cell/second base station;
information about an SSB for the first cell acquired by the terminal device based on information about an SSB and/or a system information block SIB for a second cell;
information about an SSB for the second cell acquired by the terminal device;
a synchronization signal or a synchronization sequence for the first cell/first base station; or
a simplified SSB for the first cell/first base station.

99. The method according to claim 98, wherein synchronization between the terminal device and the first cell/first base station is performed in a first case, and the first case comprises one or more of following cases: the first cell is an energy saving cell or a cell for an energy saving base station, the first base station is an energy saving base station, the first cell/first base station supports a first status, the first cell/first base station enters or is about to enter a first status, the first cell/first base station is in a first status, first information of the first cell/first base station is carried by a second cell/second base station, the first cell is a non-anchor cell, or the first base station is a non-anchor base station; and
the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

100. A communication method, comprising:
transmitting, by a first cell/first base station, a first paging message, wherein the first paging message is a paging message for the first cell/first base station.

101. The method according to claim 100, wherein the first cell/first base station is in one or more of following cases:
whether the first cell belongs to a cell that supports network energy saving or a cell that supports an energy saving base station;
whether the first base station belongs to an energy saving base station or a base station having an energy saving capability;
whether the first cell/first base station supports a first status, or is about to enter a first status, or is in a first status, wherein the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and
part or all of first information of the first cell is carried in a second cell, wherein the first information is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station;
the first cell is a non-anchor cell; or
the first base station is a non-anchor base station.

102. The method according to claim 100 or 101, wherein configuration information of the first paging message is transmitted by a second cell/second base station.

103. The method according to any one of claims 100 to 102, wherein the first paging message is received on the first cell by the terminal device by referring to one or more of following information: synchronization information of the second cell/second base station, beam information of the second cell/second base station, or a discovery reference signal or reference sequence synchronization information of the first cell/first base station.

104. A communication method, comprising:
transmitting, by a second cell/second base station, a first paging message, wherein the first paging message is a paging message for a first cell/first base station.

105. The method according to claim 104, wherein the first cell/first base station is in one or more of following cases:
whether the first cell belongs to a cell that supports network energy saving or a cell that supports an energy saving base station;
whether the first base station belongs to an energy saving base station or a base station having an energy saving capability;
whether the first cell/first base station supports a first status, or is about to enter a first status, or is in a first status, wherein the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and
part or all of first information of the first cell is carried in a second cell, wherein the first information is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station;
the first cell is a non-anchor cell; or
the first base station is a non-anchor base station.

106. The method according to claim 104 or 105, wherein configuration information of the first paging message is transmitted by the second cell/second base station.

107. The method according to any one of claims 104 to 106, wherein the first paging message comprises first indication information, and the first indication information is used for indicating that the first paging message is for the first cell/first base station, or instructing the terminal device to access the first cell/first base station.

108. A communication method, comprising:
receiving, by a first cell/first base station, a request message transmitted by a terminal device, wherein the request message is used for requesting the first cell/first base station to perform one or more of following operations:
changing a state of the first cell/first base station;
transmitting information about the first cell/first base station, wherein the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or
performing transmission or resuming transmission.

109. The method according to claim 108, wherein the request message is transmitted in a case that the first cell supports or enters or is about to enter or is in a first status,
wherein the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

110. The method according to claim 108 or 109, wherein the changing of a state of the first cell/first base station comprises one or more of following:
leaving, by the first cell/first base station, the first status;
entering, by the first cell/first base station, a second status;
broadcasting or carrying information about the first cell from the first cell;
broadcasting or carrying information about the first base station from the first base station;
acquiring information about the first cell from the first cell;
acquiring information about the first base station from the first base station;
broadcasting or carrying no information about the first cell from an anchor cell; or
broadcasting or carrying no information about the first base station from an anchor base station,
wherein the second status comprises one or more of following states: an on state of a cell/base station, a non-energy saving state of a cell/base station, a non-NES state of a cell/base station, a high-load state of a cell/base station, a DRX state of a cell/base station, a DTX state of a cell/base station, or a state of normal transmission for a cell/base station.

111. The method according to any one of claims 108 to 110, wherein presence of the first cell/first base station is learned by the terminal device through an anchor cell/anchor base station, or is learned by the terminal device by using a discovery signal/sequence of the first cell/first base station.

112. The method according to any one of claims 108 to 111, wherein the request message is transmitted by the terminal device in the first cell or in an anchor cell.

113. The method according to any one of claims 108 to 112, wherein in a case that the request message is transmitted by the terminal device in the first cell, the request message is transmitted by the terminal device by using a timing advance TA of an anchor cell, or is transmitted by the terminal device based on a cyclic prefix CP boundary.

114. The method according to any one of claims 108 to 113, wherein the request message is transmitted by the terminal device by using a preconfigured resource.

115. The method according to any one of claims 108 to 114, wherein the information about the first cell comprises one or more of following information: a physical uplink shared channel PUSCH, a physical downlink shared channel PDSCH, a configured grant CG, a sounding reference signal SPS, a physical random access channel PRACH, a scheduling request SR, a semi-persistent scheduling SRS, a channel state information reference signal CSI-RS, a reference signal, a primary synchronization signal PSS/a secondary synchronization signal SSS, a physical downlink control channel PDCCH, a PDCCH corresponding to data transmission, downlink control information DCI, paging information, a synchronization information block SSB, at least part of a system information block SIB, or a master information block MIB.

116. A communication method, comprising:
indicating, by a network, a discontinuous transmission DTX/discontinuous reception DRX state of a first cell/first base station to a terminal device, and the DTX/DRX state of the first cell/first base station is used by the terminal device to perform transmission based on the DTX/DRX state of the first cell/first base station.

117. The method according to claim 116, wherein the method further comprises:
indicating, by the network, a first rule to the terminal device, wherein the first rule is used by the terminal device to perform transmission according to the first rule.

118. The method according to claim 117, wherein the first rule is used for indicating one or more of following information:
whether the terminal device performs transmission following the DTX/DRX state of the first cell/first base station;
whether the terminal device performs transmission following the DTX/DRX state of the terminal device;
whether the terminal device performs transmission following the DTX/DRX state of the first cell/first base station or performing transmission following the DTX/DRX state of the terminal device;
whether DTX/DRX of the first cell/first base station or DTX/DRX of the terminal device has a higher priority;
priority information of DTX/DRX of the first cell/first base station and priority information of DTX/DRX of the terminal device; or
whether the terminal device is allowed not to follow the DTX/DRX state of the first cell/first base station.

119. A communication method, comprising:
configuring, by a network, bandwidth part BWP information, wherein the BWP information is used by a terminal device to switch to a first BWP, or is used by a terminal device to switch from a second BWP to a first BWP,
wherein the first BWP is used for a cell/base station that supports or enters or is about to enter or is in a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or
the second BWP is a currently activated BWP, or a used BWP, or a BWP used before switching to the first BWP, or a BWP not corresponding to the first status.

120. The method according to claim 119, wherein the switch is performed by the terminal device in a case that the first cell/first base station supports or enters or is about to enter or is in the first status.

121. The method according to claim 119 or 120, wherein the BWP information comprises one or more of following information: an indication or configuration for that the first cell/first base station is in the first status, an indication or configuration for indicating that the first cell/first base station switches to the first status, an indication for indicating that the terminal device switches to the first BWP, an identifier or indication of the first BWP, BWP mode information, status mode information of the first cell/first base station, a relationship between a BWP and a state of the first cell/first cell, or a relationship between a BWP and a state of the first base station/first base station.

122. The method according to any one of claims 119 to 121, wherein the BWP information is configured by a network by using system information.

123. The method according to any one of claims 119 to 122, wherein the first BWP is preconfigured through a network, or is configured by using an RRC dedicated message, or is predefined.

124. The method according to claim 123, wherein a BWP configured by the network further comprises a third BWP, the third BWP is used for a cell that is not in the first status, or is used for a cell that is about to leave the first status, or is used for a cell that has left the first status.

125. A communication method, comprising:
transmitting, by a first cell/first base station, a first handover configuration to a terminal device, wherein the first handover configuration comprises handover configuration information for a plurality of cells, and the first handover configuration is used by the terminal device to perform handover processing or hand over from the first cell to a target cell.

126. The method according to claim 125, wherein the first handover configuration is transmitted by the first cell/first base station in a first case, and the first case comprises one or more of following: the first cell/first base station is a cell or a base station that supports energy saving, the first cell/first base station is a cell or a base station that has an energy saving capability, the first cell/first base station supports a first status, the first cell/first base station is about to enter a first status, the first cell/first base station enters a first status, the first cell/first base station is in a first status, a synchronization information block SSB for the first cell is not transmitted, a master information block MIB for the first cell is not transmitted or broadcast, part or all of system information blocks SIBs for the first cell are not transmitted or broadcast, at least one of an SSB/a MIB/part or all of system information blocks SIBs for the first cell is carried or broadcast by an anchor cell, the first cell is a non-anchor cell, or the first base station is a non-anchor base station; and
the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station.

127. The method according to claim 125 or 126, wherein the first handover configuration comprises a handover execution condition for at least one cell in the plurality of cells, or a handover execution condition for the plurality of cells.

128. The method according to any one of claims 125 to 127, wherein the handover is performed in a case that first signaling is received, or the handover is triggered based on received first signaling.

129. The method according to claim 128, wherein the first signaling is used for instructing the terminal device to perform the handover or handover processing, or the first signaling is used for instructing the terminal device to hand over from the first cell to the target cell.

130. The method according to any one of claims 125 to 127, wherein the handover is triggered based on a handover execution condition for at least one cell in the plurality of cells.

131. The method according to any one of claims 125 to 130, wherein the first handover configuration further comprises measurement configuration information and/or measurement reporting configuration information, the measurement configuration information is used by the terminal device to perform measurement on at least one cell in the plurality of cells, and/or the measurement reporting configuration information is used by the terminal device to report a measurement result of at least one cell in the plurality of cells.

132. A terminal device, comprising:
an acquisition module, configured to acquire first information of a first cell/first base station, wherein part or all of the first information is carried in the first cell/first base station, or part or all of the first information is carried in a second cell/second base station.

133. A terminal device, comprising:
an execution module, configured to: in a case that the terminal device performs a random access procedure for a first cell, or in a case that the terminal device randomly accesses a first cell, perform one of following operations:
receiving, in a second cell, information transmitted by a base station, and transmitting information to the base station in the first cell; or
receiving, in a second cell, information transmitted by a base station and transmitting information to the base station; or
receiving, in the first cell, information transmitted by a base station and transmitting information to the base station; or
receiving, in the first cell, information transmitted by the base station, and transmitting information to the base station in a second cell.

134. A terminal device, comprising:
a synchronization module, configured to synchronize with a first cell/first base station based on one or more of following information:
information about a synchronization signal block SSB for the first cell carried by a second cell/second base station;
information about an SSB for a second cell/second base station;
information about an SSB for the first cell acquired by the terminal device based on information about an SSB and/or a system information block SIB for a second cell;
information about an SSB for the second cell acquired by the terminal device;
a synchronization signal or a synchronization sequence for the first cell/first base station; or
a simplified SSB for the first cell/first base station.

135. A terminal device, comprising:
a determining module, configured to determine whether to perform cell selection or cell reselection based on information about a first cell, or determine, in a cell selection or cell reselection process, whether to consider information about a first cell.

136. A terminal device, comprising:
a receiving module, configured to receive a first paging message, wherein the first paging message is a paging message for a first cell/first base station.

137. A terminal device, comprising:
a transmitting module, configured to transmit a request message, wherein the request message is used for requesting a first cell/first base station to perform one or more of following operations:
changing a state of the first cell/first base station;
transmitting information about the first cell/first base station, wherein the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or
performing transmission or resuming transmission.

138. A terminal device, comprising:
an execution module, configured to perform transmission based on a discontinuous transmission DTX/discontinuous reception DRX state of a first cell/first base station.

139. A terminal device, comprising:
an execution module, configured to execute a first operation, wherein the first operation is related to at least one of following: measurement, measurement related processing, beam related processing, or radio link related processing.

140. A terminal device, comprising:
a switching module, configured to switch to a first bandwidth part BWP, or switch from a second BWP to a first BWP,
wherein the first BWP is used for a cell/base station that supports or enters or is about to enter or is in a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or
the second BWP is a currently activated BWP, or a used BWP, or a BWP used before switching to the first BWP, or a BWP not corresponding to the first status.

141. A terminal device, comprising:
a receiving module, configured to receive a first handover configuration transmitted by a first cell/first base station, wherein the first handover configuration comprises handover configuration information for a plurality of cells; and
an execution module, configured to execute handover processing, or perform a handover from the first cell to a target cell.

142. A network device, comprising:
a transmitting/broadcasting module, configured to transmit/broadcast first information of a first cell/first base station to a terminal device, wherein part or all of the first information is carried in the first cell/first base station, or part or all of the first information is carried in a second cell/second base station.

143. A network device, comprising:
an execution module, configured to: in a case that a terminal device performs a random access procedure for a first cell, or in a case that a terminal device randomly accesses a first cell, perform one of following operations:
transmitting information to the terminal device in a second cell, and receiving, in the first cell, information transmitted by the terminal device; or
in a second cell, transmitting information to the terminal device and receiving information transmitted by the terminal device; or
in the first cell, transmitting information to the terminal device and receiving information transmitted by the terminal device; or
transmitting information to the terminal device in the first cell, and receiving, in a second cell, information transmitted by the terminal device.

144. A network device, wherein the network device is a first cell/first base station, and the network device comprises:
a synchronization module, configured to synchronize with a terminal device based on one or more of following information:
information about a synchronization signal block SSB for the first cell carried by a second cell/second base station;
information about an SSB for a second cell/second base station;
information about an SSB for the first cell acquired by the terminal device based on information about an SSB and/or a system information block SIB for a second cell;
information about an SSB for the second cell acquired by the terminal device;
a synchronization signal or a synchronization sequence for the first cell/first base station; or
a simplified SSB for the first cell/first base station.

145. A network device, wherein the network device is a first cell/first base station, and the network device comprises:
a transmitting module, configured to transmit a first paging message, wherein the first paging message is a paging message for a first cell/first base station.

146. A network device, wherein the network device is a second cell/second base station, and the network device comprises:
a transmitting module, configured to transmit a first paging message, wherein the first paging message is a paging message for a first cell/first base station.

147. A network device, comprising:
a receiving module, configured to receive a request message transmitted by a terminal device, wherein the request message is used for requesting the first cell/first base station to perform one or more of following operations:
changing a state of the first cell/first base station;
transmitting information about the first cell/first base station, wherein the information about the first cell/first base station is used by the terminal device to access the first cell/first base station, or is used by the terminal device to camp on the first cell/first base station, or is used by the terminal device to discover/detect/measure the first cell/first base station, or is used by the terminal device to receive paging information of the first cell/first base station; or
performing transmission or resuming transmission.

148. A network device, comprising:
an indication module, configured to indicate a discontinuous transmission DTX/discontinuous reception DRX state of a first cell/first base station to a terminal device, and the DTX/DRX state of the first cell/first base station is used by the terminal device to perform transmission based on the DTX/DRX state of the first cell/first base station.

149. A network device, comprising:
a configuration module, adapted to configure bandwidth part BWP information, wherein the BWP information is used by a terminal device to switch to a first BWP, or is used by a terminal device to switch from a second BWP to a first BWP,
wherein the first BWP is used for a cell/base station that supports or enters or is about to enter or is in a first status, and the first status comprises one or more of following states: a state of abnormal transmission for a cell/base station, a state of non-transmission of partial information for a cell/base station, an off state of a cell/base station, an energy saving state of a cell/base station, a network energy saving NES state of a cell/base station, a low-load state of a cell/base station, a discontinuous reception DRX state of a cell/base station, a discontinuous transmission DTX state of a cell/base station, or an on-off switching state of a cell/base station; and/or
the second BWP is a currently activated BWP, or a used BWP, or a BWP used before switching to the first BWP, or a BWP not corresponding to the first status.

150. A network device, comprising:
a transmitting module, configured to transmit a first handover configuration to a terminal device, wherein the first handover configuration comprises handover configuration information for a plurality of cells, and the first handover configuration is used by the terminal device to perform handover processing or hand over from the first cell to a target cell.

151. A terminal device, comprising a memory and a processor, wherein the memory is configured to store a program, and the processor is configured to invoke the program in the memory, to cause the terminal device to execute the method according to any one of claims 1 to 78.

152. A network device, comprising a memory and a processor, wherein the memory is configured to store a program, and the processor is configured to invoke the program in the memory, to cause the network device to execute the method according to any one of claims 79 to 131.

153. An apparatus, comprising a processor configured to invoke a program from a memory, to cause the apparatus to execute the method according to any one of claims 1 to 131.

154. A chip, comprising a processor configured to invoke a program from a memory, to cause a device installed with the chip to execute the method according to any one of claims 1 to 131.

155. A computer-readable storage medium, wherein the computer-readable storage medium stores a program, and the program causes a computer to execute the method according to any one of claims 1 to 131.

156. A computer program product, comprising a program, wherein the program causes a computer to execute the method according to any one of claims 1 to 131.

157. A computer program, wherein the computer program causes a computer to execute the method according to any one of claims 1 to 131.
